Europäisches Patentamt

European Patent Office

Office européen des brevets

(11) Publication number: **0 274 087**
**A2**

# EUROPEAN PATENT APPLICATION

(21) Application number: 87118487.5

(22) Date of filing: 14.12.87

(51) Int. Cl.4: **G06F 3/033** , G06F 3/037 , G06F 3/023

(30) Priority: 05.01.87 US 619
05.01.87 US 620
05.01.87 US 625
05.01.87 US 626

(43) Date of publication of application:
13.07.88 Bulletin 88/28

(84) Designated Contracting States:
DE FR GB

(71) Applicant: COMPUTER X, INC.
1201 Wiley Road Suite 101
Schaumburg Illinois 60195(US)

(72) Inventor: Kolnick, Frank Charles
33 Nymark Avenue
Willowdale Ontario M2J 2G8(CA)

(74) Representative: Ibbotson, Harold et al
Motorola Ltd Patent and Licensing
Operations - Europe Jays Close Viables
Industrial Estate
Basingstoke Hampshire RG22 4PD(GB)

(54) Computer human interface.

(57) In a computer human interface an adjustable "window" (177, FIG 4) enables the user to view a portion of an abstract, device-independent "picture" description of information. More than one window can be opened at a time. Each window can be sized independently of another, regardless of the applications running on them. The human interface creates a separate "object" (represented by a process) for each active picture and for each active window. The pictures are completely independent of each other. Multiple pictures (170, 174) can be updated simultaneously, and windows can be moved around on the screen and their sizes changed without the involvement of other windows and/or pictures. Images, including windows, representing portions of any or all of the applications can be displayed and updated on the output device simultaneously and independently of one another. All human interface with the operating system is performed through virtual input/output devices (186, 187, FIG. 5), and the system can accept any form of real input or output devices.

FIG. 5

## COMPUTER HUMAN INTERFACE

### RELATED INVENTIONS

The present invention is related to the following inventions, all filed on May 6, 1985, and all assigned to the assignee of the present invention:

1. Title: Nested Contexts in a Virtual Single Machine
Inventors: Andrew Kun, Frank Kolnick, Bruce Mansfield
Serial No.: 730,903.

2. Title: Computer System With Data Residence Transparency and Data Access Transparency
Inventors: Andrew Kun, Kolnick, Bruce Mansfield
Serial No.: 730,929

3. Title: Network Interface Module With Minimized Data Paths
Inventors: Bernhard Weisshaar, Michael Barnea
Serial No.: 730,621

4. Title: Method of Inter-Process Communication in a Distributed Data Processing System
Inventors: Bernhard Weisshaar, Andrew Kun, Frank Kolnick, Bruce Mansfield
Serial No.: 730,892

5. Title: Logical Ring in a Virtual Single Machine
Inventor: Andrew Kun, Frank Kolnick, Bruce Mansfield
Serial No.: 730,923

6. Title: Virtual Single Machine With Message-Like Hardware Interrupts and Processor Exceptions
Inventors: Andrew Kun, Frank Kolnick, Bruce Mansfield
Serial No.: 730,922

The present invention is also related to the following inventions, all filed on even date herewith, and all assigned to the assignee of the present invention:

7. Title: Self-Configuration of Nodes in a Distributed Message-Based Operating System
Inventor: Gabor Simor
Serial No.: 000,621

8. Title: Process Traps in a Distributed Message-Based Operating System
Inventors: Gabor Simor
Serial No.: 000,624

### TECHNICAL FIELD

This invention relates generally to digital data processing, and, in particular, to a human interface system in which information is represented in at least one abstract, device-independent picture with a user-adjustable window onto such picture; to a human interface system in which images corresponding to multiple applications can be displayed and updated on a suitable output device simultaneously and independently of one another; to a human interface system providing means for converting "real" input into virtual input, and means for converting virtual output into "real" output; and to human interface system in which multiple applications are active in one or more independent pictures, can be updated simultaneously and independently of one another, and can be displayed in multiple independent "live" windows on a single screen.

### BACKGROUND OF THE INVENTION

It is known in the data processing arts to provide an output display device in which one or more "windows" present information to the viewer. By means of such windows the user may view portions of several applications (e.g. word-processing, spreadsheet, etc.) simultaneously. However, in the known "windowing" art each window is necessarily of identical size. The ability to size each window independently to any desired dimension is at present unknown.

There is therefore a significant need to be able to provide within the human interface of a data processing operating system the capability of adjusting the sizes of multiple windows independently of one another.

It is known in the data processing arts to provide an output display in which images from multiple applications can be displayed. For example, it is known to print a portion of a spread-sheet to disk and then read such portion into a desired place in a word-processing application file. In this manner, information from one application may be incorporated into another.

However in the known technique for integrating information from two or applications, once the output of an application was printed to disk it was "dead" information and was no longer an active part of the application. Using the example given above, the spread-sheet portion would have been fixed in time and would no longer vary with a change in one of its cells. To reflect such a change, the spread-sheet would have had to be printed again to disk and then re-read into the word-processing file.

There is therefore a significant need to be able to provide within the human interface of a data processing operating system the ability to permit information from multiple application sources to be displayed simultaneously in a live condition.

It is further known in the data processing arts to couple a wide assortment of input and output devices to a data processing system for the purpose of providing an appropriate human interface. Such devices may take the form of keyboards of varying manufacture, "mice", touch-pads, joy-sticks, light pens, video screens, audio-visual signals, printers, etc.

Due to the wide variety of I/O devices which can be utilized in the human/computer interface, it would be very desirable to isolate the human interface software from specific device types. The I/O should be independent of any particular "real" devices.

There is thus a need for a computer human interface which performs I/O operations in an abstract sense, independent of particular "real" devices.

It is also known in the data processing arts to provide an output display in which one or more "windows" present information to the viewer. By means of such windows the user may view portions of several applications (e.g. word-processing, spread-sheet, etc.) simultaneously. However in the known "windowing" art, only one window at a time may be "live" (i.e. responding to and displaying an active application). There is thus a significant need to be able to provide within the human interface of a data processing operating system the capability of displaying multiple "live" windows simultaneously.

## BRIEF SUMMARY OF INVENTION

Accordingly, it is an object of the present invention to provide a data processing system having an improved human interface.

It is further an object of the present invention to provide an improved data processing system human interface which allows a user to independently adjust the sizes of a plurality of windows appearing on an output device such as a video display unit or printer.

It is also an object of the present invention to provide an improved human interface system which allows information from multiple applications to be integrated in a "live" condition on a single display.

It is yet another object of the present invention to provide an improved human interface system which performs input/output operations in an abstract sense, independent of any particular I/O devices. It is another object of the present invention to provide an improved human interface system in which any type of "real" input and output devices may be employed, and which I/O devices may be connected to and disconnected from the data processing system without disrupting processing operations.

It is additionally an object of the present invention to provide an improved human interface system which allows the simultaneous display of separate "live" windows.

It is another object of the present invention to provide a human interface system in which multiple applications represented by separate pictures may be active simultaneously.

These and other objects are achieved in accordance with a preferred embodiment of the invention by providing a human interface in a data processing system, the interface comprising means for representing information in at least one abstract, device-independent picture, means for generating a first message, such first message comprising size information, and a console manager process responsive to the first message for creating a window onto the one picture, the size of the window being determined by the size information contained in the first message.

3

## BRIEF DESCRIPTION OF THE DRAWINGS

The invention is pointed out with particularly in the appended claims. However, other features of the invention will become more apparent and the invention will be best understood by referring to the following detailed description in conjunction with the accompanying drawings in which:

FIG. 1 shows a representational illustration of a single network, distributed message-based data processing system of the type incorporating the present invention.

FIG. 2 shows a block diagram illustrating a multiple-network, distributed message-based data processing system of the type incorporating the present invention.

FIG. 3 shows a standard message format used in the distributed data processing system of the present information.

FIG. 4 shows the relationship between pictures, views, and windows in the human interface of a data processing system of the type incorporating the present invention.

FIG. 5 shows a conceptual view of the different levels of human interface within a data processing system incorporating the present invention.

FIG. 6 illustrates the relationship between the basic human interface components in a typical working environment.

FIG. 7 shows the general structure of a complete picture element.

FIG. 8 shows the components of a typical screen as contained within the human interface system of the present invention.

FIG. 9 shows the relationship between pictures, windows, the console manager, and a virtual output manager through which multiple applications can share a single video display device, in accordance with a preferred embodiment of the present invention.

FIG. 10 shows a flowchart illustrating how an application program interacts with the console manager process to create/destroy windows and pictures, in accordance with a preferred embodiment of the present invention.

FIG. 11 illustrates an operation to update a picture and see the results in a window of selected size, in accordance with a preferred embodiment of the present invention.

FIG. 12 illustrates how a single picture can share multiple application software programs.

FIG. 13 illustrates how the picture manager multiplexers several applications to a single picture.

FIG. 14 shows the live integration of two applications on a single screen within the human interface system of the present invention.

FIG. 15 shows how the console manager operates upon virtual input to generate virtual output.

FIG. 16 shows how virtual input is handled by the console manager.

FIG. 17 shows how virtual input is handled by the picture manager.

FIG. 18 illustrates how the console manager enables multiple application, software programs to be represented by multiple pictures, and how multiple windows may provide different views of one picture.

FIG. 19 illustrates how several windows may be displayed simultaneously on typical screen.

## OVERVIEW OF COMPUTER SYSTEM

The present invention can be implemented either in a single CPU data processing system or in a distributed data processing system - that is, two or more data processing system (each having at least one processor) which are capable of functioning independently but which are so coupled as to send and receive messages to and from one another.

A Local Area Network (LAN) is an example of a distributed data processing system. A typical LAN comprises a number of autonomous data processing "nodes", each comprising at least processor and memory. Each node is capable of conducting data processing operations independently.

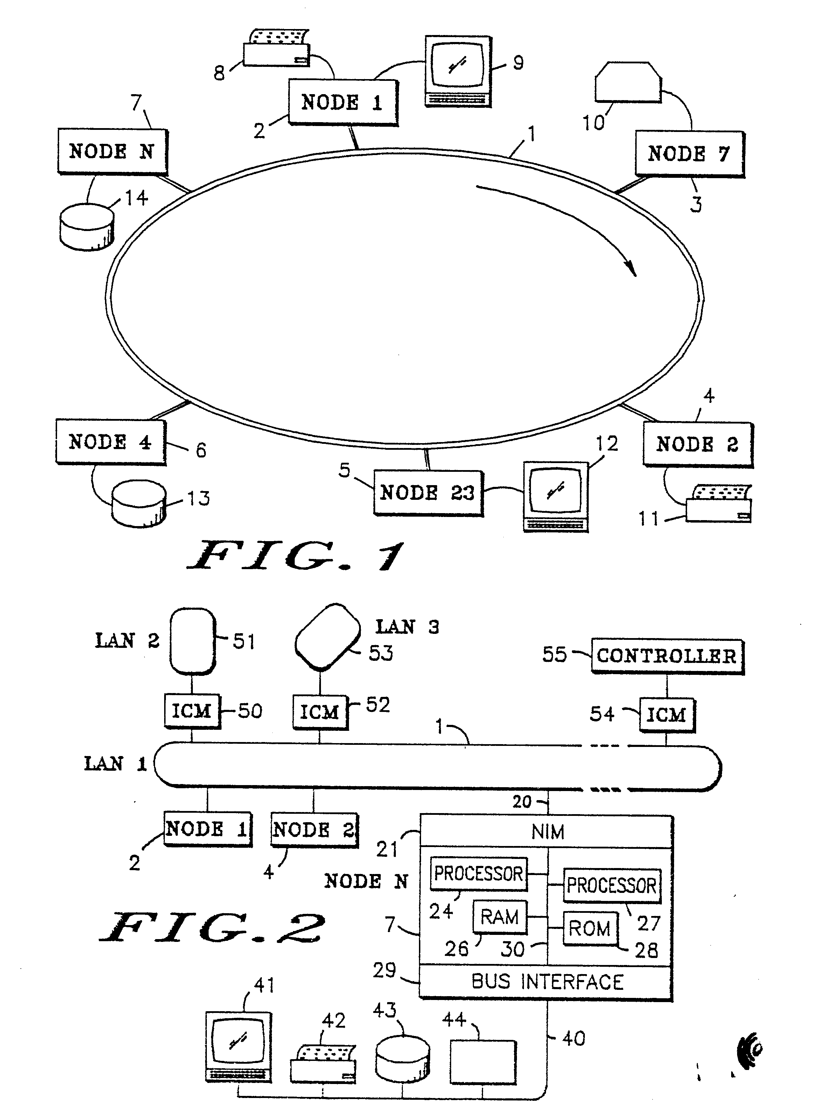

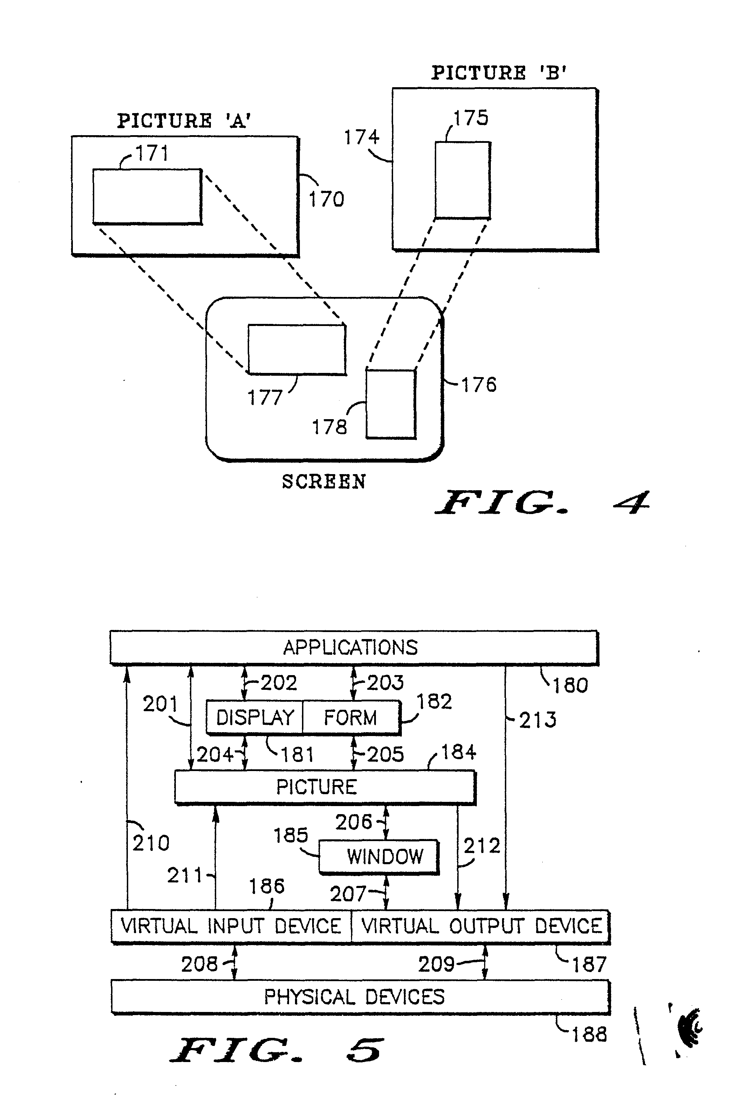

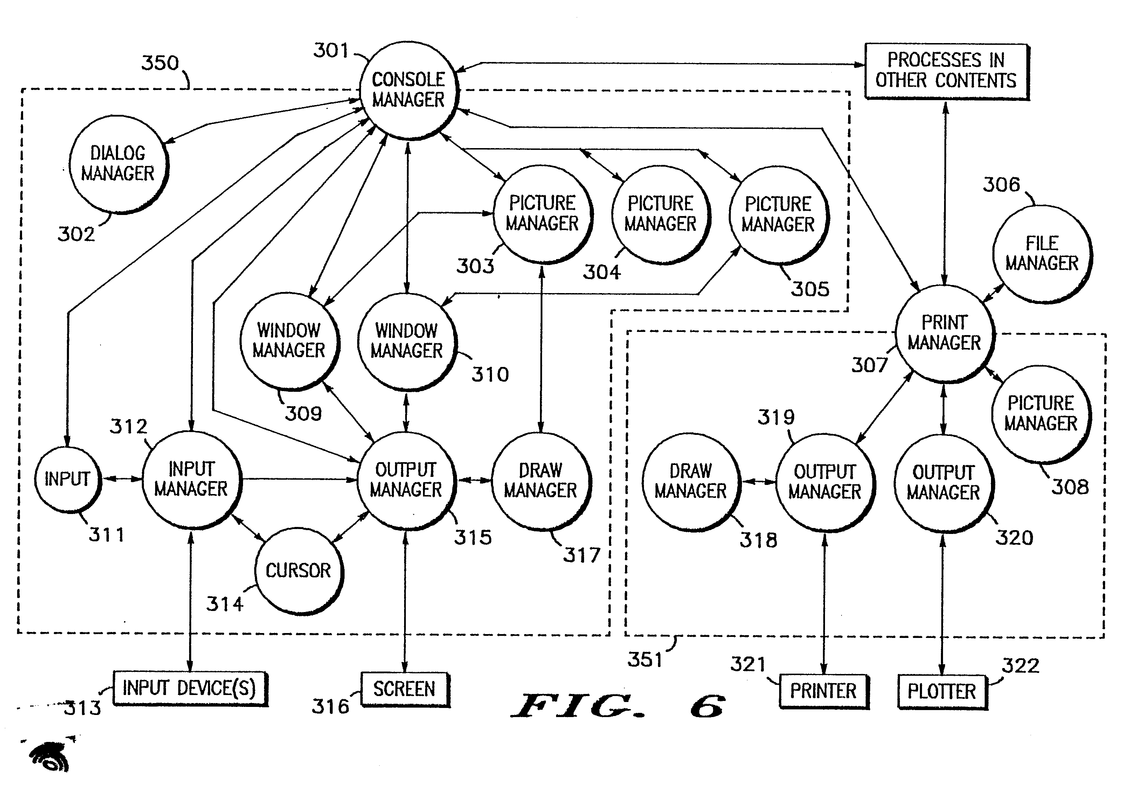

With reference to FIG. 1, a distributed computer configuration is shown comprising multiple nodes 2-7 (nodes) loosely coupled by a local area network (LAN) 1. The number of nodes which may be connected to the network is arbitrary and depends upon the user application. Each node comprises at least a processor and memory, as will be discussed in greater detail with reference to FIG. 2 below. In addition, each node may also include other units, such as a printer 8, operator display module (ODM) 9, mass memory module 13, and other I/O device 10.

With reference now to Fig. 2, a multiple-network, distributed computer configuration is shown. A first local area network LAN 1 comprises several nodes 2,4, and 7. LAN 1 is coupled to a second local area network LAN 2 by means of an Intelligent Communication Module (ICM) 50. The Intelligent-Communications Module provides a link between the LAN and other networks and/or remote processors (such as programmable controllers).

LAN 2 may comprise several nodes (not shown) and may operate under the same LAN protocol as that of the present invention, or it may operate under any of several commercially available protocols, such as Ethernet; MAP, the Manufacturing Automatic Protocol of General Motors Corp.; Systems Network Artchitecture (SNA) of International Business Machines, Inc.; SECS-II; etc. Each ICM 50 is programmable for carrying out one of the above-mentioned specific protocols. In addition, the basic processing module of the node itself can be used as an intelligent peripheral controller (IPC) for specialized devices.

LAN 1 is additionally coupled to a third local area network LAN 3 via ICM 52. A process controller 55 is also coupled to LAN 1 via ICM 54.

A representative node N (7, FIG. 2) comprises a processor 24 which, in a preferred embodiment, is a processor from the Motorola 68000 family of processors. Each node further includes a read only memory (ROM) 28 and a random access memory (RAM) 26. In addition, each node includes a Network Interface Module (NIM) 21, which connects the node to the LAN, and a Bus Interface 29, which couples the node to additional devices within a node. While a minimal node is capable of supporting two peripheral devices, such as an Operator Display Module (ODM) 41 and an I/O Module 44, additional devices (including additional processors, such as processor 27) can be provided within a node. Other additional devices may comprise, for example, a printer 42, and a mass-storage module 43 which supports a hard disc and a backup device (floppy disk or streaming tape drive).

The Operator Display Module 41 provides a keyboard and screen to enable and operator to input information and receive visual information.

The system is particularly designed to provide an integrated solution for office or factory automation, data acquisition, and other real-time applications. As such, it includes a full complement of service, such as a graphical output, windows, menus, icons, dynamic displays, electronic mail, event recording, and file management.


*SOFTWARE MODEL*

The computer operating system of the present invention operates upon processes, messages, and contexts, as such terms are defined herein. Thus this operating system offers the programmer a hardware abstraction, rather than a data or control abstraction.

A "process", as used within the present invention, is defined as a self-contained package of data and executable procedures which operate on that data, comparable to a "task" in other known system. Within the present invention a process can be thought of as comparable to a subroutine in terms of size, complexity, and the way it is used. The difference between processes and subroutines is that processes can be created and destroyed dynamically and can execute concurrently with their creator and other "subroutines".

Within a process, as used in the present invention, the data is totally private and cannot be accessed from the outside, i.e., by other processes. Processes can therefore be used to implement "objects", "modules", or other higher-level data abstractions. Each process executes sequentially. Concurrency is achieved through multiple processes, possibly executing on multiple processes.

Every process in the distributed data processing system of the present invention has a unique identifier (PID) by which it can be referenced. The PID is assigned by the system when the process is created, and it is used by the system to physically locate the process.

Every process also has a non-unique, symbolic "name", which is a variable-length string of characters. In general, the name of a process is known system-wide. To restrict the scope of names, the present invention utilizes the concept of a "context".

A "context" is simply a collection of related processes whose names are not known outside of the context. Contexts partition the name space into smaller, more manageable subsystems. They also "hide" names, ensuring that processes contained in them do not unintentionally conflict with those in other contexts.

A process in one context cannot explicitly communicate with, and does not known about, processes inside other contexts. All interaction across context boundaries must be through a "context process", thus providing a degree of security. The context process often acts as a switchboard for incoming messages, rerouting them to the appropriate sub-processes in its context.

A context process behaves like any other process and additionally has the property that any processes which it creates are known only to itself and to each other. Creation of the process constitutes definition of a new context with the same as the process.

A "message" is a buffer containing data which tells a process what to do and/or supplies it with information it needs to carry out its operation. Each message buffer can have a different length (up to 64 kilobytes). By convention, the first field in the message buffer defines the type of message (e.g., "read", "print", "status", "event", etc.).

Messages are queued from one process to another by name of PID. Queuing avoids potential synchronization problems and is used instead of semaphores, monitors, etc. The sender of a message is free to continue after the message is sent. When the receiver attempts to get a message, it will be suspended until one arrives if none are already waiting in its queue. Optionally, the sender can specify that it wants to wait for a reply and is suspended until that specific message arrives. Messages from any other source are not dequeued until after that happens.

Within the present invention, messages are the only way for two processes to exchange data.

A "message" is a variable-length buffer (limited only by the processor's physical memory size) which carries information between processors. A header, inaccessible to the programmer, contains the destination name and the sender's PID. By convention, the first field in a message is a null-terminated string which defines the type of message (e.g., "read", "status", etc.) Messages are queued to the receiving process when they are sent. Queuing ensures serial access and is used in preference to semaphores, monitors, etc.

Messages provide the mechanism by which hardware transparency is achieved. A process located anywhere in the system may send a message to any other process anywhere else in the system (even on another processor) if it knows the process name. This means that processes can be dynamically distributed across the system at any time to gain optimal throughput without changing the processes which reference them. Resolution of destinations is done by searching the process name space.

## OPERATING SYSTEM

The operating system of the present invention consists of a kernel, plus a set of processes which provide process creation and termination, time management (set time, set alarm, etc.) and which perform node start-up and configuration. Drivers for devices are also implemented as processes (EESP's), as described above. This allows both system services and device drivers to be added or replaced easily. The operating system also supports swapping and paging, although both are invisible to applications software.

Unlike known distributed computer systems, that of the present invention does not use a distinct "name server" process to resolve names. Name searching is confined to the kernel, which has the advantage of being much faster.

In general, there exists a template file describing the initial software and hardware for each node in the system. The template defines a set of initial processors (usually one per service) which are scheduled immediately after the node start-up. These processes then start up their respective subsystems. A node configuration service on each node sends configuration messages to each subsystem when it is being initialized, informing it of the devices it owns. Thereafter, similar messages are sent whenever a new device is added to the node or a device fails or is removed from the node.

Thus there is no well-defined meaning for "system up" or "system down" - as long as any node is active, the system as a wholly may be considered to be "up". Nodes can be shut down or started up dynamically without affecting other nodes on the network. The same principle applies, in a limited sense, to peripherals. Devices which can identify themselves with regard to type, model number, etc. can be added or removed without operator intervention.

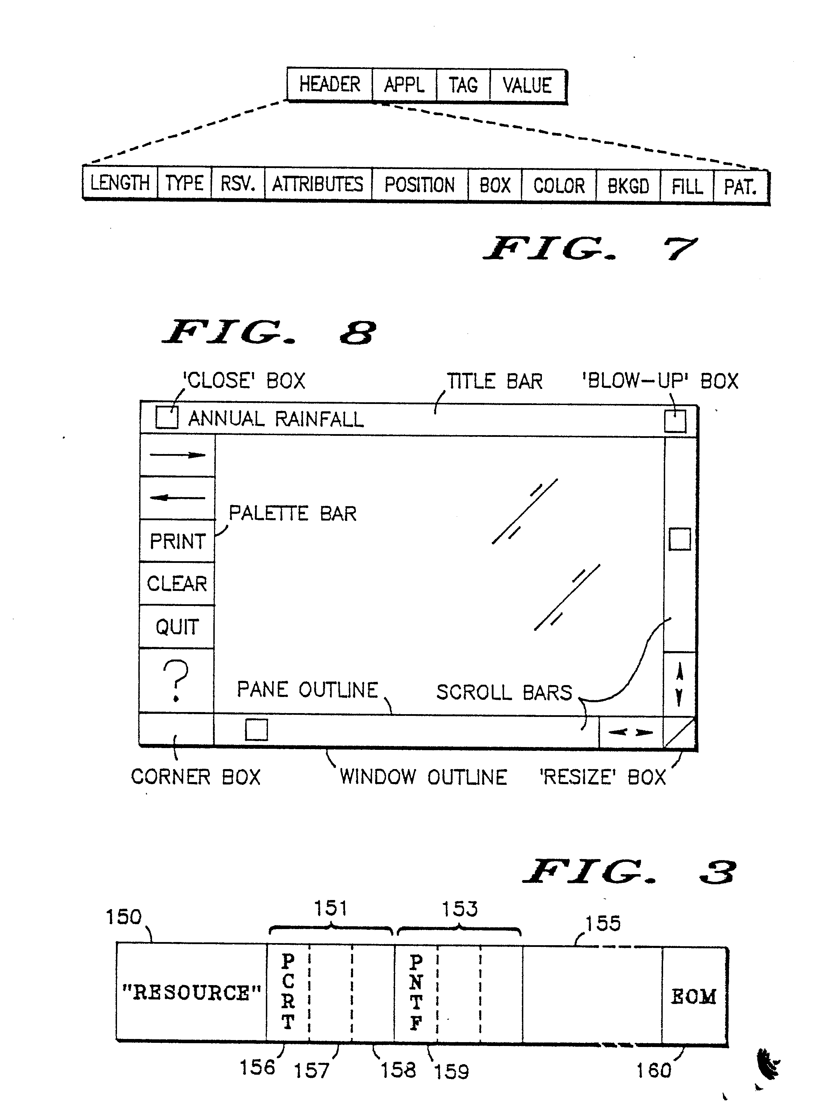

FIG. 3 shows the standard format of a message in a distributed data processing system of the type incorporating the present invention. The message format comprises a message i.d. portion 150; one or more "triples" 151, 153, and 155; and an end-of-message portion 160. Each "triple" comprises a group of three fields, such as fields 156-158. The first field 156 of "triple" 151, designated the PCRT field, represents the name of the process to be created. The second field 157 of "triple" 151 gives the size of the data field. The third field 158 is the data field.

The first field 159 of "triple" 153, designated the PNTF field, represents the name of the process to notify when the process specified in the PCRT field has been created.

A message can have any number of "triples", and there can be multiple "triples" in the same message containing PCRT and PNTF fields, since several processes may have to be created (i.e. forming a context, as described hereinabove) for the same resource.

As presently implemented, portion 150 is 16 bytes in length, field 156 is 4 bytes, field 157 is 4 bytes, field 158 is variable in length, and EOM portion 160 is 4 bytes.

*HUMAN INTERFACE - GENERAL*

The Human Interface of the present invention provides a set of tools with which an end user can construct a package specific to his applications requirements. Such a package is referred to as a "metaphor", since it reflects the user's particular view of the system. Multiple metaphors can be supported concurrently. One representative metaphor is, for example, a software development enviroment.

The purpose of the Human Interface is to allow consistent, integrated access to the data and functions available in the system. Since users' perceptions of the system are based largely on the way they interact with it, it is important to provide an interface with which they feel comfortable. The Human Interface allows a system designer to create a model consisting of objects that are familiar to the end user and a set of actions that can be applied to them.

The fundamental concept of the Human Interface is that of the "picture". All visually-oriented information, regardless of interpretation, is represented by pictures. A picture (such as a diagram, report, menu, icon, etc.) is defined in a device-independent format which is recognized and manipulated by all programs in the Human Interface and all programs using the Human Interface. It consists of "picture elements", such as "line", "arc", and "text", which can be stored compactly and transferred efficiently between processes. All elements have common attributes like color and fill pattern. Most also have type-specific attributes, such as typeface and style for text. Pictures are drawn in a large "world" co-ordinate system composed of "virtual pixels".

Because all data is in the form of pictures, segments of data can be freely copied between applications, e.g., from a live display to a word processor. No intermediate format or conversion is required. One consequence of this is that the end user or original equipment manufacturer (OEM) has complete flexibility in defining the formats of windows, menus, icons, error messages, help pages, etc. All such pictures are stored in a library rather than being built into the software and so are changeable at any time without reprogramming. A comprehensive editor is available to define and modify pictures on-line.

All interaction with the user's environment is through either "virtual input" or "virtual output" devices. A virtual input device accepts keyboards, mice, light pens, analog dials, pushbuttons, etc. and translates them into text, cursor-positioning, action, dial, switch, and number messages. All physical input devices must map into this set of standard messages. Only one process, an input manager for the specific device, is responsible for performing the translation. Other processes can then deal with the input without being dependent on its source.

Similarly, a virtual output manager translates standard output messages to the physical representation appropriate to a specific device (screen, printer, plotter, etc) A picture drawn on any terminal or by a process can be displayed or printed on any device, subject to the physical limitations of that device.

With reference to FIG 4, two "pictures" are illustrated picture A (170) and picture B (174).

The concept of a "view" is used to map a particular rectangular area of a picture to a particular device. In FIG. 4, picture A is illustrated as containing at least one view 171, and picture B contains at least one view 175. Views can be used, for example, to partition a screen for multiple applications or to extract page-sized subsets of a picture for printing.

If the view appears on a screen it is contained in a "window". With reference again to FIG. 4, view 171 of picture A is mapped to screen 176 as window 177, and view 175 of picture B is mapped as window 178.

The Human Interface allows the user to dynamically change the size of the window, move the window around on the screen, and move the picture under the window to view different parts of it (i.e., scroll in any direction). If a picture which is mapped to one or more windows changes, all affected views of that pictures on all screens are automatically updated. There is no logical limit to the number or sizes of windows on a particular screen. Since the system is distributed, it's natural for pictures and windows to be on different nodes. For example, several alarm displays can share a single, common picture.

The primary mechanism for interacting with the Human Interface is to move the cursor to the desired object and "select" it by pressing a key or button. An action may be performed automatically upon selection or by further interaction, often using menus. For example, selecting an icon usually activates the corresponding application immediately. Selecting a piece of text is often followed by selection of a command such as "cut" or "underline". Actions can be dynamically mapped to function keys on a keyboard so that pressing a key is equivalent to selecting an icon or a menu item. A given set of cursors (the cursor changes as it moves from one application picture to another), windows, menus, icons, and function keys define a "metaphor".

FIG. 5 shows the different levels of the Human Interface and data flow through them. Arrows 201-209 indicate the most common paths, while arrows 210-213 indicate additional paths. The interface can be configured to leave out unneeded layers for customized applications. The philosophy behind the Human Interface design dictates one process per object. That is, a process is created for each active window, picture, input or output device, etc. As a result, the processes are simplified and can be distributed across nodes almost arbitrarily.

## MULTIPLE INDEPENDENT PICTURES AND WINDOWS

A picture is not associated with any particular device, and it is of virtually unlimited size. A "window" is used to extract a specified rectangular area - called a "view" - of picture information from a picture and pass this data to a virtual output manager.

The pictures are completely independent of each other. That is none is aware of the existence of any other, and any picture can be updated without reference to, and without affect upon, any other. The same is true of windows.

Thus the visual entity seen on the screen is really represented by two objects: a window (distinguished by its frame title, scroll bars, etc.), and a picture, which is (partially) visible within the boundaries of the window's frame.

As a consequence of this autonomy, multiple pictures can be updated simultaneously, and windows can be moved around on the screen and their sizes changed without the involvement of other windows and/or pictures.

Also, such operations are done without the involvement of the application which is updating the window. For example, if the size of a window is increased to look at a larger area of the picture, this is handled completely within the human interface.

## HUMAN INTERFACE - PRIMARY FEATURES

The purpose of the Human Interface is to transform machine-readable data into human-readable data and vice versa. In so doing the Human Interface provides a number of key services which have been integrated to allow users to interact with the system in a natural and consistent manner. These features will now be discussed.

*Device Independence* -The Human Interface treats all devices (screens printers, etc.) as "virtual devices". None of the text, graphics, etc. in the system are tied to any particular hardware configuration. As a result such representative can be entered from any "input" device and displayed on any "output" device without modification. The details of particular hardware idiosyncrasies are hidden in low-level device managers, all of which have the same interface to the Human Interface software.

*Picture Drawing* -The Human Interface can draw "pictures" composed of any number of geometric elements, such as lines, circles, rectangles, etc., as well as any arbitrary shape defined by the user. A picture can be of almost any size. All output from the Human Interface to the user is via pictures, and all input from a user to the Human Interface is stored as pictures, so that there is only one representation of data within the Human Interface.

*Windowing* -The Human Interface allows the user to partition a screen into as many "sub-screens" or "windows" as required to view the information he desires. The Human Interface places no restrictions on the contents of such windows, and all windows can be simultaneously updated in real time with data from any number of concurrently executing programs. Any picture can be displayed, created, or modified ("edited") in any window. Also any window can be expanded or contracted, or it can be moved to a new location on the screen at any time.

If the current picture is larger than the current window, the window can be scrolled over the picture, usually in increments of a "line" or a "page". It is also possible to temporarily expand or contract the visible portion of the picture ("zoom in" or "zoom out") without changing the window's dimensions and without changing the actual picture.

*Dialog Management* -The Human Interface is independent of any particular language or visual representation. That is, there are not built-in titles, menus, error messages, help text, icons, etc. for interacting with the system. All such information is stored as pictures which can be modified to suit the end user's requirements either prior to or after installation. The user can modify the supplied dialog with his own at any time.

*Data Entry* -The Human Interface provides a generalized interface between the user and any program (such as a data base manager) which requires data from the user. The service is called "forms management", because a given data structure is displayed as a fill-in-the-blanks type of "form" consisting of numerous modifiable fields with description labels. The Human Interface form is interactive, so that data can be verified as it is entered, and the system can assist the user by displaying explanatory test when appropriate (on demand or as a result of an error).

## HUMAN INTERFACE - BASIC COMPONENTS

The Human Interface comprises the following basic components:

*Console Manager* -It is the central component of a Console context and consequently is the only manager which knows all about its particular "console". It is therefore aware of all screens and keyboards, all windows, and all pictures. Its primary responsibility is to coordinate the activities of the context. This consists of starting up the console (initializing the device managers, etc.) creating and destroying pictures, and allocating and controlling windows for processes in the Human Interface and elsewhere. Thus all access to a console must be indirect, through the relevant Console Manager.

Console Manager also implements the first level of Human Interface interaction, via menus, prompts, etc., so that applications processes don't have to. Rather than using built-in text and icons, it depends upon the Dialog Manager to provide it with the visible features of the system. Thus all cultural and user idiosyncrasies (such as language) are hidden from the rest of the Human Interface.

A Console Manager knows about the following processes: the Output Manager(s) in its context, the Input Manager in its context, the Window Manager in its context, the Picture Managers in its context, and the Dialog Manager in its context. The following processes know about the Console Manager: any one that wants to.

When a Console Manager is started, it waits for the basic processes needed to communicate with the user to start up and "sign on". It this is successful it is ready to talk to users and other processes (i.e., accept messages from the Input Manager and other processes). All other permanent processes in the context (Dialog, etc.) are assumed to be activated by the system start-up procedure. The "IN" and "Cursor" processes (see "Input Manager" and "Output Manager" below) are created by the Console Manager at this time.

The Console Manager views the screen as being composed of blank (unused) space, windows, and icons. Whenever an input character is received, the Console Manager determines how to handle it depending upon the location of the cursor and the type of input, as follows:

A. Requests to create or eliminate a window are handled within the Console Manager. A window may be opened anywhere on the screen, even on top of another window. A new Picture Manager and possibly a Window Manager may be created as a result, and one or more new messages may be generated and sent to them, or the manager(s) may be told to quit.

B. Icons can only be selected, then moved or opened. The Console Manager handles selection and movement directly. It sends notification of an "open" to the Dialog Manager, which sends a notification to the application process associated with the icon and possibly opens a default window for it.

C. For window-dependent actions, if the cursor is outside all windows, the input is illegal, and the Console Manager informs the user; otherwise the input is accepted. Request which affect the window itself (such as "scroll" or "zoom") are handled directly by the Console Manager. A "select" request is pre-checked, the relevant picture elements are selected (by sending a message to the relevant Picture Manager), and the passage is passed on to the process currently responsible for the windows. All other inputs are passed directly to the responsible process without being pre-checked.

If the cursor is on a window's frame, the only valid actions are to move, close, or change the dimensions of the window, or select an object in the frame (such as a menu or a scroll bar). These are handled directly by the Console Manager.

A new window is opened by creating a new Window Manager process and telling it its dimensions and the location of its upper left corner on the screen. It must also be given the PID of a Picture Manager and the coordinates of the part of the picture it is to display, along with the dimensions of a "clipping polygon", if that information is available (It is not possible to create a window without a picture). The type and contents of the window frame are also specified. Any of these parameters may be changed at any time.

A new instance of a picture is created by creating a new Picture Manager process with the appropriate name and, optionally, telling it the name of a "file" from which to get its picture elements. If a file is not provided, an "empty" picture is created, with the expectation that picture-drawing requests will fill it in. .

Menus, prompts, help messages, error text, and icons are simply predefined pictures (provided through the Dialog Manager) which the Console Manager uses to interact with users. They can therefore be created and edited to meet the requirements of any particular system the same way any picture can be created and edited. Menus and help text and usually displayed on request, although they may sometimes be a result of another operation.

*Picture Manager* -It is created when a picture is built, and it exits when the picture is no longer required. There is one Picture Manager per picture. The Picture Manager constructs a device-independent representation of a picture using a small set of elemental "picture elements" and controls modification and retrieval of the elements.

A Picture Manager knows about the following processes: the process which created it, and the Draw Manager. The following processes know about the Picture Manager: the Console Manager in the same context, and Window Managers in the same context.

A Picture Manager is created to handle exactly one picture, and it need only be carried when the picture is being accessed. It can be told to quit at any time, deleting its representation of the picture. Some other process must copy the picture to a file if it needs to be saved.

When a Picture Manager first starts up, its internal picture is empty. It must receive a "load file" request, or a series of "draw" requests, before a picture is actually available. Until that is done any requests which refer to specific elements or locations in the picture will receive an appropriate "not found" status message.

A picture is logically composed of device-independent "elements", such as text, line, arc, and symbol. In general, there is a small number of such elements. Each element consists of a common header, which includes the element's position in the picture's coordinate system, its color, size, etc., and a "value" which is unique to the element's type (e.g. a character string, etc.). The header also specifies how the element combines with other elements in the picture (overlays them, merges with them, etc.).

*Input Manager* -There is one Input Manager per set of "logical input devices" (such as keyboards, mice, light, pens, etc.) connected to the system. The Input Manager handles input interrupts and passes them to the console manager. Cursor movement inputs may also be sent to a designated output manager.

The Input Manager knows about the following processes: the process which initialized it, and possibly one particular Output Manager in the same context. The following process knows about the Input Manager: the Console Manager in the same context.

An Input Manager is created (automatically, at system start-up) for each set of "logical input devices" in the system, thus implementing a single "virtual keyboard". There can only be one such set, and therefore one Input Manager, per Console context. The software (message) interface to each manager is identical, although their internal behaviour is dependent upon the physical device(s) to which they communicate. All input devices interrupt service routines (including mouse, digitizing pad, etc.) are contained in Input Manager and hidden from other processes. When ready, each Input Manager must send an "I'm here" message to the closest process named "Console".

An Input Manager must be explicitly initialized and told to proceed before it can begin to process input interrupts. Both of these are performed using appropriate messages. Whichever, process initializes the manager becomes tightly coupled to it, i.e., they can exchange messages via PID's rather than by name. The Input Manager will send all inputs to this process (usually the Console Manager). This coupling cannot be changed dynamically; the manager would have to be re-initialized. Between the "initialize" and the "proceed" an Input Manager may be sent one or more "set" requests to define its behaviour. It does not need to be able to interpret the meaning of any input beyond distinguishing cursor for non-cursor. Device-independent parameters (such as pixel size and density) and not down-loaded but rather are assumed to be built into the software, some part of which, in general, must be unique to each type of Input Manager.

An Input Manager can be dynamically "linked" to a particular Output Manager, if desired. If so, all cursor control input (or any other given subset of the character set) will be sent to that manager, in addition to the initializing process, as it is received. This assignment can be changed or cut off at any time. (This is generally useful only if the output device is a screen.

In general, input is sent as signal "characters", each in a single "K" (i.e. keyboard string) message (unbuffered) to the specified process(es). Some characters, such as "shift one" or a non-spacing accent, are temporarily buffered until the next character is typed and are then sent as a pair. Redefinable characters, including all displayable text, cursor control commands, "action keys", etc. are sent as triples.

New outputs devices can be added to the "virtual keyboard" at any time by re-initializing the manager and down-loading the appropriate parameters, followed by a "proceed". All input is suspended while this is being done. Previously down-loaded parameters and the screen assignment are not affected. Similarly, devices can be disconnected by terminating (sending "quit" requests for) them individually. A non-specific "quit" terminates the entire manager.

Where applicable, an Input Manager will support requests to activate outputs on its device(s), such as lights or sound generators (e.g., a bell).

The Input Process is a distinct process which is created by each Console Manager for its Input Manager to keep track of the current input state. In general, this includes a copy of its last input of each type (text, function key, pointer, number, etc.), the current redefinable character set number, as well as Boolean variables for such conditions as "keyboard locked", "select key depressed" (and being held down), etc. The process is simply named "In". The Input Manager is responsible for keeping this process up-to-date. Any process may examine (but not modify) the contents of "In".

*Output Manager* -There is one Output Manager per physical output device (screen, printer, plotter, etc.) connected to the system. Each Output Manager converts (and possibly scales) standard "pictures" into the appropriate representation on its particular device.

The Output Manager knows about the following processes: the process which initialized it, and the Draw Manager in the same context. The following processes know about the Output Manager: the Console Manager in the same context, the Input Manager in the same context, and the Window Manager in the same context.

An Output Manager is created (automatically, at system start-up) for each physical output device in the system, thus implementing numerous "virtual screens". There can be any number of such devices per Console context. The software (message) interface to each manager is identical, although their internal behavior is dependent upon the physical device(s) to which they communicate. All output interrupt service routines (if any) are contained in Output Manager and hidden from other processes. Each manager also controls a process called Cursor which holds information concerning its own cursor. When ready, each Output Manager must send an "I'm here" message to the closest process named "Console".

An Output Manager must be explicitly initialized and told to proceed before it can begin to actually write to its device. Both of these are performed using appropriate Human Interface messages. Which process initializes the manager becomes tightly coupled to it; i.e., they can exchange messages via PID's rather than by name. This coupling cannot be changed dynamically; the manager would have to be re-initialized. Between the "initialize" and the "proceed" an Output Manager may be sent one or more "Set" requests to define its behaviour. Device-independent parameters (such as pixel size and density) are not down-loaded but rather are assumed to be built into the software, some part of which, in general, must be unique to each type of Output Manager. Things like a screen's background color and pattern are down-loadable at start-up time and at any other time.

In general, an Output Manager is driven by "draw" commands (containing standard picture elements) sent to it by any process (usually a Window Manager). Its primary function then is to translate picture elements, described in terms of virtual pixels, into the appropriate sequences of output to its particular device. It uses the Draw Manager to expand elements into sets of real pixels and keeps the Cursor process informed of any resulting changes in cursor position. It looks up colors and shading patterns in predefined tables. The "null" color (zero) is interpreted as "draw nothing" whenever it is encountered. A "clear" request is also supported. It changes a given polygonal area to the screen's default color and shading pattern.

The Cursor Process is a distinct process which is created by each Console Manager in its context to keep track of the cursor. That process, which has the same name as the screen (not the Output Manager), knows the current location of the cursor, all of the symbols which may represent the cursor on the screen, which symbol is currently being used, how many real pixels to move when a cursor movement command is executed, etc. It can, in general, be accessed for any of this information at any time by any process. The associated Output Manager is the prime user of the process and is responsible for keeping it up to date. The associated Input Manager (if any) is the next most common user, requesting the cursor's position every time it processes a "command" input.

*Dialog Manager* -There is one Dialog Manager per console, and it provides access to a library of "pictures" which define the menus, help texts, prompts, etc. for the Human Interface (and possibly the rest of the system), and it handles the user information with those pictures.

The Dialog Manager knows about the following processes: none. The following processes know about the Dialog Manager: the Console Manager in the same context.

One Dialog Manager is created automatically, at system start-up, in each Console context. Its function is to handle all visual interaction with users through the input and output managers. Its purpose is to separate the external representation of such interaction from its intrinsic meaning. For example, the Console Manager may need to ask the user how many copies of a report he wants. The phasing of the question and the response are irrelevant - they may be in English, Swahili, or pictographic, so long as the Console Manager ends up with an integral number of perhaps the response "forget it".

In general, the Dialog Manager can be requested to load (from a file) or dynamically create (from a given specification) a picture which represents a menu, error message, help (informational) text, prompt, a set of icons, etc. This picture is usually displayed until the user responds.

Response to help or error text is simply acknowledgement that the text has been read. The response to a prompt is the requested information. The user can respond to a menu by selecting an item in the menu or by canceling the menu (and thus canceling any actions the menu would have caused). Icons can be selected and then moved or "opened". Opening an icon generally results in an associated application being run.

"Selection" is done through an Input Manager which sends a notification to the Console Manager. The Console Manager filters this response through the Dialog Manager which interprets it and returns the appropriate parameter in a message which is then passed on to the process which requested the service.

All dialog is represented as pictures, mostly in free format. Help and error dialog are the simplest and are unstructured except that one element must be "tagged" to identify it as the "I have read this text" response target symbol. The text is displayed until the user selects this element.

*Draw Manager* -There is one Draw Manager per console, and it provides access to a library of "pictures" which define the menus, help, prompts, etc., for the Human Interface (and possibly the rest of the system), and it handles the user interaction with those pictures.

The Draw Manager knows about the following processes: none. The following processes know about the Draw Manager: the Picture Mangers in the same context, and the Output Managers in the same context.

One Draw Manager is created automatically, at system start-up, in each context that requires expansion of picture elements into bit-maps. Its sole responsibility is to accept one or more picture elements, of any type, in one message and return a list of bit-map ("symbol") elements corresponding to the figure generated by the elements, also in one message. Various parameters can be applied to each element, most notably scaling factors which can be used to transform an element or to convert virtual pixels to real pixels. The manager must be told to exit when the context is being shut down.

*Window Manager* -There is one per current instance of a "window" on a particular screen. A Window Manager is created when the window is opened and exits when the window is closed. It maps a given picture (or portion thereof) to a rectangular area of a given size on the given screen; i.e., it logically links a device-independent picture to a device-dependent screen. A "frame" can be drawn around a window, marking its boundaries and containing other information, such as a title or menu. Each manager is also responsible for updating the screen whenever the contents of its window changes.

The Window Manger knows about the following processes: the process that created it; one particular Picture Manager in the same context; and one particular Picture Manager in the same following processes know about the Window Manager: the Console Manager in the same context.

The Window Manager's main job is to copy picture elements from a given rectangular area of a picture to a rectangular area (called a "window") on a particular screen. To do so it interacts with exactly one Picture Manager and one Output Manager. A Window Manager need only be created when a window is "opened" on the screen and can be told to quit when the window is "closed" (without affecting the associated picture). When opened, the Motorola must draw the outline, frame, and background of the window. When closed, the window and its frame must be erased (i.e. redrawn in the screen's background color and pattern). "Moving" a window (changing its location on the screen) is essentially the same as closing and re-opening it.

A Window Manager can only be created and destroyed by a Console Manager, which is responsible for arranging windows on the screen, resolving overlaps, etc. When a Window Manger is created, it waits for an "initialize" message, initializes itself, returns an "I'm here" message to the process which sent it the "initialize" message, then waits for further messages. It does not send any messages to the Output Manager until it has received all of the following: its dimensions (exclusive of frame), the outline line-type, size and color, background color, location on the screen, a clipping polygon, scaling factors, and framing parameters. A Window Manager also has a "owner", which is a particular process which will handle commands (through the Console Manager, which always has prime control) within the window.

Any of the above parameters can be changed at any time. In general, changing any parameter (other than the owner) causes the window to be redrawn on the screen.

A "frame", which may consist of four components (called "bars"), one along each edge of the window, may be placed around the given window. The bars are designated top, bottom, left, and right. They can be any combination of simple line segment, title bar, scroll bar, menu bar, and palette bar. These are supplied to the message as four separate lists (in four separate messages) of standard picture elements, which can be changed at any time by sending a new message referencing the bar. The origin of each bar is [0,0] relative to the upper left corner of the window.

The Console Manager may query a Window Manager for any of its parameters, to which it responds with messages identical to the ones it originally received. It can also be asked whether a given absolute cursor position is inside its window (i.e. inside the current clipping polygon) or its frame, and for the cursor coordinates relative to the origin of the window or any edge of the frame.

A Window Manager is tightly coupled to its creator (a Console Manager), Picture Manager, and Output Manager, i.e. they communicate with each other using process identifiers (PID's). Consequently, a Window Manager must inform its Picture Manager when it exits, and it expects the Picture Manager to do the same.

Once the Window Manger knows the picture it is accessing and the dimensions of its window (or any time either of these changes), it requests the Picture Manager to send to all picture elements which completely or partially lie within the window. It also asks it to notify it of changes which will affect the displayed portion of the picture. The Picture Manager will send "draw" messages to the Window Manager (at any time) to satisfy these requests.

The Window Manager performs gross clipping on all picture elements it receives, i.e. it just determines whether each element could appear inside the current clipping polygon (which may be smaller than the window at any given moment, if other windows overlap this one).

Window Managers deal strictly in virtual pixels and have no knowledge about the physical characteristics of the screen to which they are writing. Consequently, a window's size and location are specified in virtual pixels, implying a conversion from real pixels if these are different.

*Print Manager* -There is one per "Output subsystems", i.e. per pool of output devices. The Print Manager coordinates output to hard-copy devices (i.e. to their Output Managers). It provides a comprehensive queuing service for files that need to be printed. It can also perform some minimal formatting of text (justification, automatic page numbering, header, footers, etc.)

The Print Manager knows about the following processes: Output Managers in the same context, and a Picture Manager in the same context. The following processes know about the Print Manager: any one that wants to.

One Print Manager is created automatically, at start-up time, in each Print context. It is expected to accept general requests for hard-copy output and pass them on, one message (usually corresponding to one "line" or output) at a time, to the appropriate Output Manager. It can also accept requests which refer to files (i.e. to File Manager processes). Each such message, known as a "spool", request, also contains a priority, the number of copies desired, specific output device requirements (if any) and special form requirements (if any). Based on these parameters, as well as the size of the file, the amount of time the request has been waiting, and the availability of output devices, the Print Manager maintains an ordered queue of outstanding requests. It dequeues them one at a time, select an Output Manager, and builds a picture (using a Picture Manager). It then requests (from the Picture Manager) and "prints" (plots, etc) one "page" at a time until the entire file has been printed.

## HUMAN INTERFACE - RELATIONSHIP BETWEEN COMPONENTS

The eight Human Interface components together provide all of the services required to support a minimal human interface. The relationship between them are illustrated in FIG. 6, which shows at least one instance of each component. The components represented by circles 301, 302, 307, 312, 315, and 317-320 are generally always present and active, while the other components are created as needed and exit when they have finished their specific functions. FIG. 6 is divided into two main contexts: "Console" 350 and "Print" 351.

Cursor 314 and Input 311 are examples of processes whose primary function is to store data. "Cursor"'s purpose is to keep track of the current cursor position on the screen and all parameters (such as the symbols defining different cursors) pertinent to the cursor. One cursor process is created by the Console Manager for each Output Manager when it is initialized. The Output Manager is responsible for updating the cursor data, although "Cursor" may be queried by anyone. "Input" keeps track of the current input state, such as "select key is being held down", "keyboard locked", etc. One input process is created by each Console Manager. The console's input message updates the process; any other process may query it.

The Human Interface is structured as a collection of subsystems, implemented as contexts, each of which is responsible for one broad area of the interface. There are two major contexts accessible from outside the Human Interface: "Console" and "Print". They handle all screen/keyboard interaction and all hard-copy output, respectively. These contexts are not necessarily unique. There may be one or more instances of each in the system, with possibly several on the same cell. Within each, there may be several levels of nested contexts.

The possible interaction between various Human Interface components will now be described.

*Console Manager! Other Contents* -Processes of other contexts may send requests for console services or notification of relevant events directly to the Console Manager(s). The Console Manager routes messages to the appropriate service. It also notifies (via a "status" message) the current owner of a window whenever an object in its window has been selected. Similarly, it sends a message to an application when a user requests that application in a particular window.

*Console Manager : Input Manager* -The Console Manager initializes the Input Manager and usually assigns a particular Output Manager to it. The Input Manager always sends all input (one character, one key, one cursor movement, etc. at a time) directly to the Console Manager. It may also send "status" messages, either in response to a "download", "initialize", or "terminate" request, or any time an anomaly arises.

*Console Manager : Output Manager* -The Console Manager displays information on its "prime" output device during system start-up and shut-down without using pictures and windows. It therefore sends picture elements directly to an Output Manager. The Console Manager is also responsible for moving the cursor on the screen while the system is running, if applicable. The Console Manager (or an other Human Interface manager, such as an "editor") may change the current cursor to any displayable symbol. Output Managers will send "status" messages to the Console Manager any time an anomaly arises.

*Console Manager / Picture Manager* -The console Manager creates Picture Managers on demand and tells each of them the name of a file which contains picture elements, if applicable. A Picture Manager can also accept requests from the Console Manager (or anyone else) to add elements to a picture individually, delete elements, copy them, move them, modify their attributes, or transform them, It can be queried for the value of an element at (or close to) a given location within its picture. The Console Manager will tell a Picture Manager to erase its picture and exit when it is no longer needed. A Picture Manager usually sends "Status" messages to the Console Manager whenever anything unusual (e.g., an error) occurs.

*Console Manager : Window Manager* -The Console Manager creates Window Managers on demand. Each Window Manager is told its size, the PID of an Output Manager, the coordinates (on the screen) of its upper left outside corner, the characteristics of its frame, the PID of a particular Picture Manager, the coordinates of the first element from which to start displaying the picture, and the name of the process which "owns" the window. While a window is active, it can be requested to re-display the same picture starting at a different element or to display a completely different picture.

The coordinates of the window itself may be changed, causing it to move on the screen, or it may be told to change it size, frame, or owner. A Window Manager can be told to "clip" the picture elements in its display along the edge of a given polygon (the default polygon is the inside edge of the window's frame). It can also be queried for the element corresponding to a given coordinate. The Console Manager will tell a Window Manger to "close" (erase) its window and exit when it is no longer needed. A Window Manager sends "status" messages to the Console Manager to indicate success or failure of a request.

*Console Manager : Dialog Manager* -The Dialog Manager accepts requests to load and/or dynamically create "pictures" which represent menus, prompts error messages, etc. In the case of interactive pictures (such as menus), it also interprets the response for the Console Manager. Other processes may also use the Dialog Manager through the Console Manager.

*Console Manager ! Print Manager* -Console Managers generally send "spool" requests to Print Managers to get hard-copies of screens or pictures. An active picture must first be copied to a file. The Print Manager returns a "status" message when the request is complete or if it fails.

*Window Manager : Picture Manager* -A Window Manager requests lists of one or more picture elements from the relevant picture Manager, specified by the coordinates of a rectangular "viewport" in the picture. It can also request the Picture Manager to automatically send changes (new, modified, or erased elements), or just notification of changes, to it. The Picture Manager sends "status" messages to notify the Window Manager of changes or errors.

*Window Manager : Output Manager* -A Window Manager sends lists of picture elements to its Output Manager, prefixed by the coordinates of a polygon by which the Output Manager is to "clip" the pixels of the elements as it draws them. A given list of picture elements can also be scaled by a given factor in any of its dimensions. The Output Manager returns a "status" message when a request fails.

*Input Manager/ Output Manager* -The Input Manager sends all cursor movement inputs to a preassigned Output Manager (if any), as well as to the Console Manager. This assignment can be changed dynamically.

*Print Manager : Other Processes* -The Print Manager accepts requests to "spool" a file or to "print" one or more picture elements. It sends a "status" message at the completion of the request or if the request cannot be carried out. The status of a queued request can also be queried or changed at any time.

*Print Manager/ File Manager* -The Print Manager reads picture elements from a File Manager (whose name was sent to it via a "spool" request). It may send a request to "delete" the file back to the File Manager after it has finished printing the picture.

*Print Manager / Picture Manager* -A Print Manager creates a Picture Manager for each spooled picture that it is currently printing, giving it the name of the relevant file. It then requests "pages" of the picture (depending upon the characteristics of the output device) one at a time. Finally, it tells the Picture Manager to go away.

*Print Manager / Output Manager* -The Print Manager sends picture elements to an Output Manager. The Output Manager sends a "status" message when the request completes or fails or when an anomaly arises on the printer.

*Draw Manager / Other Processes* -The Draw Manager accepts lists of elements prefixed by explicit pixel parameters (density, scaling factor, etc.). It returns a single message containing a list of bit-map ("symbol") elements of the draw result for each message it receives.

## HUMAN INTERFACE - SERVICE

A Human Interface service is accessed by sending a request message to the closest (i.e. the "next") Human Interface manager, or directly to a specific Console Manager. This establishes a "connection" on an existing Human Interface resource or creates a new one. Subsequent requests must be made directly to the resource, using the connector returning from the initial request, until the connection is broken. The Human Interface manager is distributed and thus spans the entire virtual machine. Resources are associated with specific nodes.

A picture may be any size, often larger than any physical screen or window. A window may only be as large as the screen on which it appears. There may be any number of windows simultaneously displaying pictures on a single screen. Updating a picture which is mapped to a window causes the screen display to be updated automatically. Several windows may be mapped to the same picture concurrently - at different coordinates.

The input model provided by the Human Interface consists of two levels of "virtual devices". The lower level supports "position", "character", "action", and "function key" devices associated with a particular window. These are supported consistently regardless of the actual devices connected to the system.

An optional higher level consists of a "dialog service", which adds "icons", "menus", "prompts", "values", and "information boxes" to the repertoire of device-independent interaction. Input is usually event-driven (via messages) but may also be sampled or explicitly requested.

All dimensions are in terms of "virtual pixels". A virtual pixel is a unit of measurement which is symmetrical in both dimensions. It has no particular size. Its sole purpose is to define the spatial relationships between picture elements. Actual sizes are determined by the output device to which the picture is directed, if and when it is displayed. One virtual pixel may translate to any multiple, including fractions, of a real pixel.

Using the core Human Interface service generally involves: creating a picture (or accessing a predefined picture); creating a window on a particular screen and connecting the picture to it; updating the picture (drawing new elements, moving or erasing old ones, etc.) to reflect changes in the application (e.g. new data); if the application is interactive, repeatedly accepting input from the window and acting accordingly; and deleting the picture and/or window when done.

Creating a new resource is done with an appropriate "create" message, directed to the appropriate resource manager (i.e. the Human Interface manager or Console Manager). Numerous options are available when a resource, particularly a window, is created. For example, a typical application may want to be notified when a specific key is pressed. Pop-up and pull-down menus, and function keys, may also be defined for a window.

All input from the Human Interface is sent by means of the "click" message. The input of this message is to allow the application program to be as independent of the external input as possible. Consequently, a "click" generated by a pop-up menu looks very much like that generated by pressing a function key or selecting an icon. Event-driven input is initiated by a user interacting with an external device, such as a keyboard or mouse. In this case, the "click" is sent asynchronously, and multiple events are queued.

A program may also explicitly request input, using a menu, prompt, etc., in which case the "click" is sent only when the request is satisfied. A third method of input, which doesn't directly involve the user, is to query the current state of a virtual input device (e.g., the current cursor position).

A "click" message is associated with a particular window (and by implication usually with a particular picture), or with a dialog "metaphor", thus reflecting the two levels of the input model.

Since the visual aspect of the Human Interface is separated from the application aspect, a later redesign of a window, menu, icon, etc. has little or no effect upon existing applications.

## HUMAN INTERFACE - DETAILED DESCRIPTION

### CONNECTORS

In general, all interaction with a Human Interface resource (console, window, picture, or virtual terminal) must be through a connector to that resource. Connectors to consoles can only be obtained from the Human Interface manager. Connectors to the other resources are available through the Human Interface manager, or through the Console Manager in which the desired resource resides. Requests must specify the path-name of the resource as follows:

[<console__name>] [/<screen__name>] [/<window__or__picture__name>]

That is, the name of the console, optionally followed by a slash and the name of the screen, optionally followed by a slash and the name of a window, picture, or terminal. The console name may be omitted only if the message is sent directly to the desired console manager. If the screen name is omitted, the first screen configured on the given console is assumed. The window name must be specified if one of those resources is being connected.

### CONNECTION REQUESTS

The "create" and "open" requests can be addressed to the "next" Human Interface context ("HI") or to a specific console connector or to the "next" context named "Console". If sent to "HI", a full path-name (the name parameter) must be given; otherwise, only the name of the desired resource is required (e.g., at a minimum, just the name of the window or picture).

If a picture manager process is created locally by an application, for private use, an "init" message - with the same contents as "create" or "open" - must be sent directly to the picture process. The response will be "done" or "failed".

The following are the various Connection Requests and the types of information which may be associated with each:

CREATE is used to create a new picture resource, a new window resource, or a new virtual terminal resource.

When used to create a new picture resource, it may contain information about the resource type (i.e. a "picture"); the path-name of the picture; the size; the background color; the highlighting method; the maximum number of elements; the maximum element size; and the path-name of a library picture from which other elements may be copied.

When used to create a new window resource, it may contain information about the resource type (i.e. a "window"); the path-name of the window; the window's title; the window's position on the screen; the size of the window; the color, width, fill color between the outline and the pane, and the style of the main window outline; the color and width of the pane outline; a mapping of part of a picture into the window; a modification notation; a special character notation; various options; a "when" parameter requesting notification of various specified actions on/within the window; a title bar; a palette bar; vertical and horizontal scroll bars; a general use bar; and a corner box.

When used to create a new virtual terminal, it may contain information about the resource type (i.e. a "terminal"); the path-name of the terminal; the title of the terminal's window; various options; the terminal's position on the screen; the size of the terminal (i.e. number of lines and columns in the window); the maximum height and width of the virtual screen; the color the text inside the window; tab information; emulator process information; connector information to an existing window; window frame color; a list of menu items; and alternative format information.

OPEN is used to connect to a Human Interface service or to an existing Human Interface resource. When used to connect to a Human Interface service, it may contain information about the service type; and the name of the particular instance of the service. This resource must be sent to the Human Interface context.

When used to connect to an existing Human Interface resource, it may contain information about the path-name of the resource; the type of resource (e.g. picture, window, or terminal); and the name of the file (for pictures only) from which to load the picture. This request can be sent to a Human Interface manager or a console manager; alternatively the same message with message I.D. "init" specifying a file can be sent directly to a privately owned picture manager.

DELETE is used to remove an existing Human Interface resource from the system, and it may contain information specifying a connection to the resource; the type of resource; and whether, for a window, the corresponding picture is to be deleted at the same time.

CLOSE is used to break connection to a Human Interface resource, and it may contain information specifying a connection to the resource; and the type of resource.

WHO? is used to get the status of a service or resource, and it may contain a user identification string.

QUERY is used to get the status of a service or resource, and it may contain information about the resource type; the name of the service or resource; a connector to a resource; and information concerning various options.

The following are the various Connection Responses and the types of information which may be associated with each:

CONNECT provides a connection to a Human Interface resource, and it contains information concerning the originator (i.e. the Human Interface or the console); the resource type; the original request message identifier; the name of the resource; and a connector to the resource.

USER contains the names of zero or more currently signed-on users and their locations, and it contains a connector to a console manager followed by the name of the user signed on at that console.


## CONSOLE REQUESTS

The main purpose of the console is to coordinate the activities of the windows, pictures, and dialog associated with it. Any of the CREATE, OPEN, DELETE, and CLOSE connection requests listed above, except those relating to the consoles, can be sent directly to a known console manager, rather than to the Human Interface manager (which always searches for the console by name). Subsequently, some characteristics of a window, such as its size, can be changed dynamically through the console manager. The current "user" of the console can be changed. And the console can be queried for its current status (or that of any of its resources).

The following are the various Console Requests and the types of information which may be associated with each:

USER is used to change the currently signed-on user, and it contains a user identification string.

CHANGE is used to change the size and other conditions of a window, and it may contain information about a connector to a window or a terminal; new height and width (in virtual pixels); increment to height and width; row and column position; various options; a connector to a new owner process; and whether the window should be the current active window on the screen.

CURSOR is used to move the screen cursor, and it contains position information as to row and column.

QUERY is used to get the current status of the console or one of its resources, and it contains information in the form of a connector to the resource; and various query options (e.g. list all screens, all pictures, or all windows).

BAND starts/stops the rubber-banding function and dragging function, and it contains information about the position of a point in the picture from which to start the operation; the end point of the figure which is to be dragged; the type of operation (e.g. line, rectangle, circle, or ellipse); the color; and the type of line (e.g. solid). In rubber-banding the drawn figure changes in size as the cursor is moved. In dragging the figure moves with the cursor.

The following are the various Console Responses and the types of information which may be associated with each:

STATUS describes the current state of a console, and it may contain information about a connector to the console; the originator; the name of the console; current cursor position; current metaphor size; scale of virtual pixels per centimeter, vertically and horizontally; number of colors supported; current user i.d. string; screen size and name; window connector and name; and picture connector, screen name, and window name.

## PICTURE-DRAWING

The picture is the fundamental building block in the Human Interface. It consists of a list of zero or more "picture elements", each of which is a device-independent abstraction of a displayable object (line, text, etc.). Each currently active picture is stored and maintained by a separate picture manager. "Drawing" a picture consists of sending picture manipulation messages to the picture manager.

A picture manager must first be initialized by a CREATE or OPEN request (or INIT, if the picture was created privately). CREATE sets the picture to empty, gives it a name, and defines the background. The OPEN request reads a predefined picture from a file and gives it a name. Either must be sent first before anything else is done. A subsequent OPEN reloads the picture from the file.

The basic request is to WRITE one or more elements. WRITE adds new elements to the end of the current list, thus reflecting the order. Whenever parts of the picture are copied or displayed, this order is preserved. Once drawn, one or more elements can be moved, erased, copied, or replaced. All or part of the picture can be saved to a given file. In addition, there are requests to quickly change a particular attribute of one or more elements (e.g. select then). Finally, the DELETE request (to the console manager; QUIT, if direct to the picture resource) terminates the picture manager, without saving the picture.

A picture can be shared among several processes ("applications") by setting the "appl" field in the picture elements. Each application process can treat the picture as if it contains only its own elements. All requests made by each process will only affect elements which contain a matching "appl" field. Participating processes must be identified to the picture manager via an "appl" request.

The following are the various Picture-Drawing Requests and the types of information which may be associated with each:

WRITE is used to add new elements to a picture, and it may contain information providing a list of picture elements; the data type; and an indication to add the new elements after the first element found in a given range (instead of the foreground, at the end of the list).

READ is used to copy elements from a picture, and it may contain information regarding the connection to which to send the elements; an indication to copy background elements; and a range of elements to be copied.

MOVE is used to move elements to another location, and it may contain information indicating a point in the picture to which the elements are to be moved; row and column offsets; to picture foreground; to picture background; fixed size increments; and a range of elements to be moved.

REPLACE is used to replace existing elements with new ones, and it may contain information providing a list of picture elements; and a range of elements to be replaced.

ERASE is used to remove elements from a picture, and it may contain information on the range of elements to be erased.

QUIT is used to erase all elements and terminate, and it has no particular parameters (valid only if the picture is private).

MARK is used to set a "marked" attribute (if text, to display a mark symbol), and it may contain information specifying the element to be marked; and the offset of the character after which to display the mark symbol.

SELECT is used to select an element and mark it, and it may contain information specifying the element(s) to be selected; the offset of the character after which to display the mark symbol; the number of characters to select; and a deselect option.

SAVE is used to copy all or part of a picture to a file, and it may contain information specifying the name of the file; and a subset of a picture.

QUERY is used to get the current status, and it has no particular parameters.

BKGD is used to change a picture's background color, and it may contain information specifying the color.

APPL is used to register a picture as an "application; a may contain information specifying a name of the application; a connection to the application process; and a point of origin inside the picture.

NUMBER is used to get ordinal numbers and identifiers of specific elements, and it may contain information specifying the element(s).

HIT is used to find an element at or closest to a given position, and it may contain a position location in a picture; and how far away from the position the element can be.

[,] is used to start/end a batch, and a first symbol causes all updates to be postponed until a second symbol is received (batches may be nested up to 10 deep).

HIGHLIGHT, INVERT, BLINK, HIDE are used to change a specific element attribute, and they may contain information indicating whether the attribute is set or cleared; and a range of elements to be changed.

CHANGE is used to change one or more of the element fields, and it may contain information specifying the color of the element; the background color; the fill color; and fill pattern; and a range of elements to be changed.

EDIT is used to modify a text element's string, and it may contain information indicating to edit at the current mark and then move the mark; specifying the currently selected substring is to be edited; an offset into the text at which to insert and/or from which to start shifting; to shift the text by the given number of characters to/from the given position; tab spacing; a replacement substring; to blank to the end of the element; and a range of elements to be edited.

The following are the various Picture-Drawing responses and the types of information which may be associated with each:

STATUS describes the current status of the picture, and it may contain information specifying a connector to the picture; an original message identifier, if applicable; the name of the picture; the name of the file last read or written; height and width; lowest and highest row/column in the picture; the number of elements; and the number of currently active viewports.

WRITE contains elements copied from a picture, and it may contain information specifying a connector to the picture; a list of picture elements; and the data type.

NUMBER contains element numbers and identifiers, and it may contain information specifying a list of numbers; and a list of element identifiers.


PICTURE ELEMENTS

Picture elements are defined by a collection of data structures, comprising one for a common "header", some optional structures, and one for each of the possible element types. The position of an element is always given as a set absolute coordinates relative to [0,0] in the picture. This defines the upper left corner of the "box" which encloses each element. Points specified within an element (e.g. to define points on a line) are always given as coordinates relative to this position. In a "macro" the starting position of each individual element is considered to be relative to the absolute starting position of the macro element itself, i.e. they're nested.

FIG. 7 shows the general structure of a complete picture element. The "value" part depends upon the element type. The "appl" and "tag" fields are optional, depending upon indicators set in "attr".

The following is a description of the various fields in a picture element:

Length = length of the entire picture in bytes

Type = one of the following: text, line, rectangle, ellipse, circle, symbol, array, discrete, macro, null, metaelement

Attr = one of the following: selectable, selected, rectilinear, inverted foreground/background, blink, tagged, application mnemonic, hidden, editable, movable, copyable, erasable, transformed, highlighted, mapped/not mapped, marked, copy

Pos = Row/col coordinates of upper left corner of the element's box

Box = Height/width of an imaginary box which completely and exactly encloses the element

Color = color of the element, consisting of 3 sub-fields: hue, saturation, and value

Bkgrnd = background color of the element

Fill = the color of the interior of a closed figure

Pattern = one of 10 "fill" patterns

Appl = a mnemonic referencing a particular application (e.g. forms manager, word-processor, report generator, etc.); allows multiple processes to share a single picture.

Tag = a variable-length, null-terminated string, supplied by the user; it can be used by applications to identify particular elements or classes of elements, or to store additional attributes

The attributes relating to the "type" field if designated "text" are as follows:

Options = wordwrap, bold, underline, italic, border, left-justify, right-justify, centered, top of box, bottom of box, middle of box, indent, tabs, adjust box size, character size, character/line spacing, and typeface

Select = indicates a currently selected substring by offset from beginning of string, and length

String = any number of bytes containing ASCII codes, followed by a single null byte; the text will be constrained to fit within the element's "box", automatically breaking to a new row when it reaches the right

boundary of the area Indent       = two numbers specifying the indentation of the first and subsequent rows of text within the element's "box"

Tabs       = list of [type, position], where "position" is the number of characters from the left edge of the element's box, and "type" is either Left, Right, or Decimal

Grow       = maximum number of characters (horizontally) and lines (vertically) by which the element's box may be extended by typed input; limits growth right and downward, respectively

Size       = height of the characters' extend and relative width

Space       = spacing between lines of text and between characters

Face       = name of a particular typeface

    ₋ The attributes relating to the "type" field if designated "line" are as follows:

Style       = various options such as solid, dashed, dotted, double, dashed-dotted, dash-dot-dot, patterned, etc.

Pattern       = a pattern number

Thick       = width of the line in pixels

Points       = two or more pairs of coordinates (i.e. points) relative to the upper left corner of the box defined in the header

The attributes relating to the "type" field if designated "rectangle" are as follows:

Style       = same as for "line" above, plus solid with a shadow

Pattern       = same as for "line"

Thick       = same as for "line"

Round       = radius of a quarter-circle arc which will be drawn at each corner of the rectangle

The attributes relating to the "type" field if designated "ellipse" are as follows:

Style       = solid, patterned, or double

Pattern       = same as for "line"

Thick       = same as for "line"

Arc       = optional start-and end-angles of an elliptical arc

The attributes relating to the "type" field if designated "circle" are as follows:

Style       = same as for "ellipse"

Pattern       = same as for "line"

Thick       = same as for "line"

Center       = a point specifying the center of the circle, relative to the upper left corner of the element's box

Radius       = length of the radius of the circle

Arc       = optional start-and end-angles of a circular arc

A "symbol" is a rectangular space containing pixels which are visible (drawn) or invisible (not drawn). It is represented by a two-dimensional array, or "bit-map" of 1's and 0's with its origin in the upper left corner.

The attributes relating to the "type" field if designated "symbol" are as follows:

Bitmap       = a two-dimensional array (in row and column order) containing single bits which are either "1" (draw the pixel in the foreground color) or "0" (draw the pixel in the background color); the origin of the array corresponds to the starting location of the element

Alt       = A text starting which can be displayed on non-bit-mapped devices, in place of the symbol

An array element is a rectangular space containing pixels which are drawn in specific colors, similar to a symbol element. It is represented as a two-dimensional array, or "bit-map", of color numbers, with its origin in the upper left corner. The element's "fill" and "pattern" are ignored.

The attributes relating to the "type" field if designated "array" are as follows:

Bitmap = a two-dimensional array (in row and column order) of color numbers; each number either defines a color in which a pixel is to be drawn, or is zero (in which the pixel is drawn in the background color); the origin of the array corresponds to the starting location of the element

Alt = an alternate text string which can be displayed on non-bit-mapped devices in place of the array

A discrete element is used to plot distinct points on the screen, optionally with lines joining them. Each point is specified by its coordinates relative to the element's "box". An explicit element (usually a single-character text element or a symbol element) may be given as the mark to be drawn at each point. If not, an asterisk is used. The resulting figure cannot be filled.

The attributes relating to the "type" field if designated "discrete" are as follows:

Mark = a picture element which defines the "mark" to be drawn at each point; if not applicable, a null-length element (i.e., a single integer containing the value zero) must be given for this field Style
Pat
Thick = type, pattern, and thickness of the line (see "line" element above)
Join = "Y" or "N" (or null, which is equivalent to "N"); if "Y", lines will be drawn to connect the marks
Points = two or more pairs of coordinates; each point is relative to the upper left corner of the "box" defined in the header

A "macro" element is a composite, made up of the preceding primitive element types ("text", etc.) and/or other macro elements. It can sometimes be thought of as "bracketing" other elements. The coordinates of the contained elements are relative to the absolute coordinates of the macro element. The "length" field of the macro element includes its own header and the "macro" field, plus the sum of the lengths of all of the contained elements. The "text" macro is useful for mixing different fonts and styles in single "unit" (word, etc.) of text.

The attributes relating to the "type" field if designated "macro" are as follows:

Macro = describes the contents of the macro element; may be one of following:
"N" - normal (contained elements are complete)
"Y" - list: same as "N", but only one sub-element at a time can be displayed; the others will be marked "hidden", and only the displayed element will be sent in response to requests ("copy, etc.); the "highlight" request will cycle through the sub-elements in order
"T" - text: same as "N", but the "macro" field is immediately followed by a text "options" field, and a text "select" field; the macro "list" field may be followed by further text parameters (as specified in the options field)
List = any number of picture elements (referred to as sub-elements), formatted as described above; terminated by a null word

A "meta-element" is a pseudo-element generated by the picture manager and which describes the picture itself, whenever the picture is "saved" to a file. Subsequently, meta-elements read from a file are used to set up parameters pertinent to the picture, such as its size and background color. Meta-elements never appear in "write" messages issued by the picture manager (e.g. in response to a "read" request, or as an update to a window manager).

The format of the meta-element includes a length field, a type field, a meta-type field, and a value. The 16-bit length field always specifies a length of 36. The type field is like that for normal picture elements. The meta-element field contains one of the following types:

Name = the value consists of a string which names the picture
Size = the maximum row and column, and the maximum element number and size
Backgnd = the picture's background color
Highlt = the picture's highlighting

The format of the value field depends upon the meta-type.

21

*WINDOWING*

A window maps a particular subset (often called a "view") of a given picture onto a particular screen. Each window on a screen is a single resource which handles the "pane" in which the picture is displayed and up to four "frame bars".

With reference to FIG. 8, a frame bar is used to show ancillary information such as a title. Frame bars can be interactive, displaying the names of "pull-down" menus which, when selected, display a list of options or actions pertinent to the window. A palette bar is like a permanently open menu, with all choices constantly visible.

Scroll bars indicate the relative position of the window's view in the picture and also allow scrolling by means of selectable "scroll buttons". A "resize" box can be selected to expand or shrink the size of the window on the screen while a "close" box can be selected to get rid of the window. Selecting a "blow-up" box expands the window to full screen size; selecting it again reduces it to its original dimensions.

A corner box is available for displaying additional user information, if desired.

The window shown in FIG. 8 comprises a single pane, four frame bars, and a corner box. The rectangular element within each scroll bar indicates the relative position of the window in the picture to which it is mapped (i.e. about a third of the way down and a little to the right).

Performing an action( such as a "select") in any portion of the window will optionally send a "click" message to the owner of the window. For example, selecting an element inside the pane will send "click" with "action" = "select" and "area" = "inside", as well as the coordinates of the cursor (relative to the top left corner of the picture) and a copy of the element at that position.

Selecting the name of a menu, which may appear in any frame bar, causes the menu to pop-up. It is the response to the menu that is sent in the "click" message, not the selection of the menu bar item. Pop-up menus (activated by menu keys on the keyboard) and function keys can also be associated with a particular window.

All windows are created by sending a "create" request to a Console Manager. As described above, "create" is the most complex of the windowing messages, containing numerous options which specify the size and location of the window, which frame bars to display, what to de when certain actions are performed in the window, and so on.

The process which sent the request is known as the "owner" of the window, although this can be changed dynamically. The most recently opened window usually becomes the current "active" window, although this may be overridden or changed.

A subsequent "map" request is necessary to tell the window which picture to display (if not specified in the "create" request). "Map" can be re-issued any number of times.

Other requests define pop-up menus and soft-keys or change the contents of specific frame bars. A window is always opened on top of any other window(s) it overlaps. Depending upon the background specified for the relevant picture, underlying windows may or may not be visible.

The "delete" request unmaps the window and causes the window manager to exit. The owner of the window (if different from the sender of "delete") is sent a "status" message as a result.

The following are the various Windowing Requests and the types of information which may be associated with each:

*MAP* is used to map or re-map a picture to the window, and it may contain information specifying a connection to the desired picture; and the coordinates in the picture of the upper left corner of the "viewport", which will become [0,0] in the window's coordinate system.

*UNMAP* is used to disconnect a window from its picture, and it contains no parameters,

*QUERY* is used to get a window's status, and it contains no parameters.

*[,]* is used to start/ed a "batch", and the presence of a first symbol causes all updates to be postponed until a second symbol is received (batches may be nested up to 10 deep).

*MENU* defines a menu which will "pop-up" when a menu key is pressed, and it may contain information specifying which menu key will activate the menu; the name of the menu in the Human Interface library (if omitted, "list" must be given); and a name which is returned in the "click" message.

*KEYS* defines "pseudo-function" keys for the window, and it may contain information specifying the name of a menu in the Human Interface library; a list of key-names; and a name to be returned in the "click" message.

*ADD, COPY, ERASE, REPLACE* control elements in a frame bar, and they may contain information specifying the type of bar (e.g. title, palette, general, etc.); a list of picture elements for "add" and "replace" (omitted for "copy" and "erase"); and a tag identifying a particular element (not applicable to "add").

*HIGHLIGHT, INVERT, HIDE, BLINK* change attributes in a frame bar element, and they may contain

22

information specifying a set/clear attribute; the type of bar; and a tag identifying a particular element in the bar.

The following are the various Windowing responses and the types of information which may be associated with each:

*STATUS* describes the current status of the window, and it may contain information specifying a connector to the window; specifying the originator (i.e. "window"); an original message identifier, if applicable; the subsystem; the mane of the window; a connector to the window's console manager; the position of the window on the screen; the pane size and location; a connector to the picture currently mapped to the window; and the size and position of the view.

*BAR* represents a request to a "copy" request, and it may contain information specifying the type of bar (e.g. title, palette, general, corner box, etc.); and a list of picture elements.

*CLICK* describes a user-initiated event on or inside the window, and it may contain information specifying what event (e.g. inside a pane, frame bar, corner box, pop-up menu, function key, etc.); a connector to the window manager; a connector to the window's Console Manager; the name of the window; a menu or function-key name; a connector to the associated picture manager; a label from a menu or palette bar item or from a function key; the position of the cursor where the action occurred; the action performed by the user; a copy of the elements at the particular position; the first element's number; the first element's identifier; a copy of the character typed or a boundary indicator or the completion character; and other currently selected elements from all other windows, if any.

## HI - DETAILED DESCRIPTION

### USER-ADJUSTABLE WINDOW

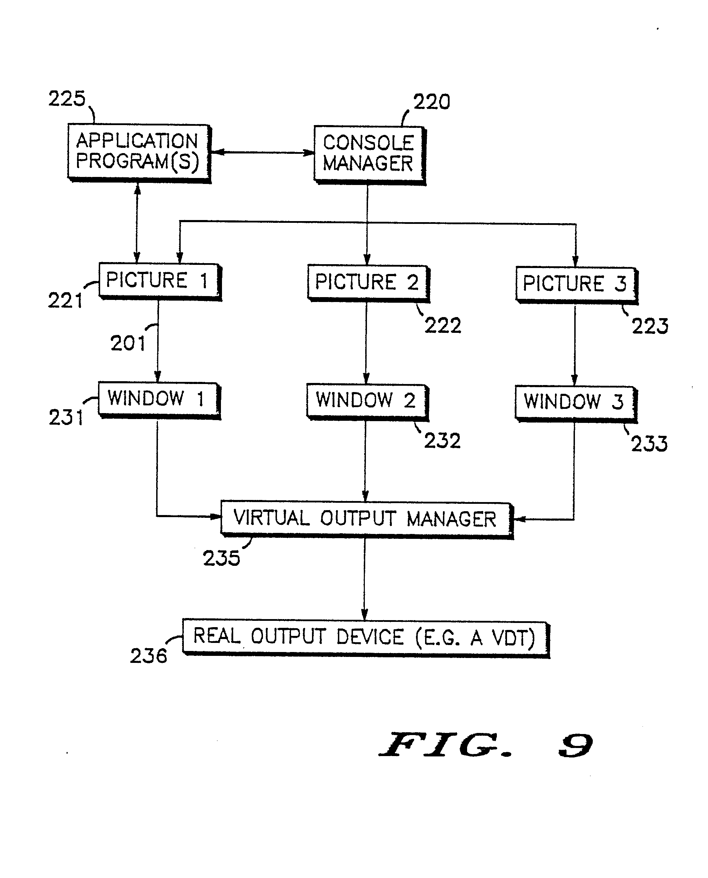

Figure 9 illustrates the relationship between pictures, windows, the console manager (which creates and destroys the objects), and a virtual output manager (which performs output to physical devices). In response to one or more application programs 225, the console may also create at least one window for viewing a portion of each picture. The virtual output manager 235 translates the virtual output corresponding to each window into a form suitable for display on a "real" output device such as a video display terminal.

One or more of windows 231-233 can be displayed simultaneously on output device 236. While windows 231-233 are shown to display portions of separate pictures, they could just as well display different portions of single picture.

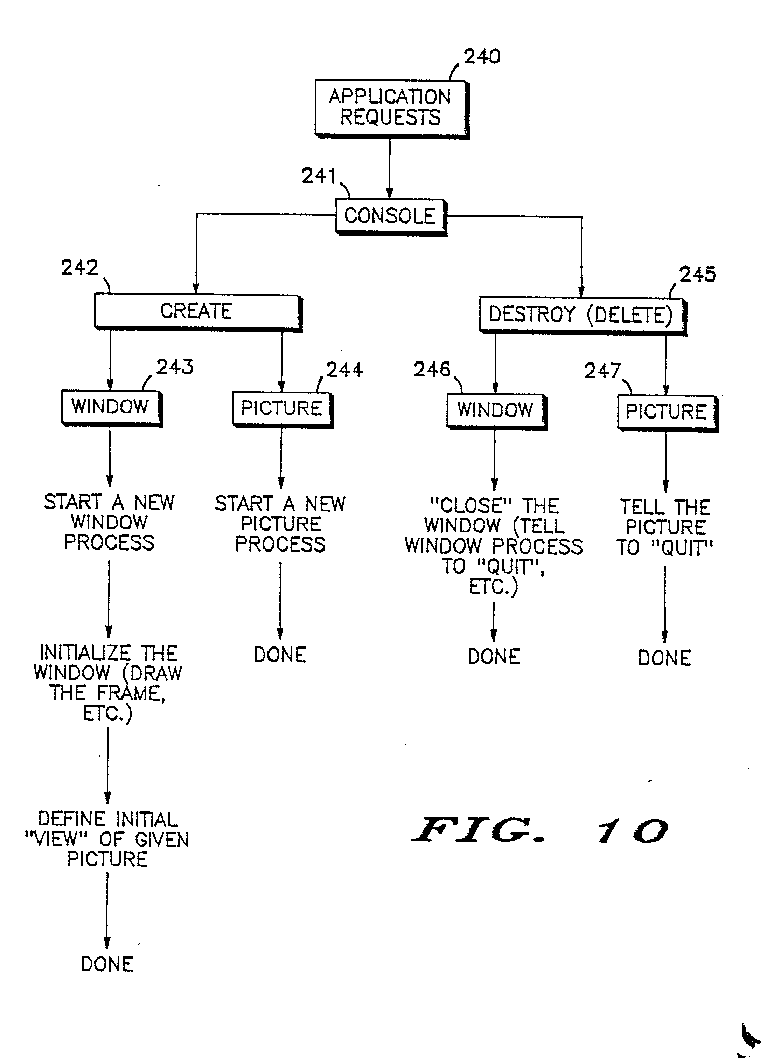

FIG. 10 shows a flowchart illustrating how an application program interacts with the console manager process to create and/or destroy windows and pictures. In response to application requests 240 the console manager 241 can proceed to an appropriate program module 242 to create a picture 244 or a window 243, or to module 245 to destroy a window 246 or a picture 247.

If the console manager is requested to create a new window 234, it first starts a new window process. Then it initializes the window by drawing the frame, etc. Then it defines the initial view of the given picture.

If the console manager is requested to create a new picture 244, it starts a new picture process.

If the console manager is requested to delete a window 246, it closes the window.

If the console manager is requested to delete a picture 247, it tells the picture to quit.

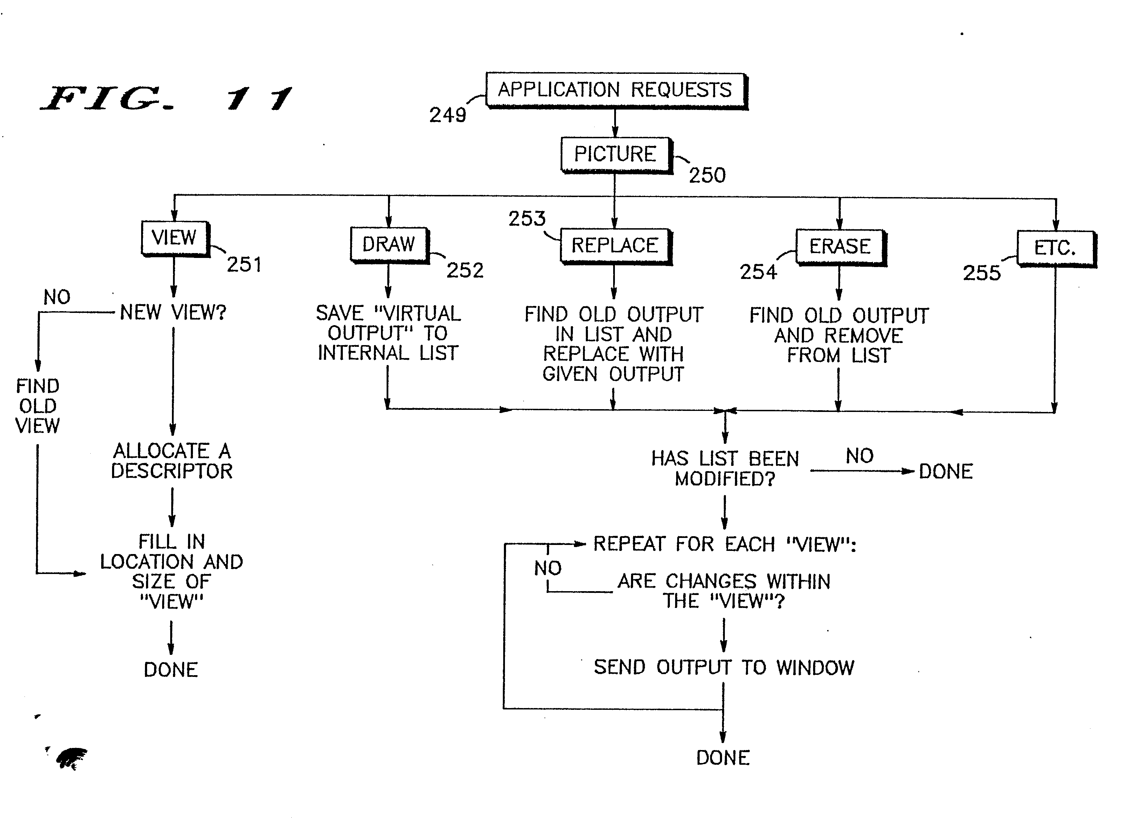

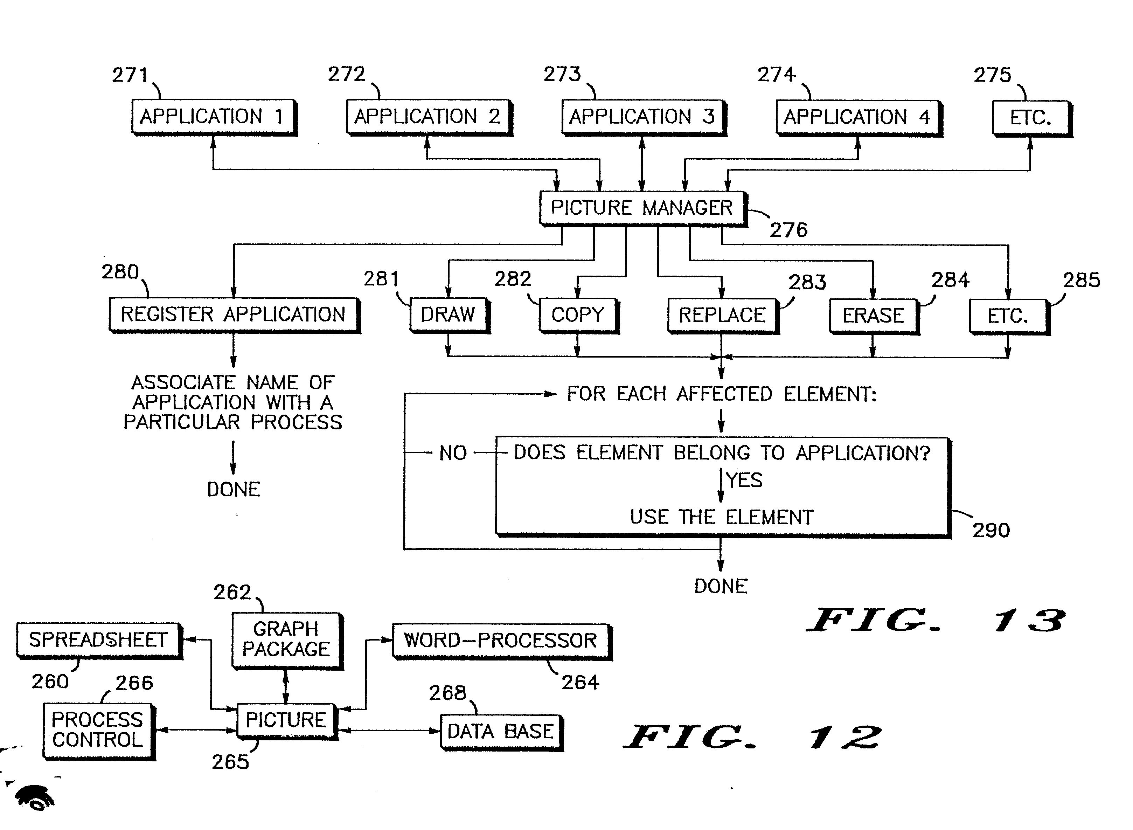

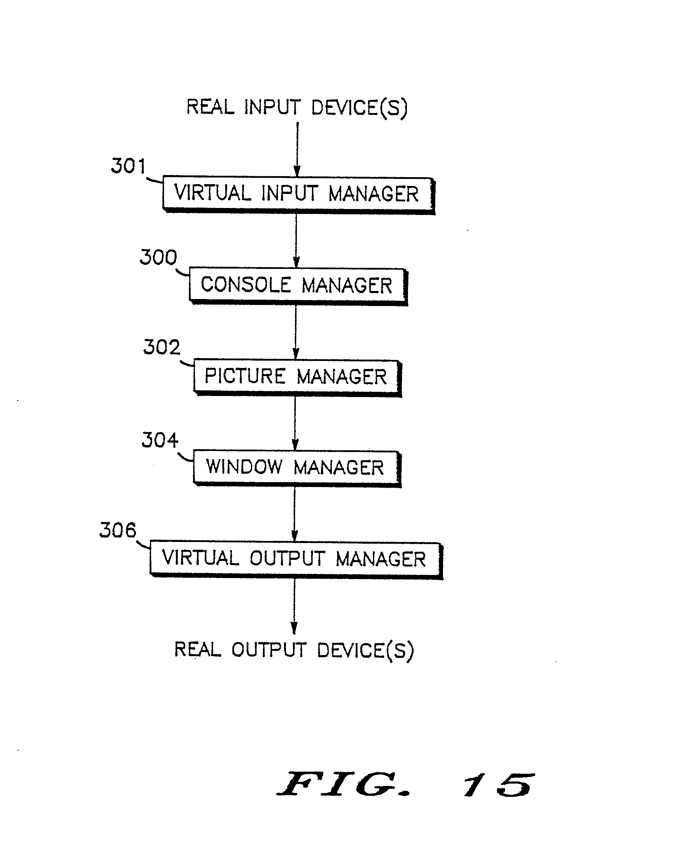

FIG. 11 illustrates an operation to update a picture and see the results in a window of selected size, in accordance with a preferred embodiment of the present invention. The operation performed in FIG. 14 corresponds to that indicated by line segment 201 in FIG. 12.

In response to a request from an application 249, the picture manager 250 may perform any of the indicated update actions. For example, the picture manager 250 may change the view of the picture by allocating a descriptor and accordingly filling in the location and size of the view.

Or the picture manager 250 may draw, replace, erase, etc. picture elements appropriately as requested. It repeats the requested operation for each view.

### PICTURE - LIVE DATA FROM MULTIPLE APPLICATIONS

FIG. 12 illustrates how a single picture can share multiple application software programs. A picture 265 can include any number of independent applications, such as. spread-sheet 260, graphic package 262, word-processing 264, data base management 268, and process control 266, appointment calendar (not shown), etc. Each application attaches meaning to the particular organization of picture elements under its control, by interpreting them as a spreadsheet, graph, a page of formatted document, etc.

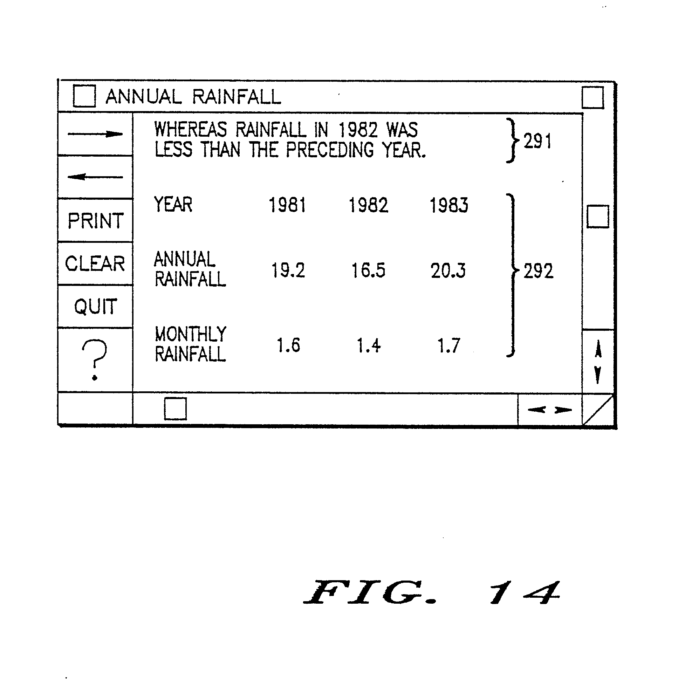

FIG. 13 illustrates how the picture manager multiplexes several applications to a single picture. Picture manager 276 keeps track of the picture elements belonging to each application 271-275. Any requests it receives to access or modify the picture are checked against the list of constituent applications. Picture elements not belonging to the application making the current request are simply skipped.

Picture manager 276 can perform draw, copy, replace, erase, and/or other operations upon the appropriate picture elements of applications 271-275.

The Human Interface allows multiple applications to share a single picture, so that spreadsheets, graphs, and text (for example) can be combined to suit a particular user. For example, FIG. 14 illustrates the live integration of two applications on a single screen. Portion 291 shown on the screen represents text from a text editing or word-processing application. Portion 291 is fully editable by the user.

Portion 292 represents a portion of a spread-sheet application, and it too is fully modifiable by the user. The modification of the contents of any cell of the spread-sheet will reflect appropriate changes to the portion 292 being displayed on the screen illustrated in FIG 14.

Regarding the picture comprising the word-processing and spread-sheet applications shown in FIG. 14, neither of the applications is aware of the existence of the other, nor is it aware of, or affected by, the fact that the picture is being shared.

Each application operates as if it were the sole user of the picture. The net effect (on an output device, such as a VDT screen) is a single, cohesive visual image, updated dynamically by an or all of the relevant applications, totally independently of each other.

## INPUT·OUTPUT DEVICE INDEPENDENCE

In the present invention all system interaction with the outside world is either through "virtual input" or "virtual output" devices. The system can accept any form of input or output device. The Human Interface is constructed using a well-defined set of "virtual devices". All Human Interface functions (windowing, picture-drawing, dialog management, etc.) use this set of devices exclusively.

These virtual input devices take the form of "keys" (typed textual input"; "position (screen coordinates); "actions" (Human Interface functions such as "open window", etc.) "functions" (user-defined actions); and "means" (pop-up lists of choices).

Virtual output devices produce device-independent output: text, lines, rectangles, polygons, circles, ellipses, discrete points, bit-mapped symbols, and bit-mapped arrays.

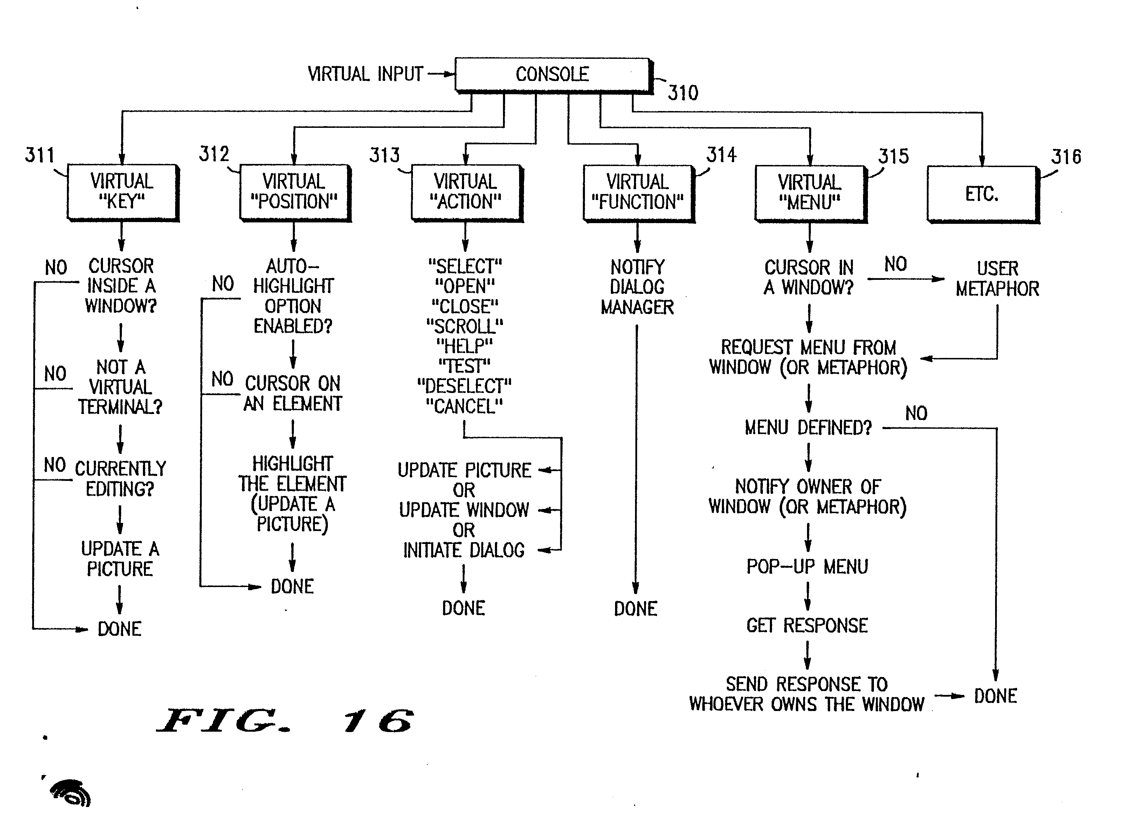

FIG. 15 shows how the console manager operates upon virtual input to generate virtual output. The lowest layer of HI software converts input from any "real" physical devices to the generic, virtual form, and it converts Human Interface output (in virtual form) to physical output.

Figure 15 shows the central process of the Human Interface, the console manager 300, dealing with virtual input and producing virtual output. Virtual input passes through the virtual input manager 301 is processed directly by the console manager 300, while output is passed through two intermediate processes - (1) a picture manager 302, which manipulates device-independent graphical images, and (2) a window manager 304, which presents a subset (called a "view") of the overall picture to the virtual output manager 306.

Any number of physical devices can be connected to the Human Interface and can be removed or replaced dynamically, without disturbing the current state of the Human Interface or of any applications using the Human Interface. In other words, the Human Interface is independent of particular I/O devices, and the idiosyncracies of the devices are hidden from the Human Interface.

FIG. 16 represents a flowchart showing how virtual input is handled by the console manager. The virtual input may take any of several forms, such as a keystroke, cursor position, action, function key, menu, etc.

For example, regarding the operations beneath block 311, if the virtual input to the console manager is keystroke, then the console manager checks to see whether the cursor is inside a window. If so, it checks to see whether it originated from a virtual terminal, and if not it checks to see whether an edit operation is taking place. If not, it updates the picture.

Regarding the operations beneath block 312, if the virtual input represents a cursor position, then the console manager checks to see whether the auto-highlight option has been enabled. If yes, it checks to see whether the cursor is on an element. If so it highlights that element.

Regarding the operations beneath block 313, the console manager uses any of the indicated actions to update a picture, update a window, or initiated dialog, as appropriate.

Regarding the operations beneath block 314, if the virtual input is from a function key, the console manager notifies the dialog manager.

Regarding the operations beneath block 315, if the virtual input represents a menu choice, the console manager checks to see whether the cursor is in a window. If not, it determines that it is on a user metaphor; if so, it requests a menu from the window. If the menu is defined, it notifies the owner of the window (or metaphor), activates a pop-up menu, gets a response, and sends the response to the window owner.

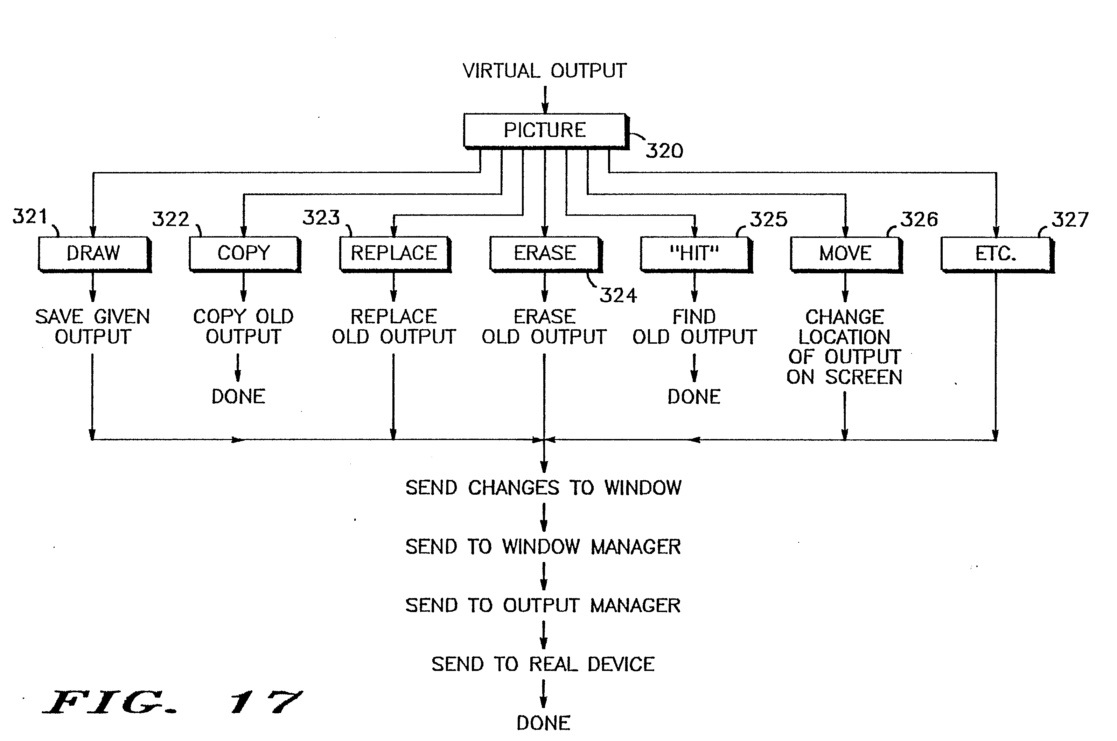

FIG. 17 represents a flowchart showing how virtual input is handled by the picture manager. The picture manager 320 accepts virtual output from the console manager and then, depending upon the type of operation, performs the requested function. For example, if the operation is a replace operation, the picture manager 320 replaces the old output with the new and sends the change(s) to the window manager. The window manager sends the change to the output manager, which in turn sends it to the real device.

*SCREEN - LIVE DATA IN MULTIPLE WINDOWS*

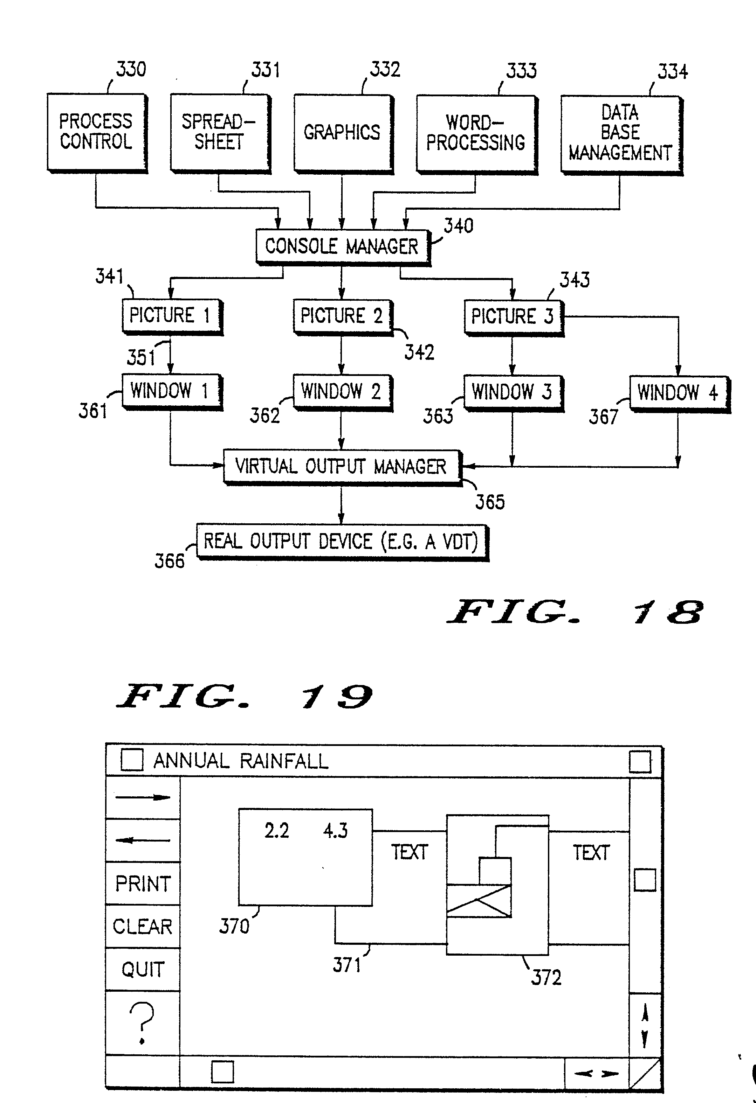

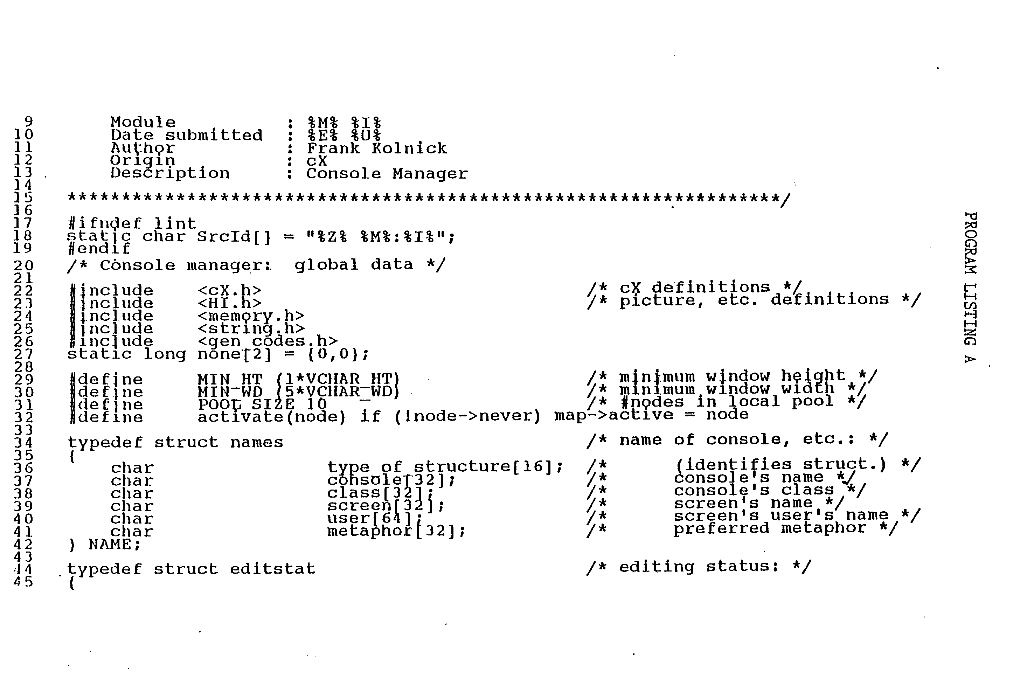

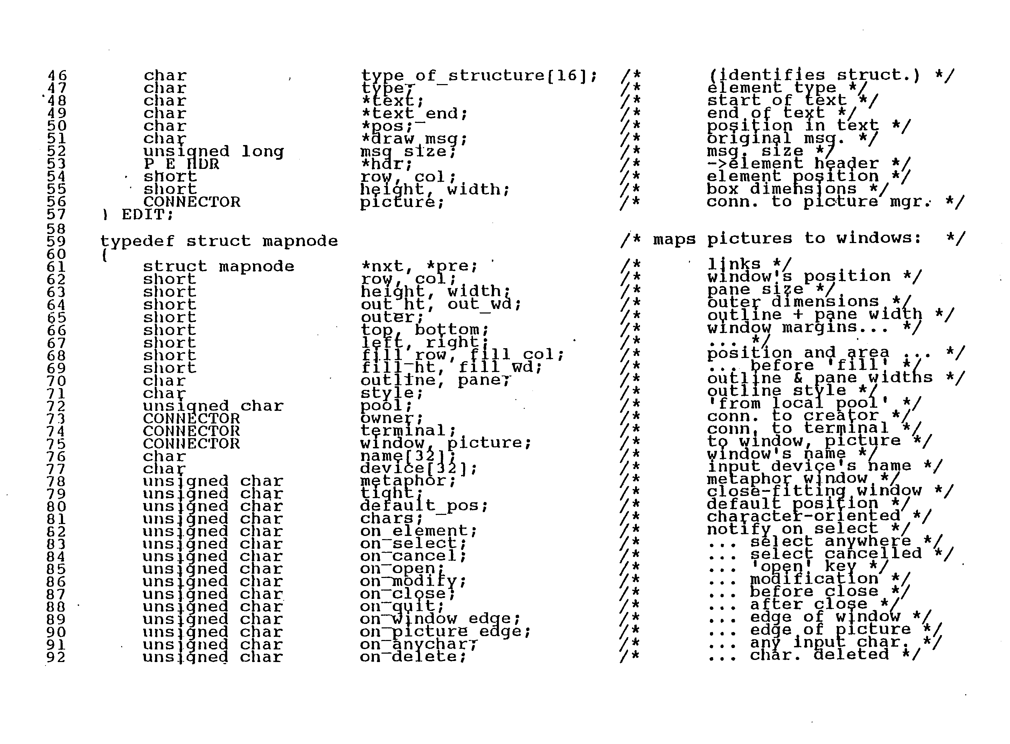

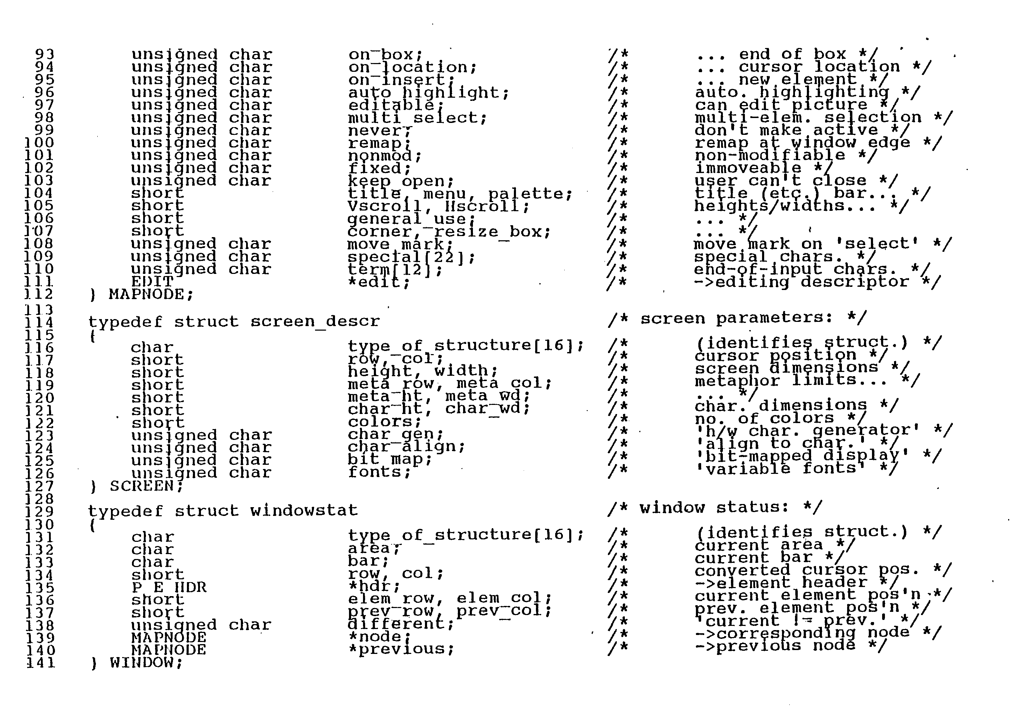

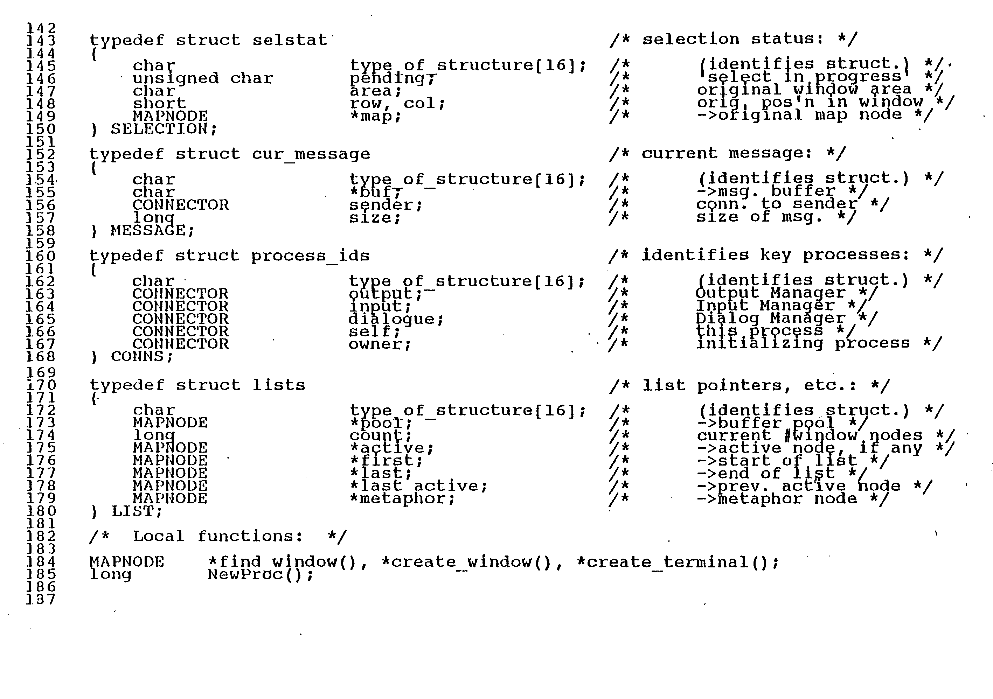

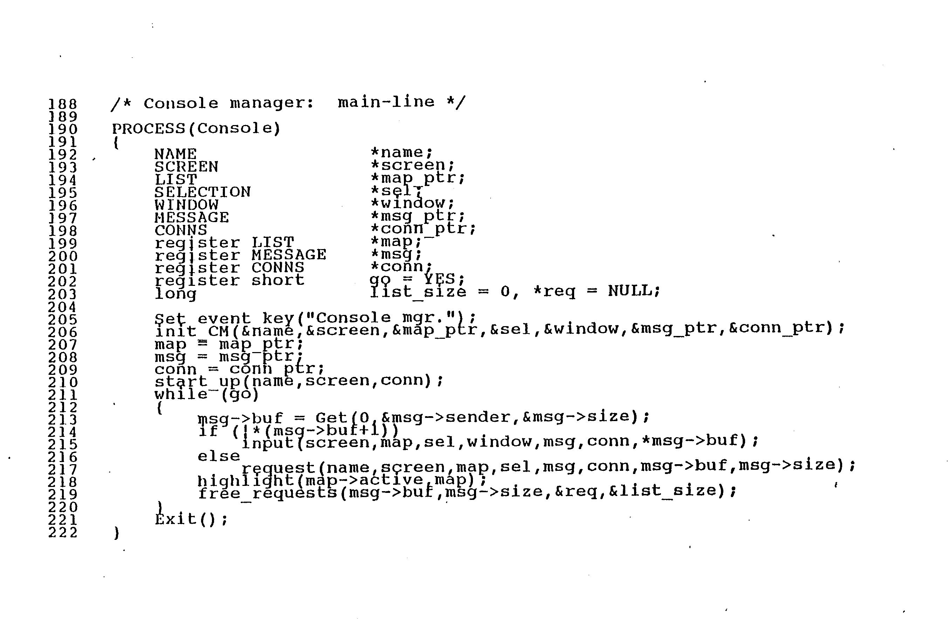

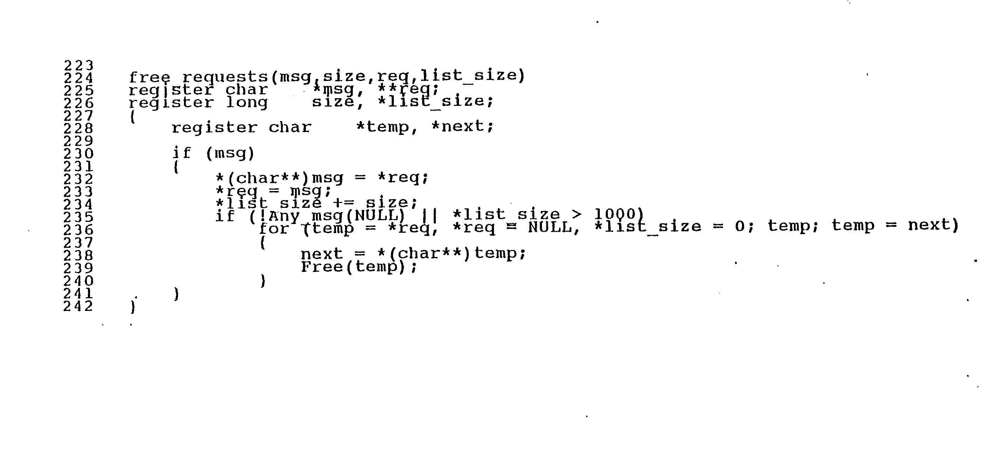

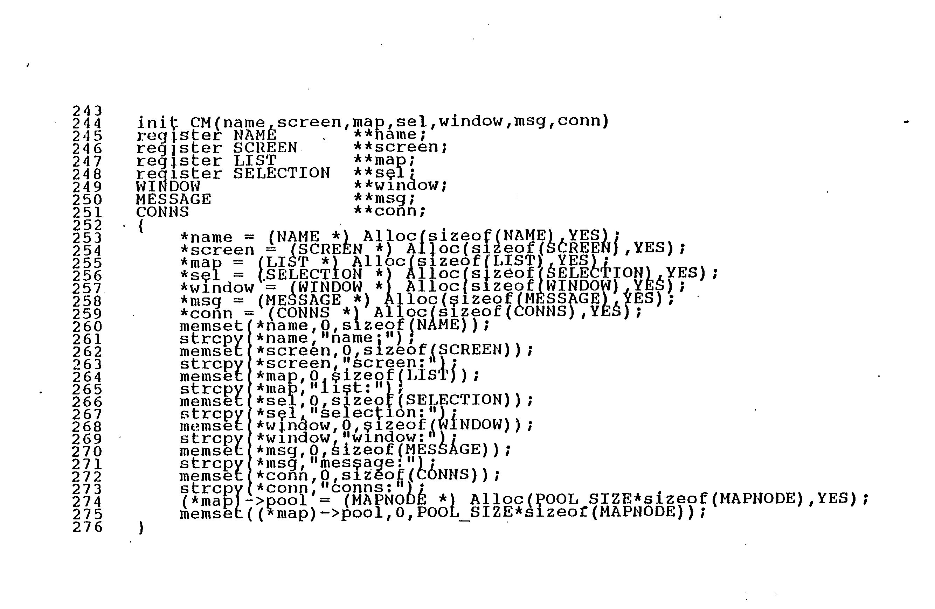

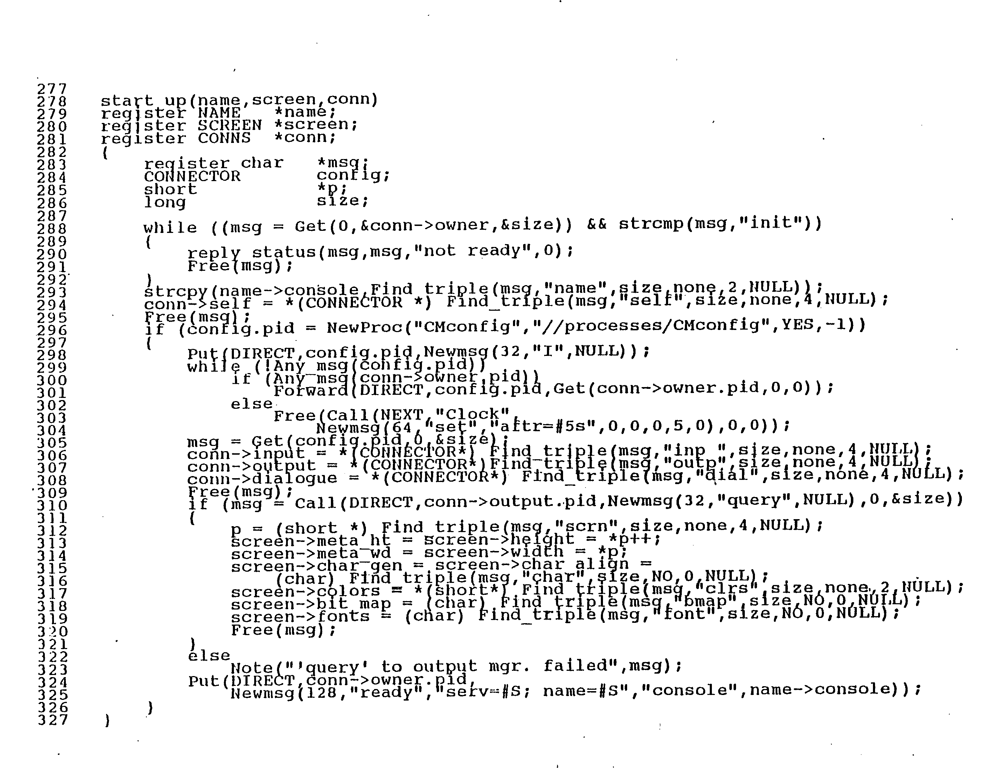

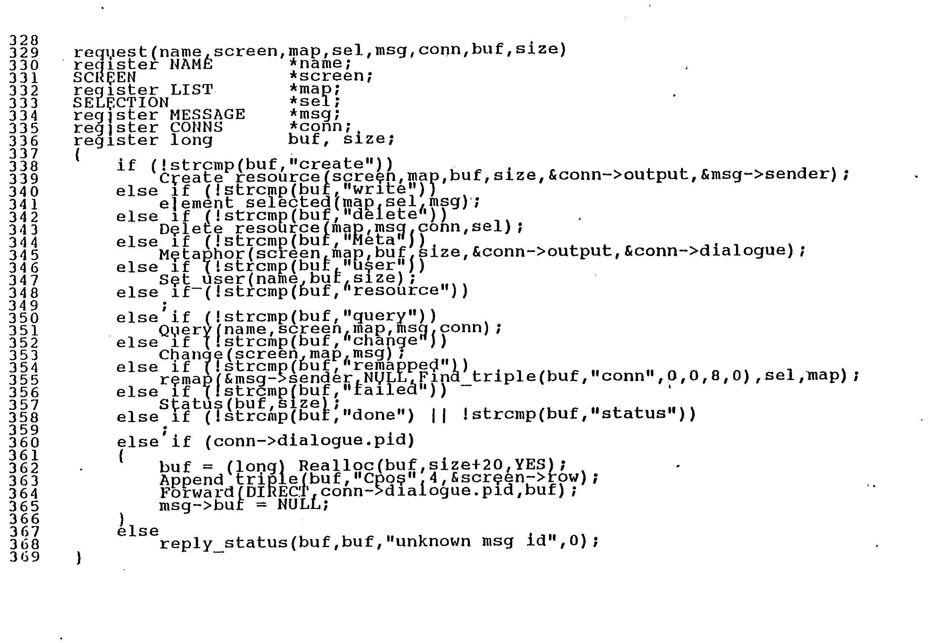

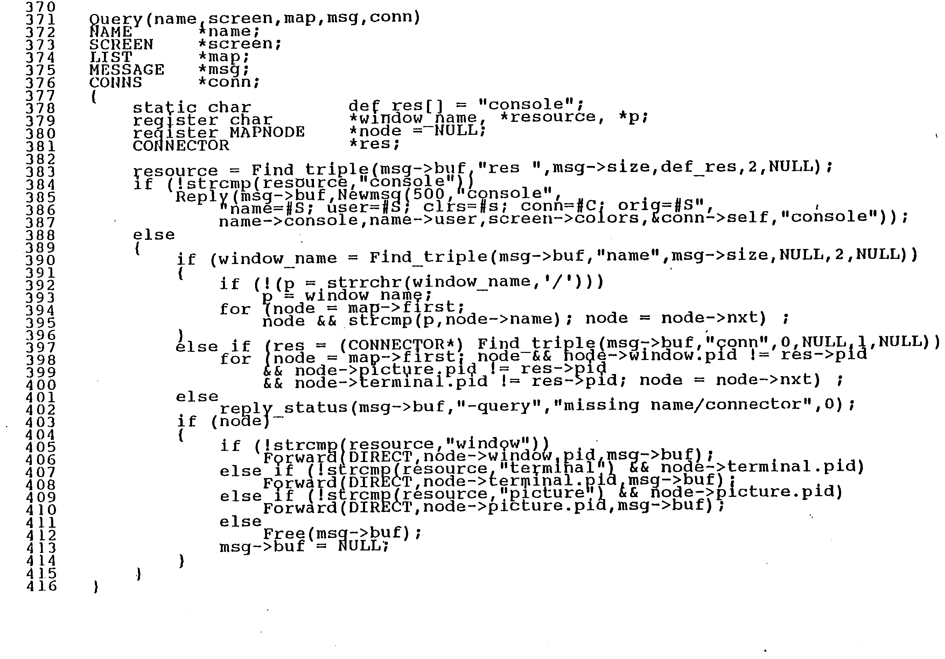

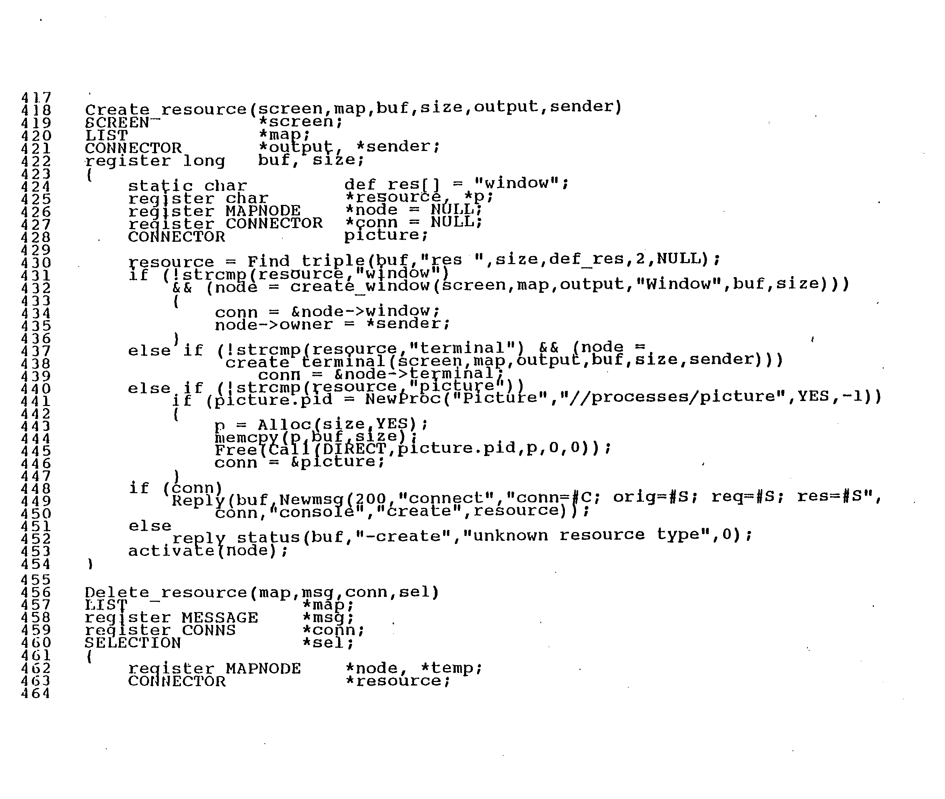

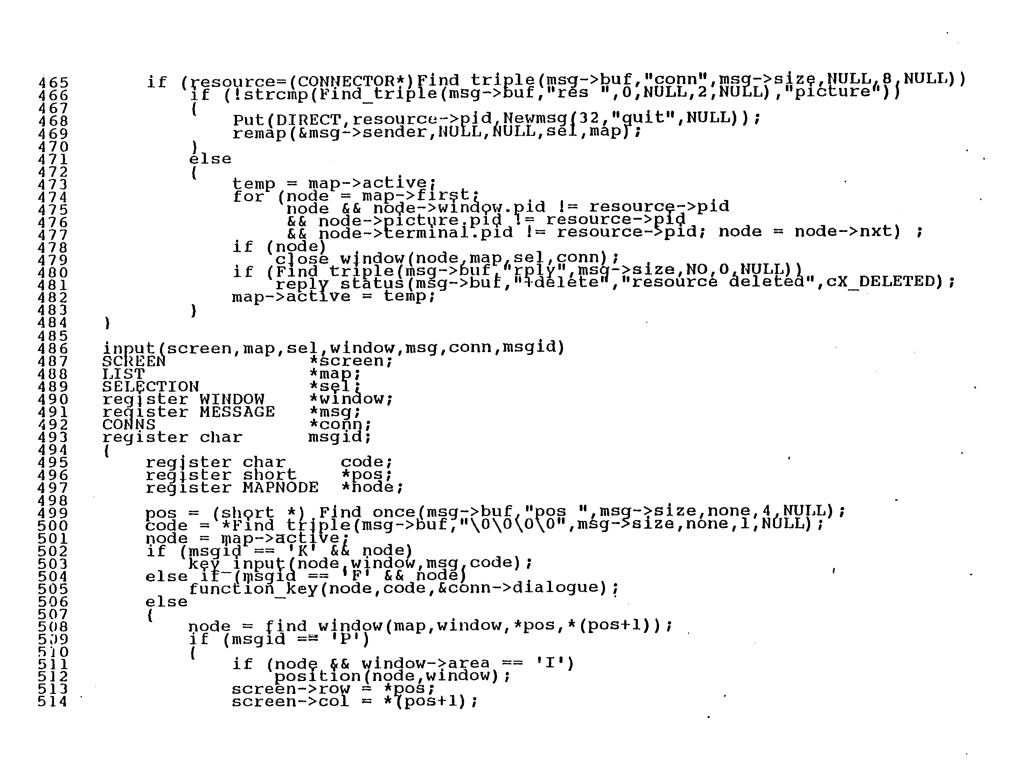

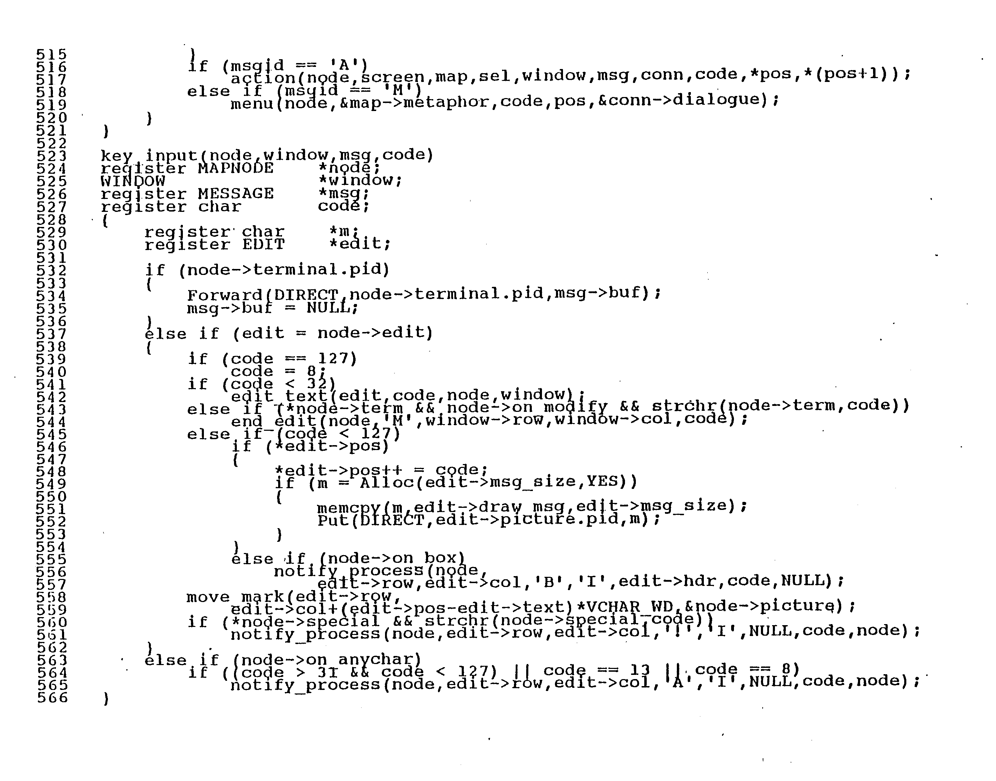

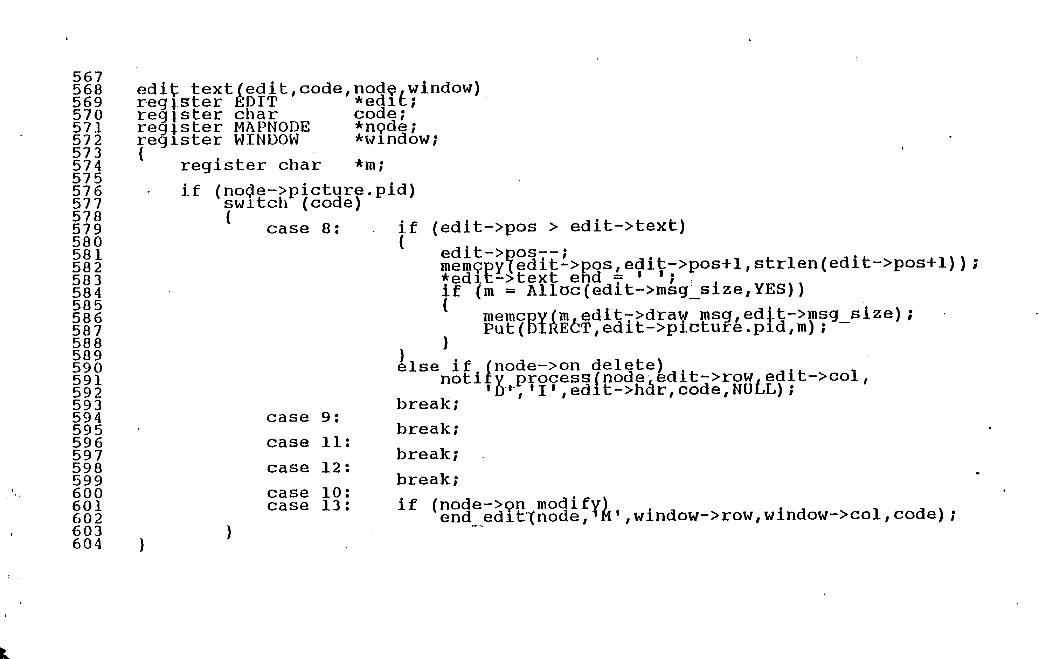

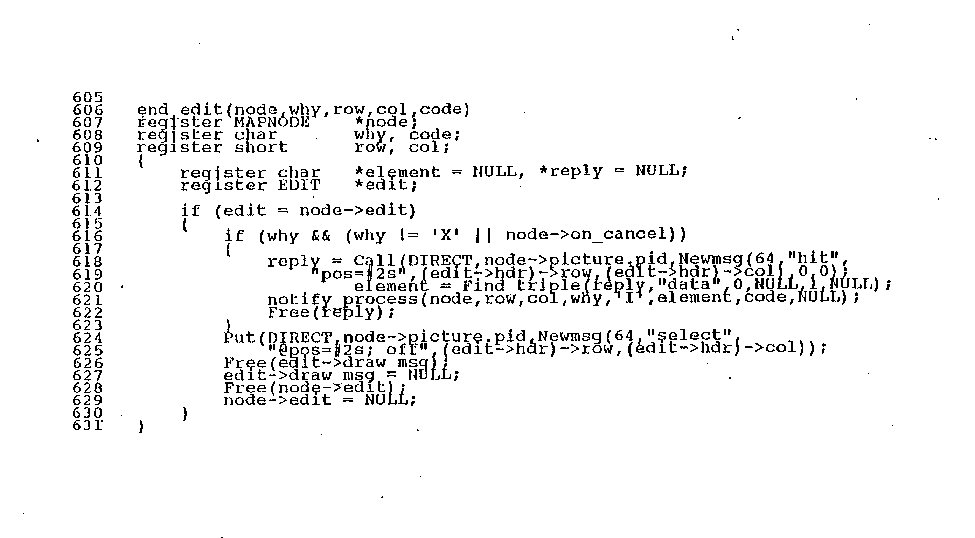

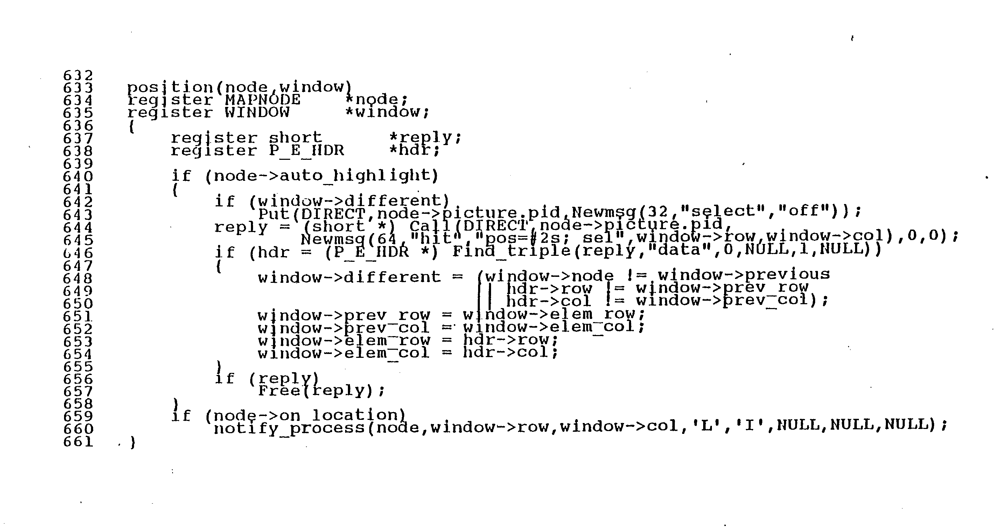

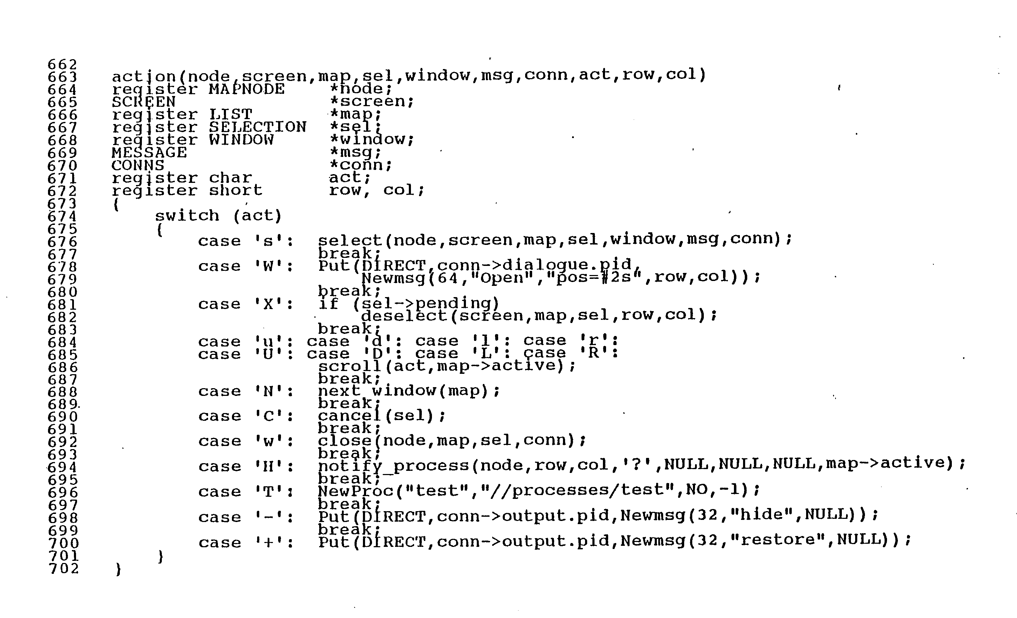

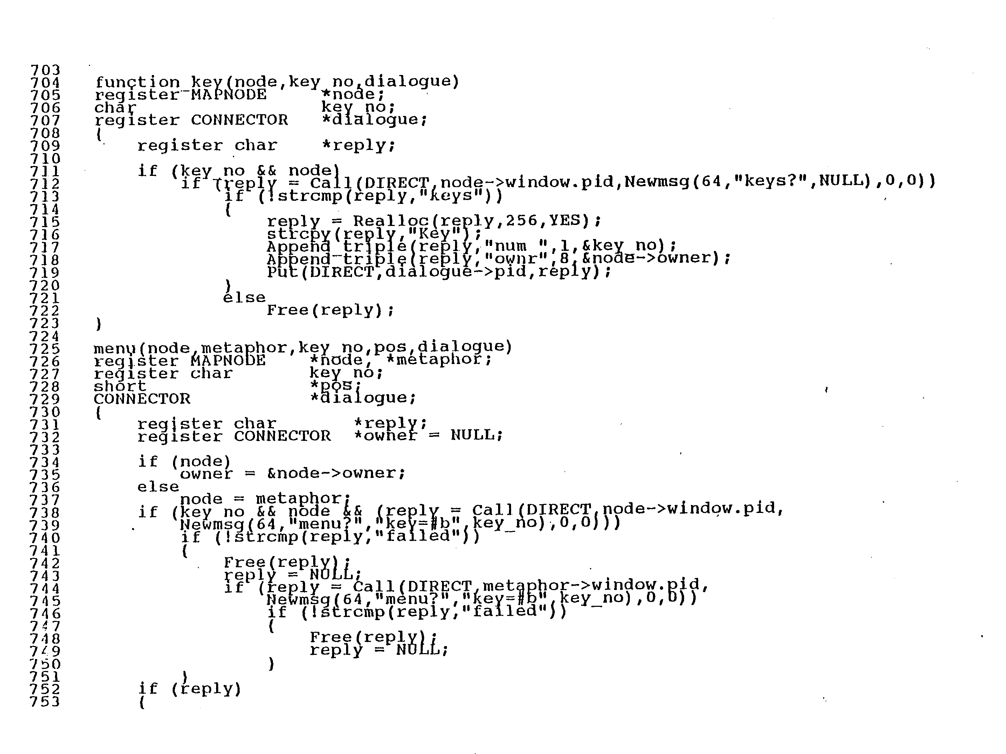

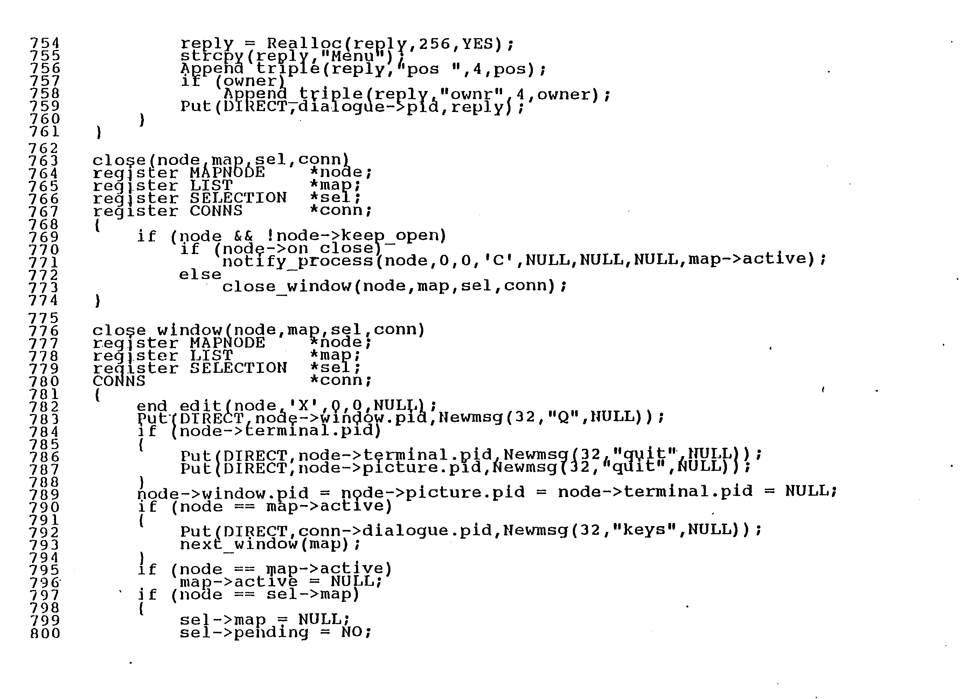

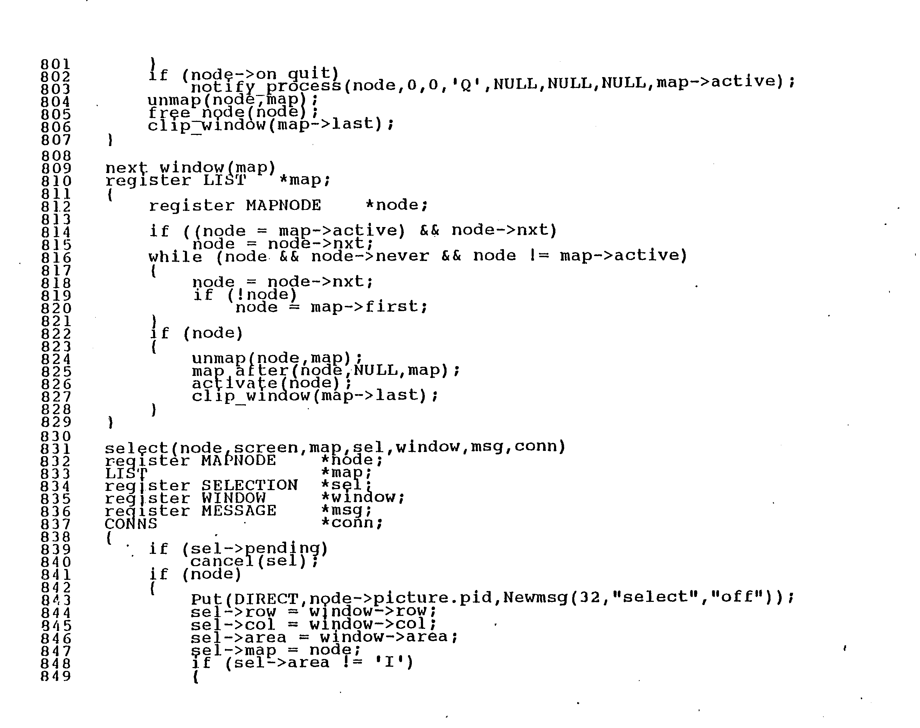

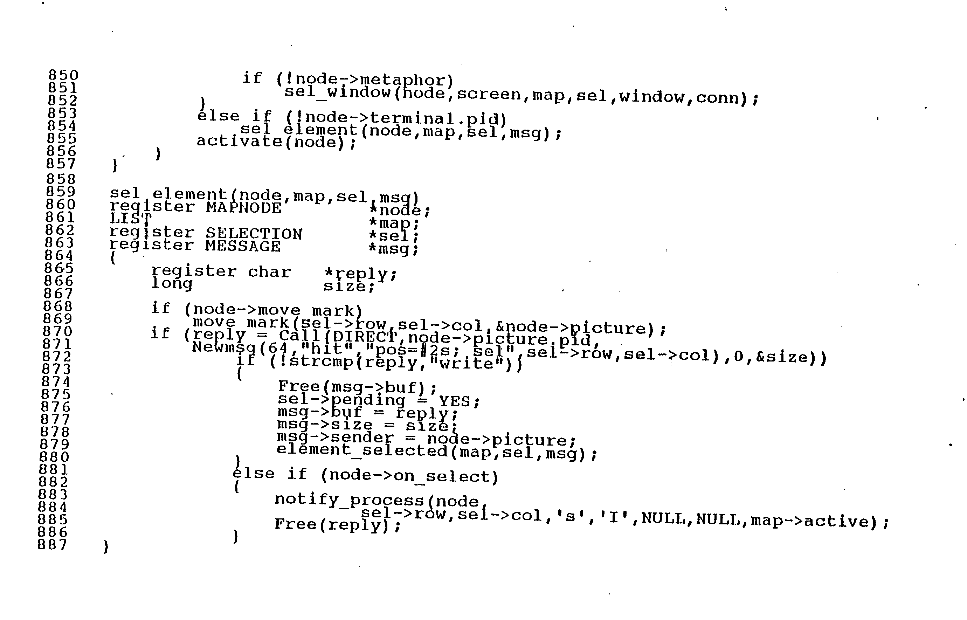

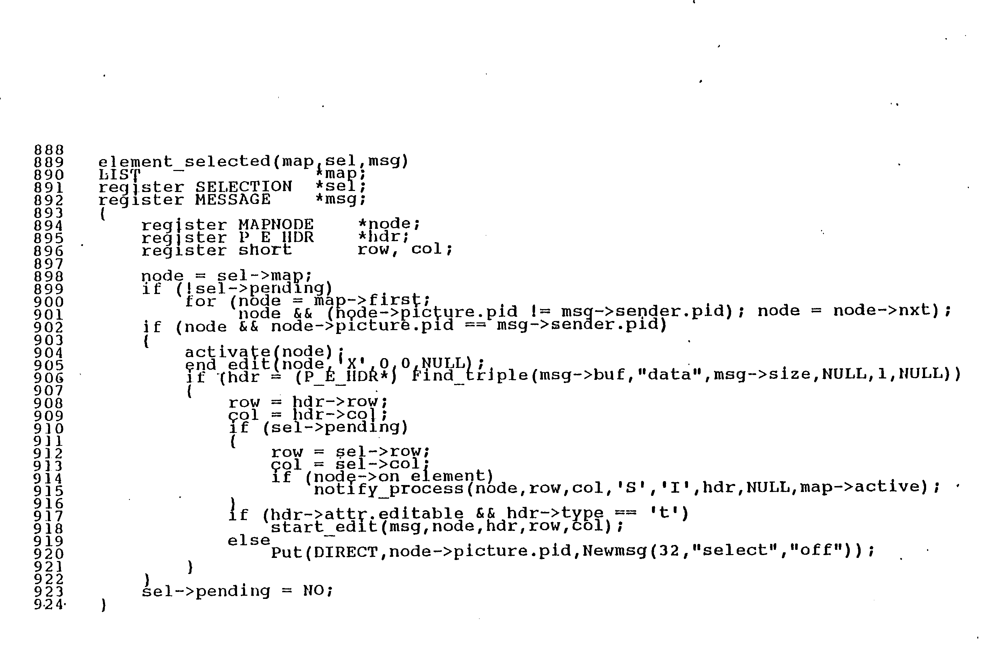

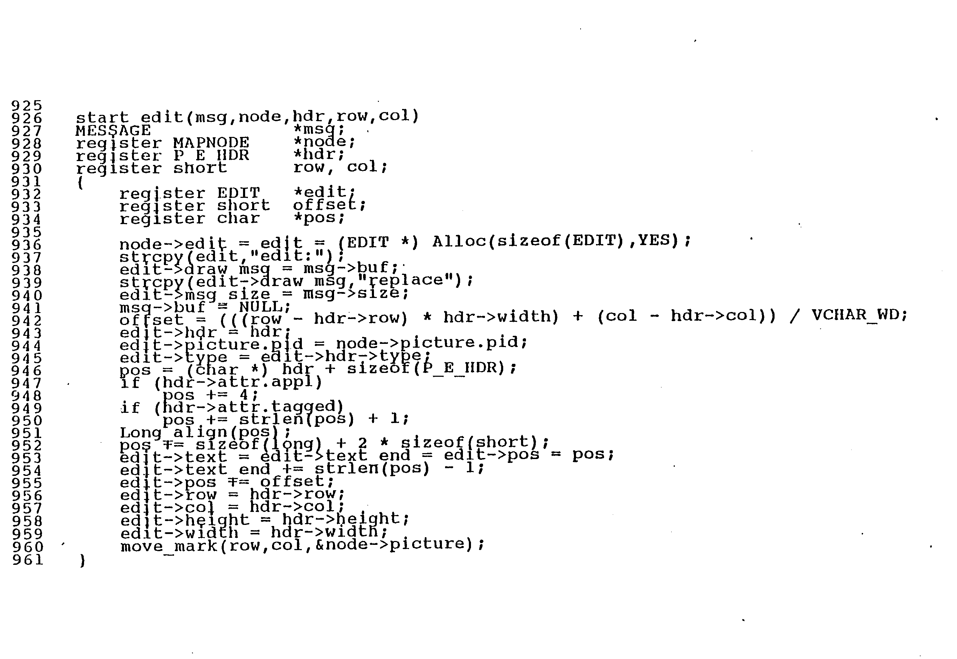

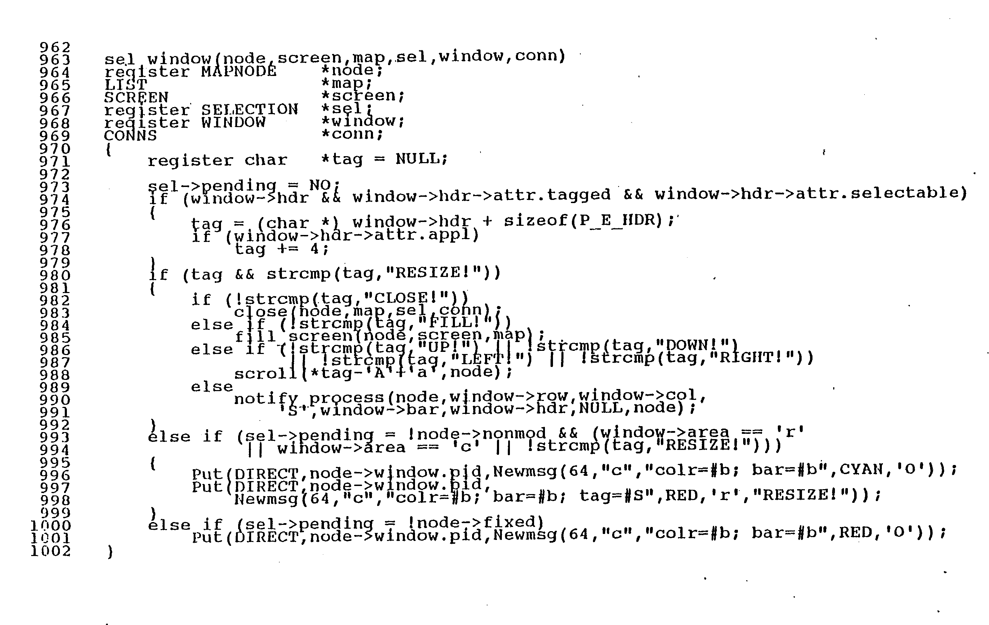

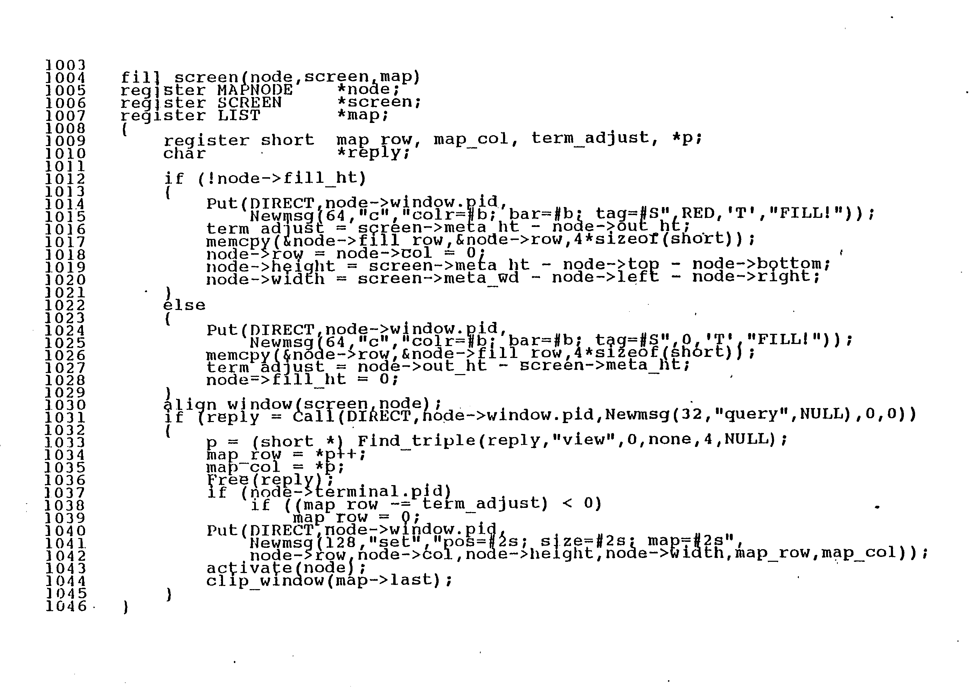

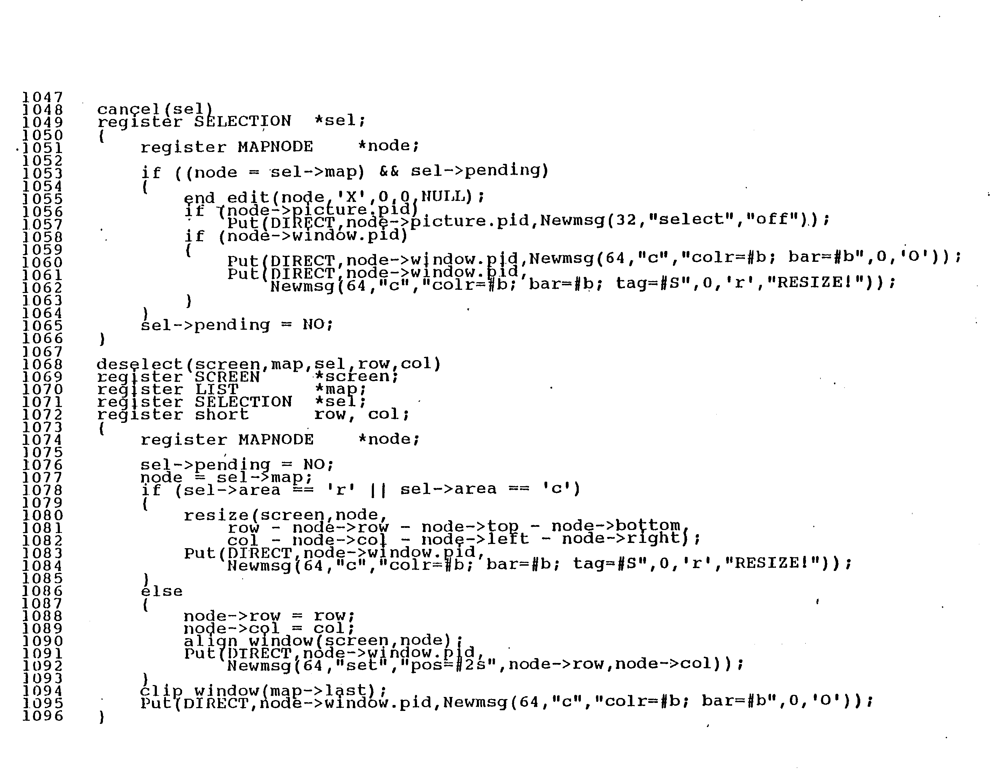

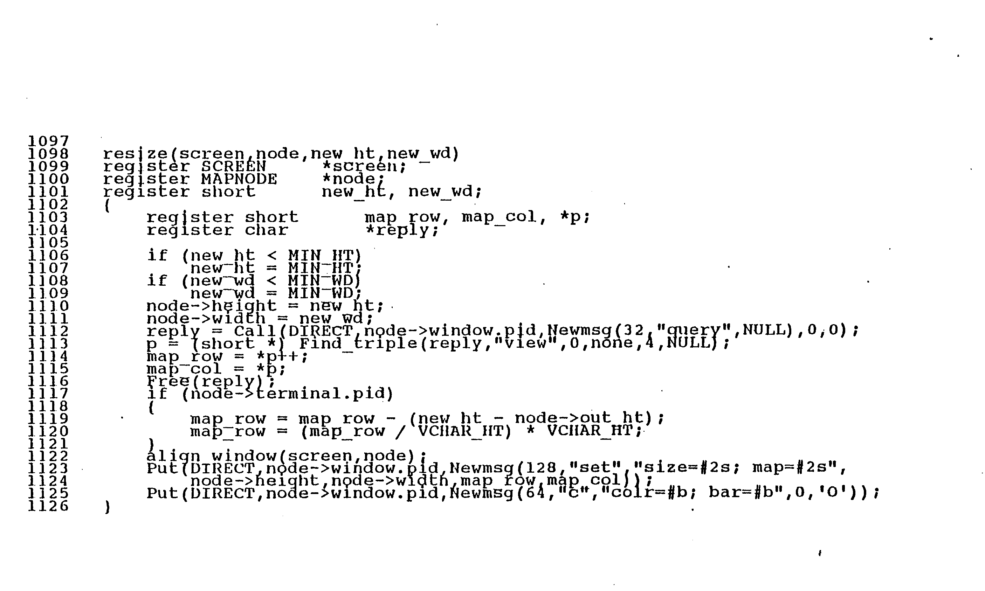

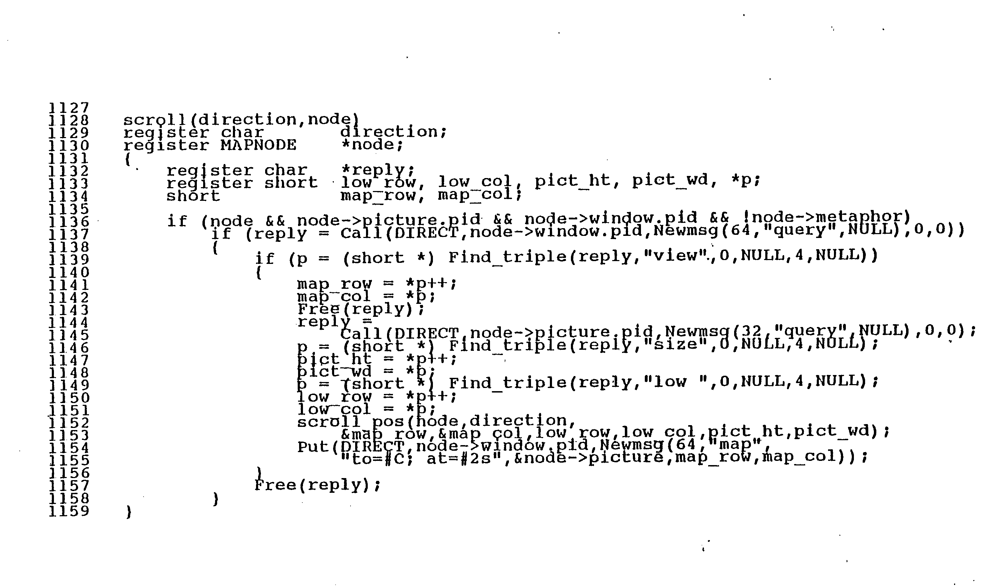

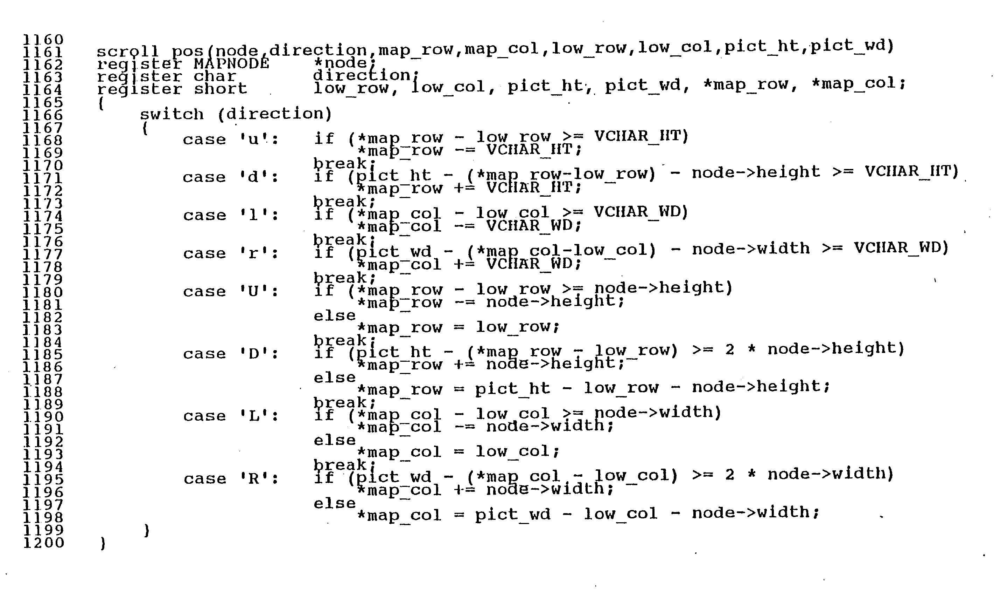

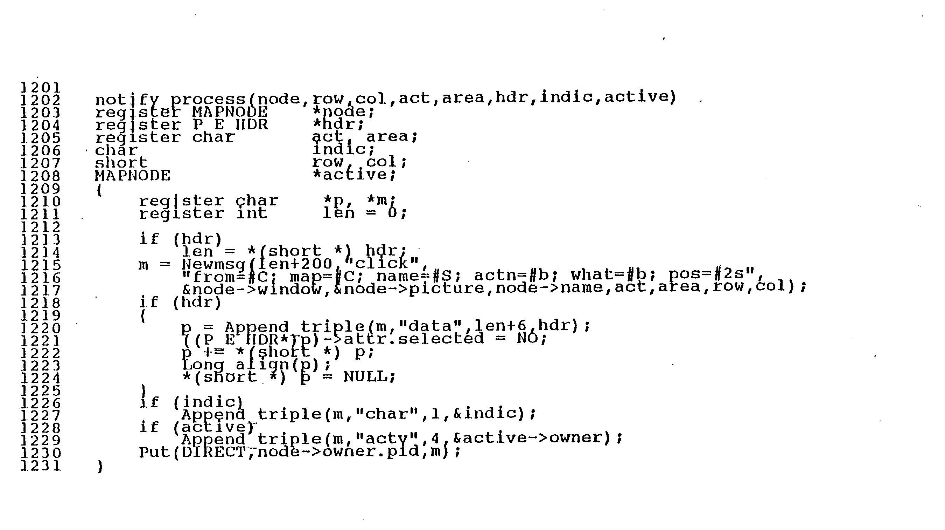

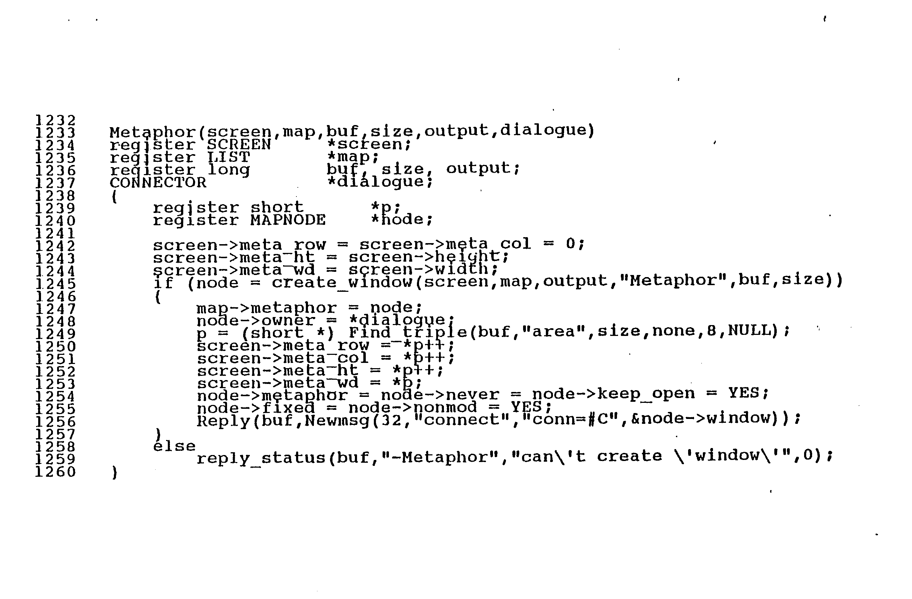

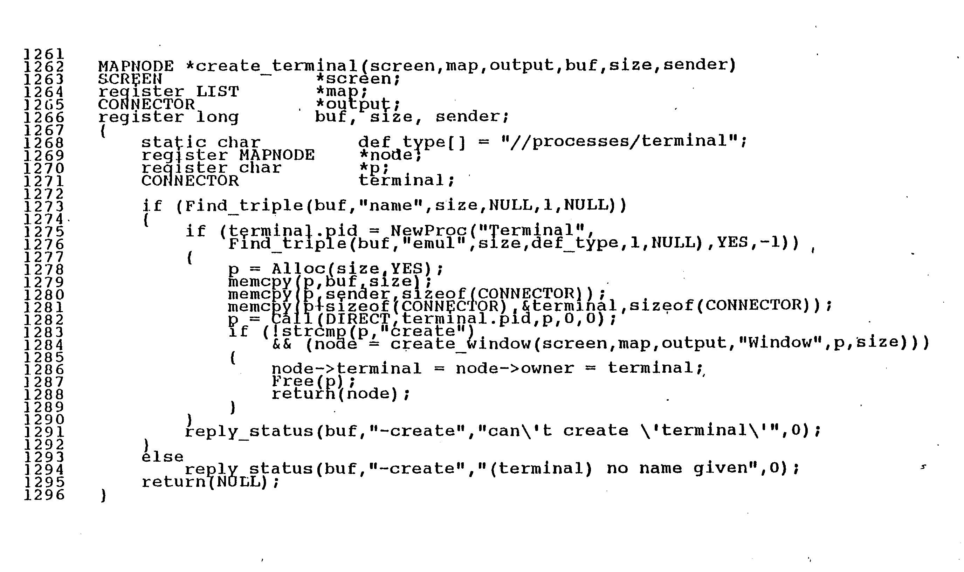

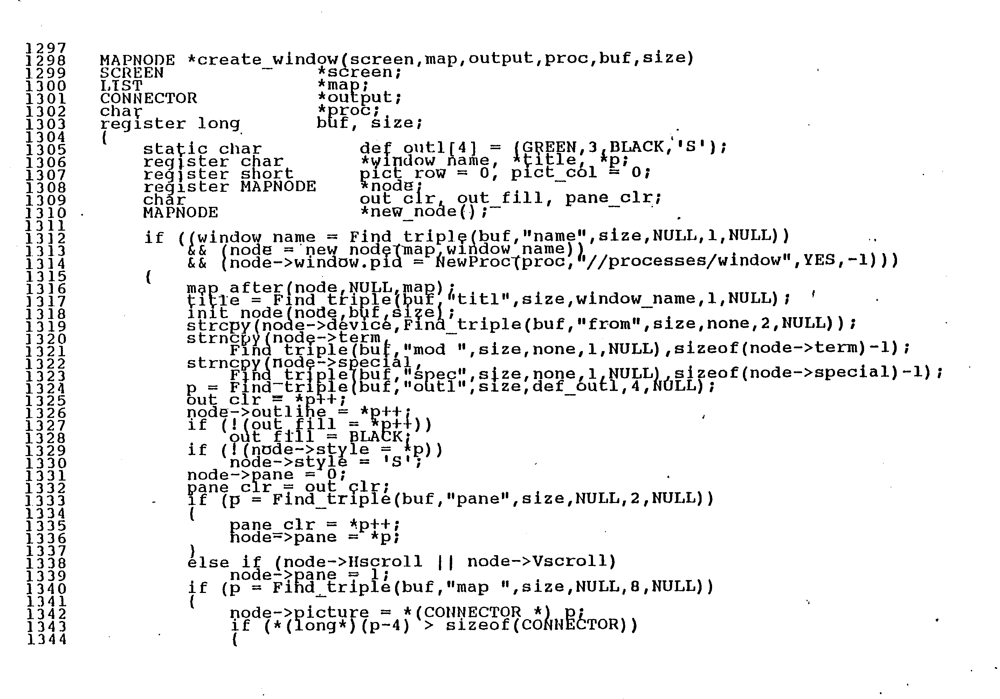

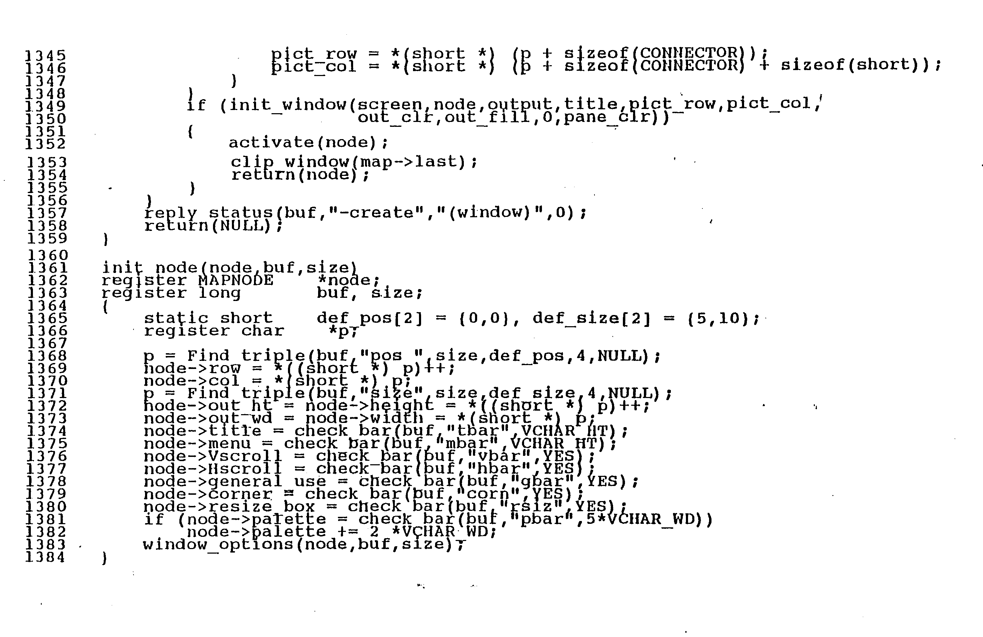

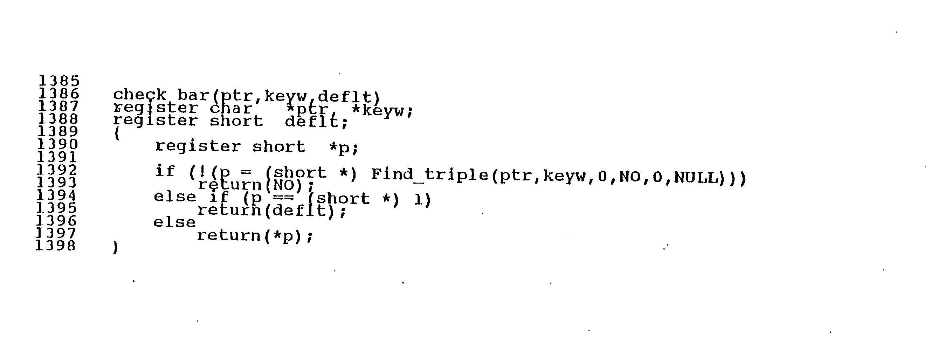

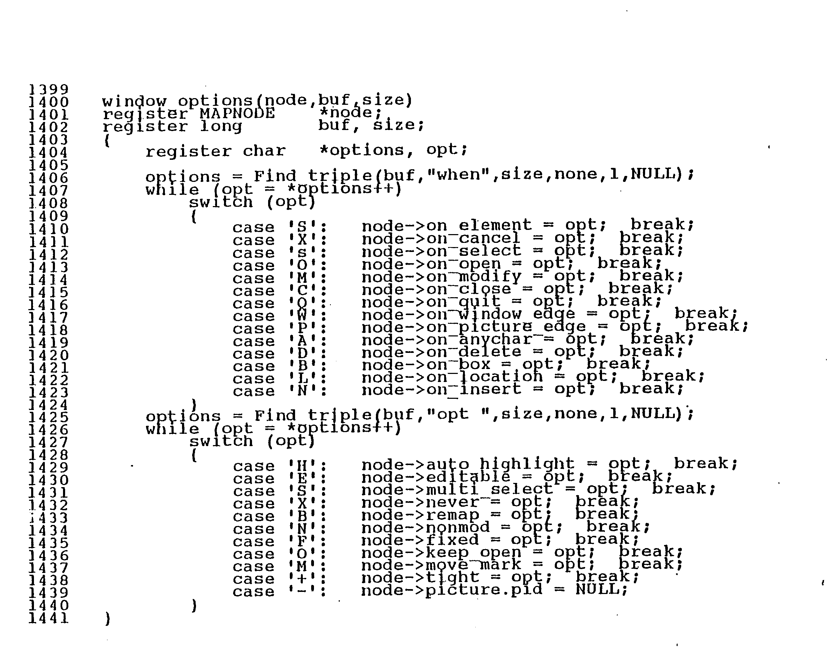

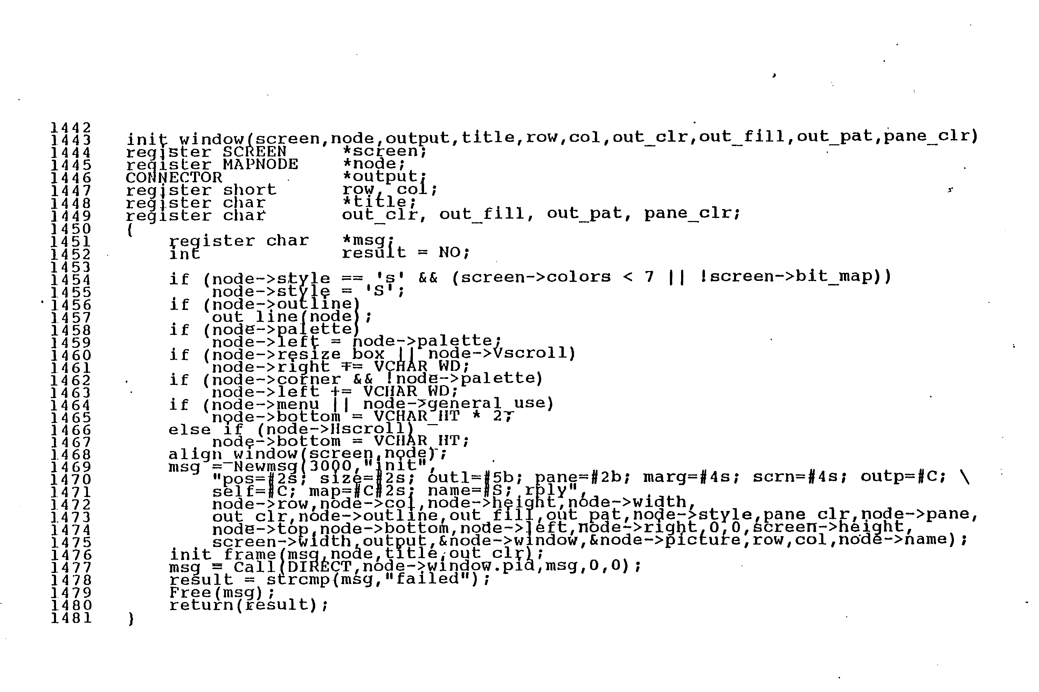

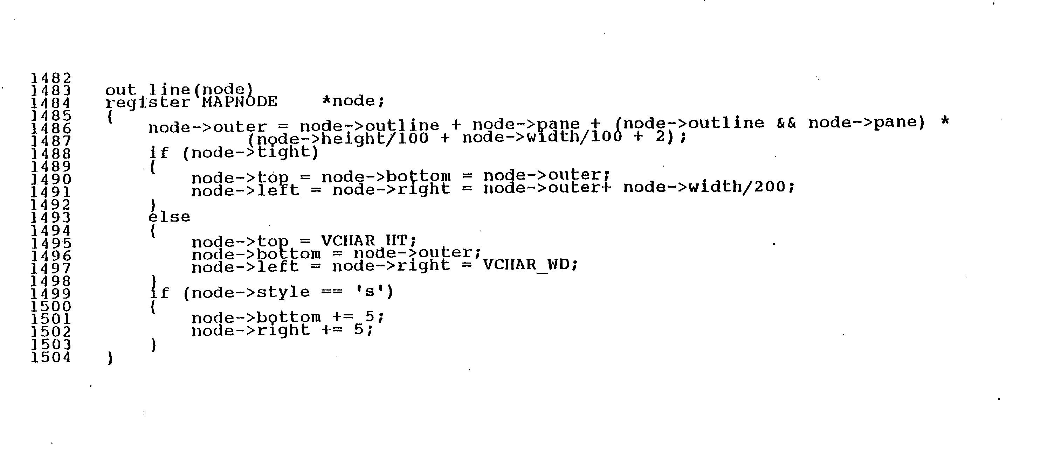

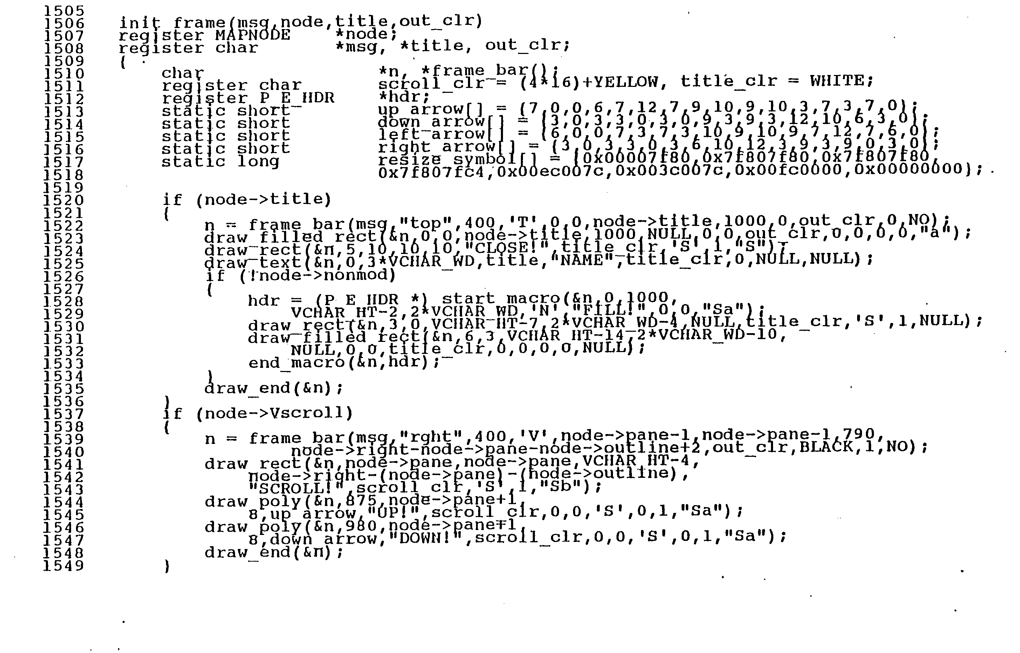

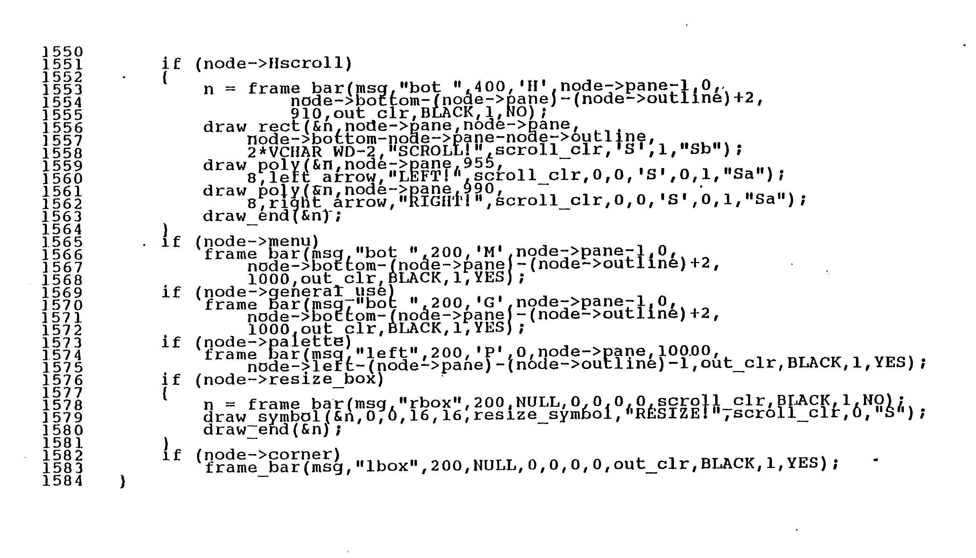

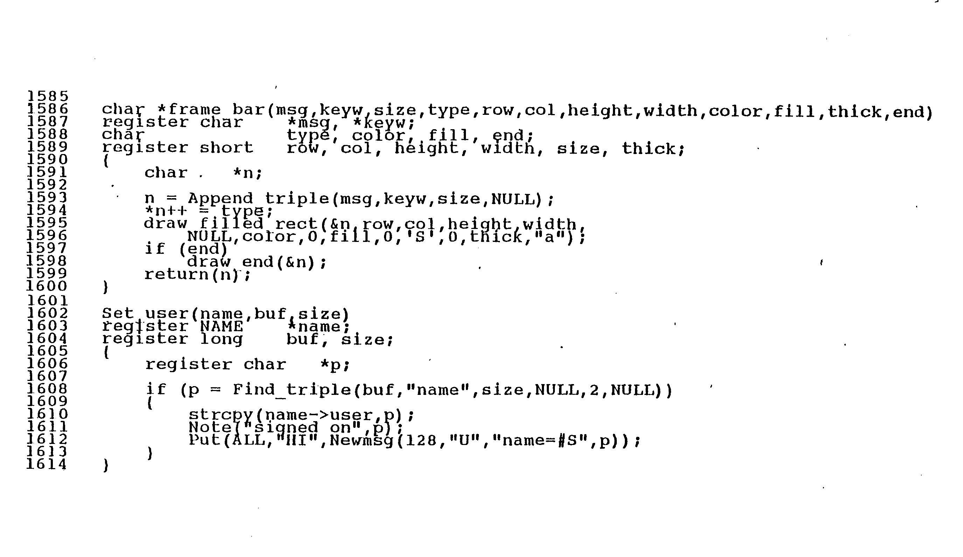

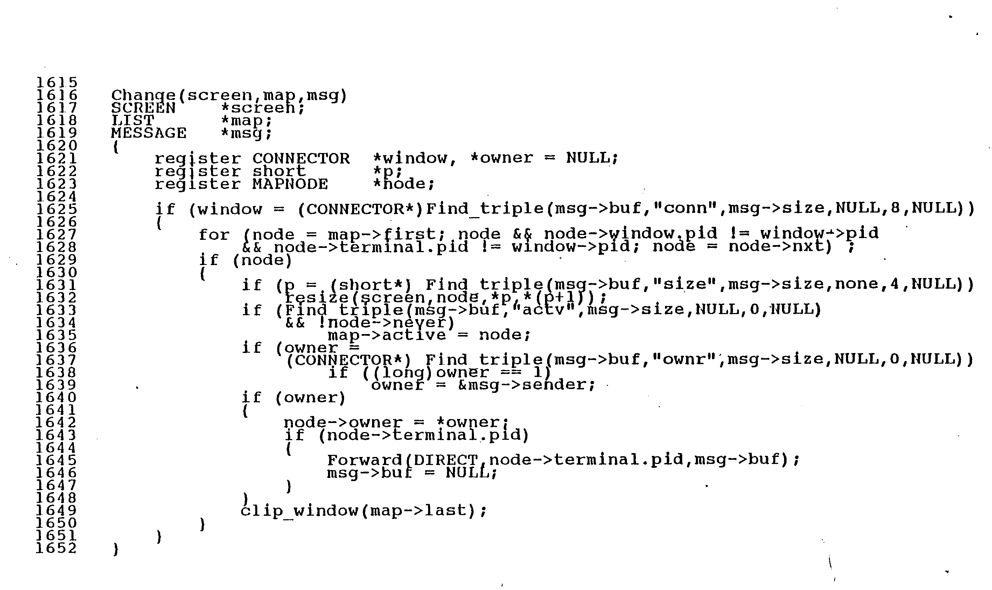

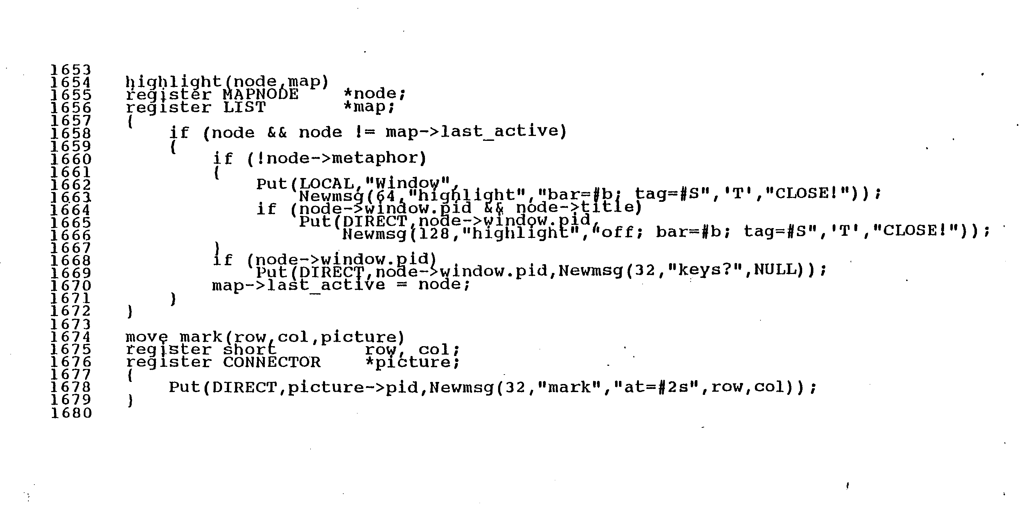

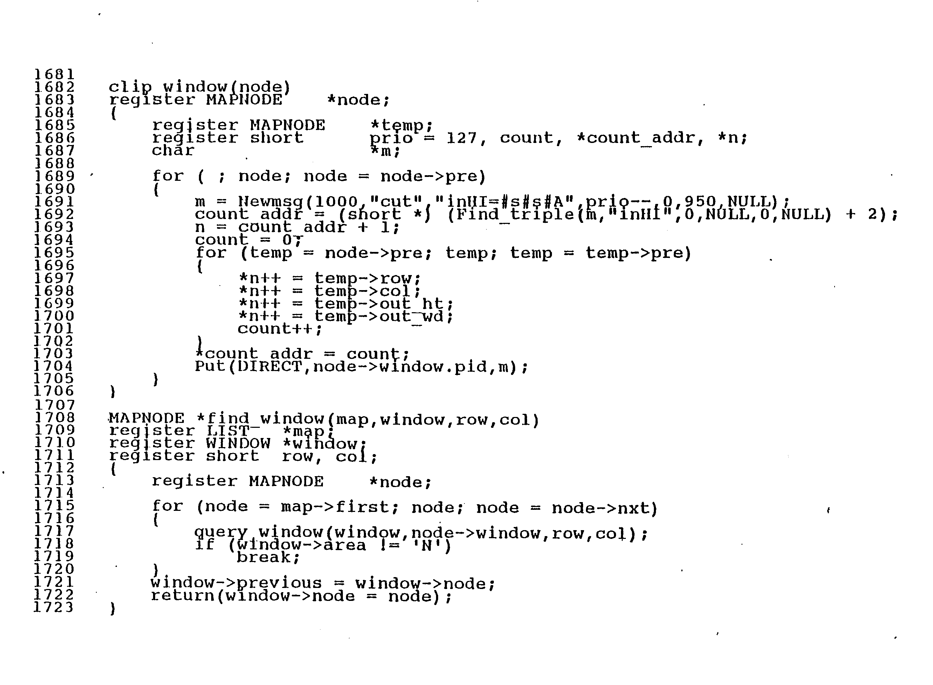

FIG. 18 illustrates how the console manager 340 enables multiple application software programs 330-334 to be represented by multiple pictures 314-343, and how multiple windows 361-363 and 367 may provide different views of one picture.

Console manager 340, in response to requests, can create or open application processes, such as process control module 330, spread-sheet module 331, graphics package 332, word-processing software 333, or data base management 334, on any or all of pictures 341-343. Window 361 may view a portion of picture 341; window 362 views a portion of picture 342; and windows 363 and 367 may view different portions of picture 343. The virtual output of window managers 361-363 and 367 is processed by the virtual output manager 365, which also transforms it into a form suitable to be displayed by a real output device, such as a video display terminal 366.

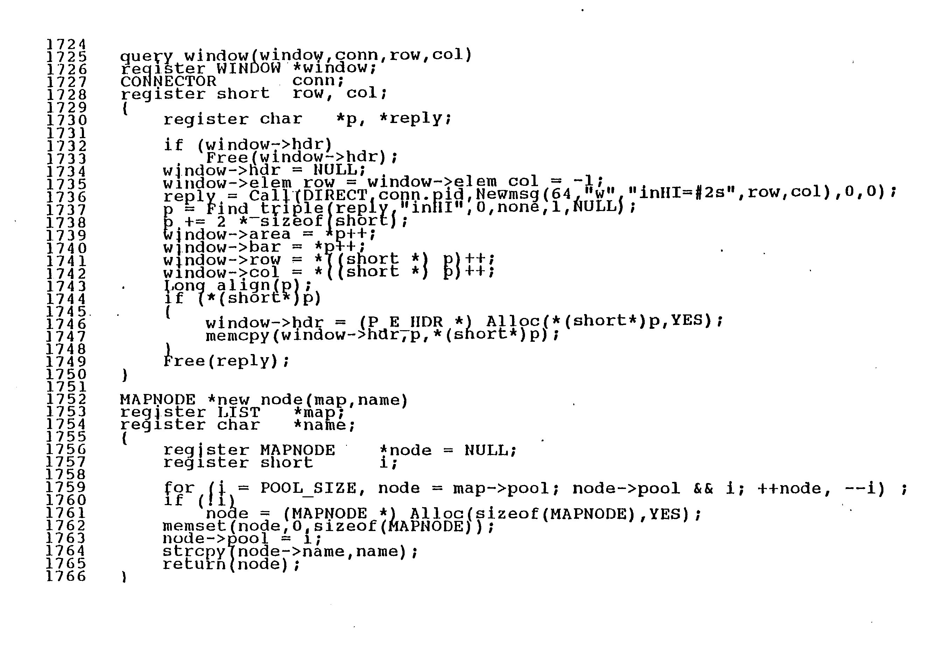

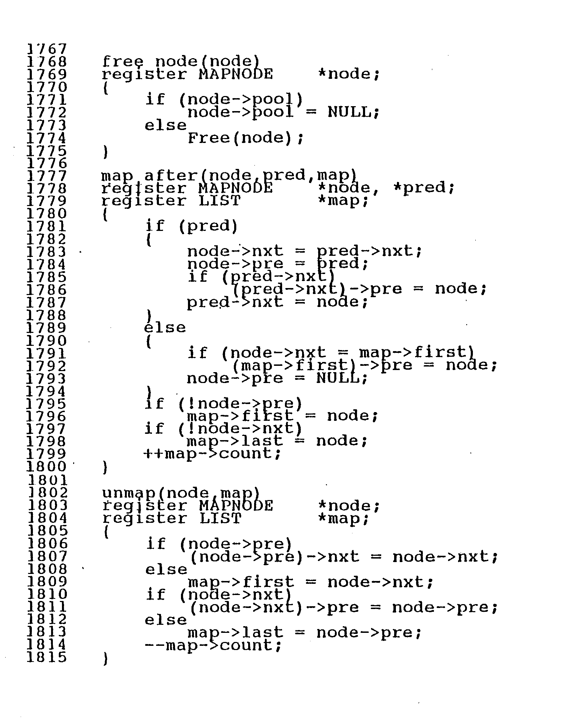

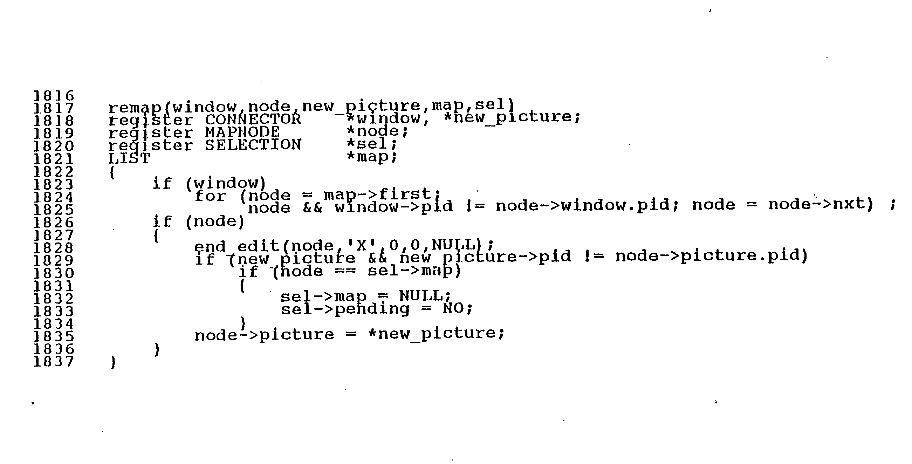

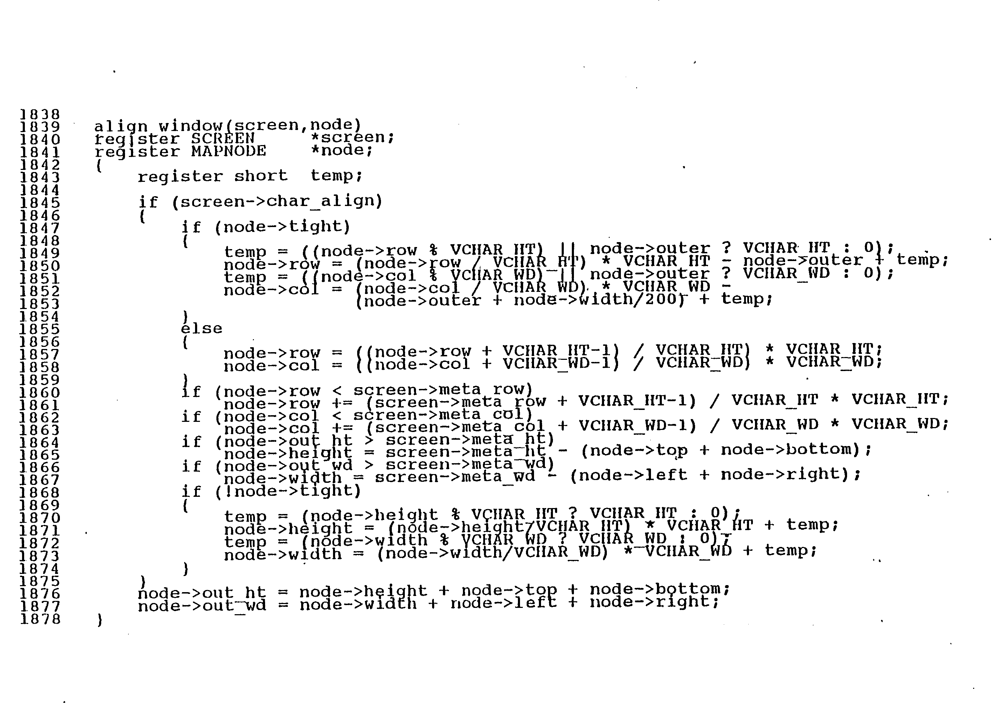

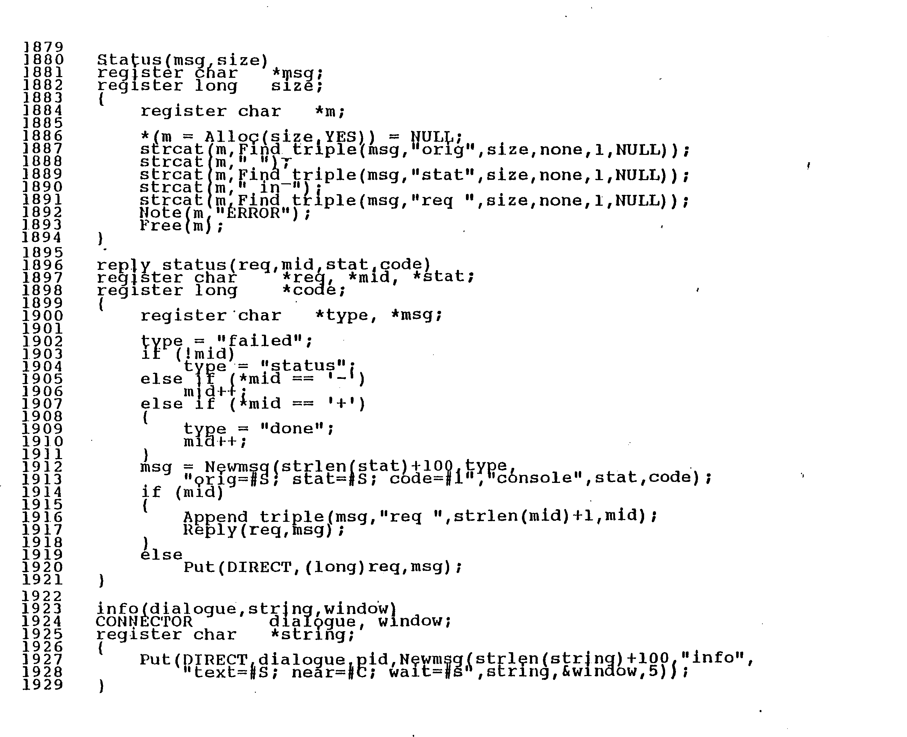

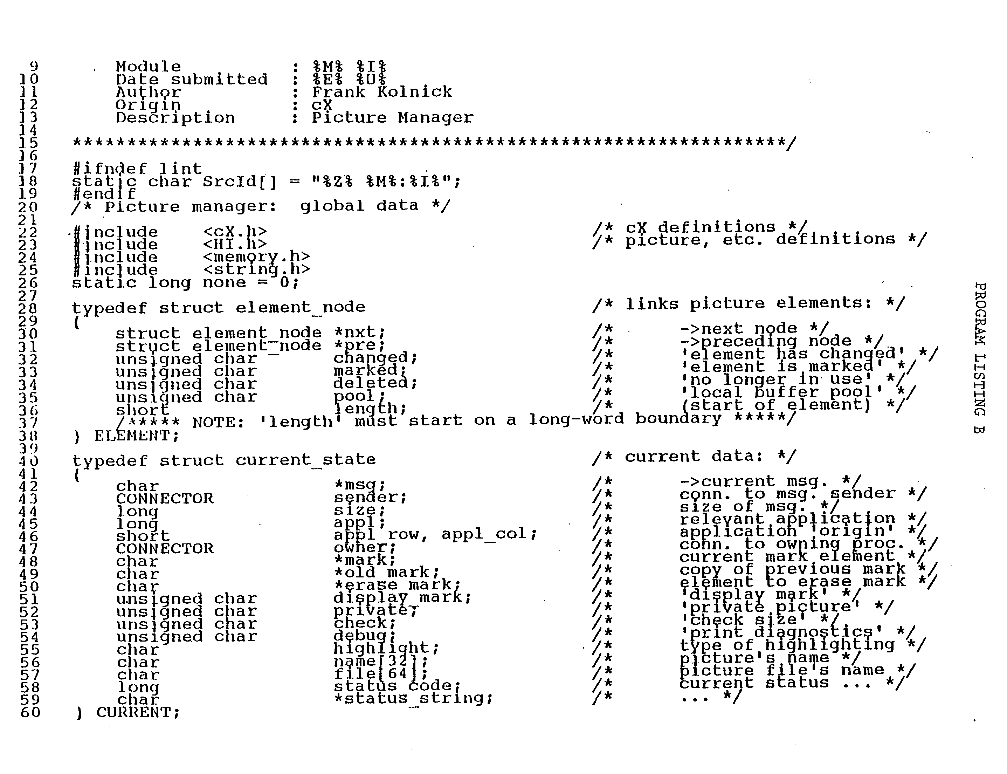

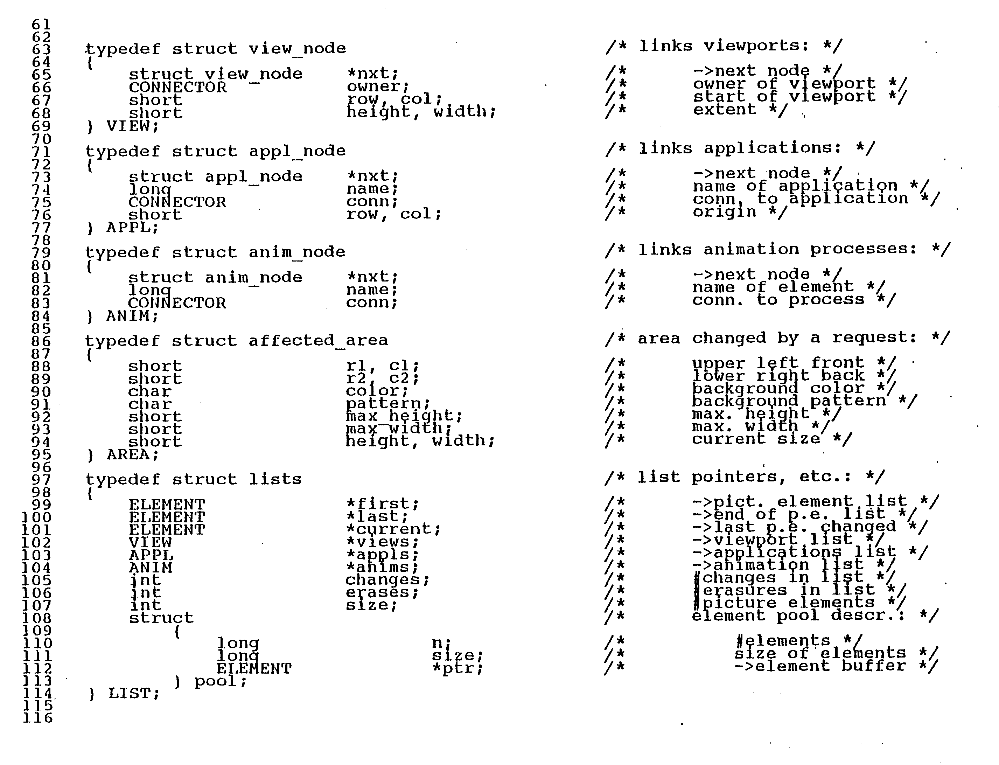

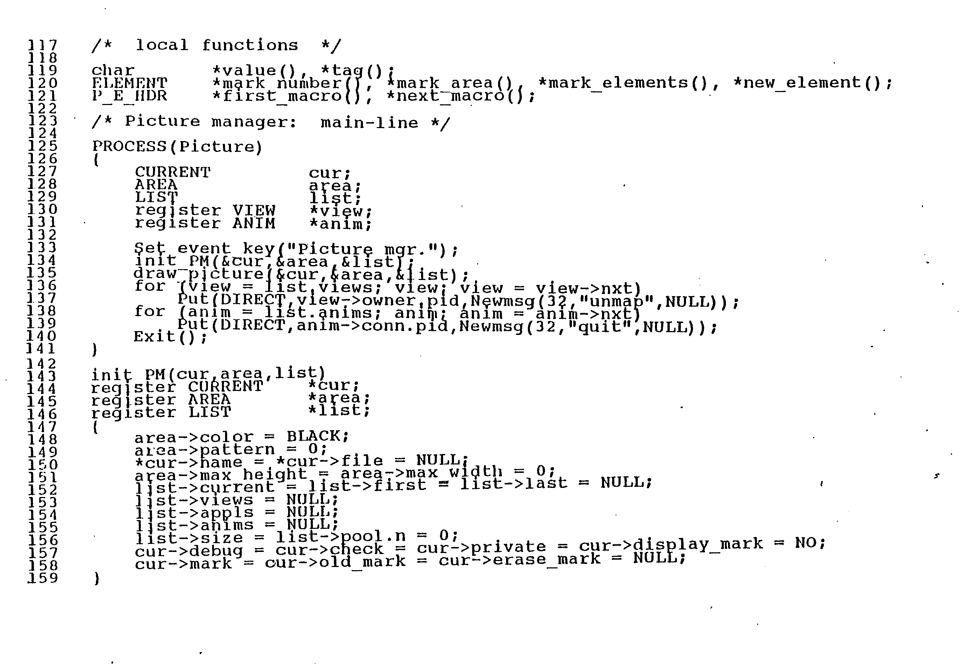

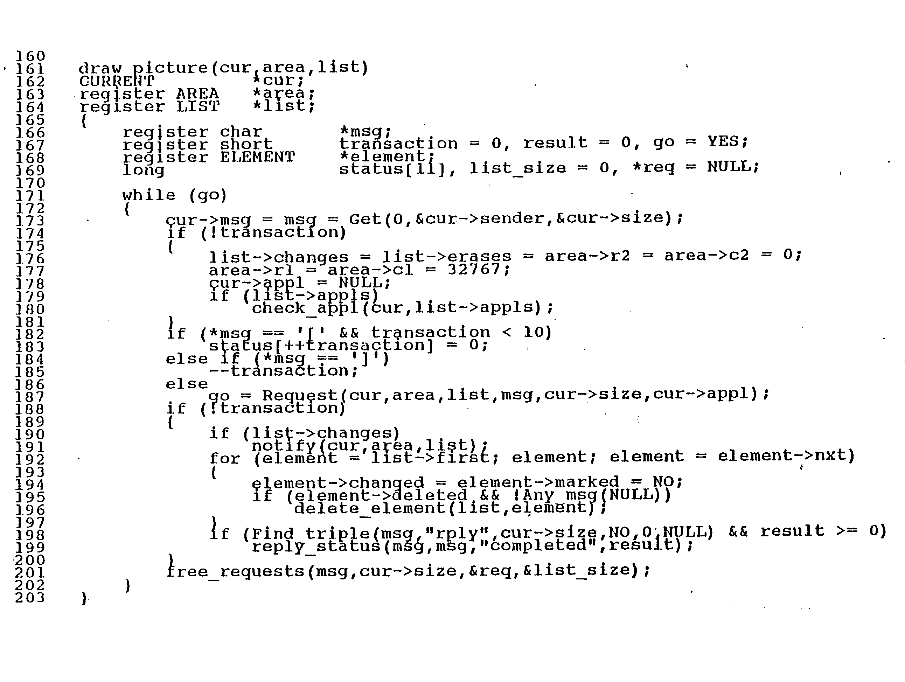

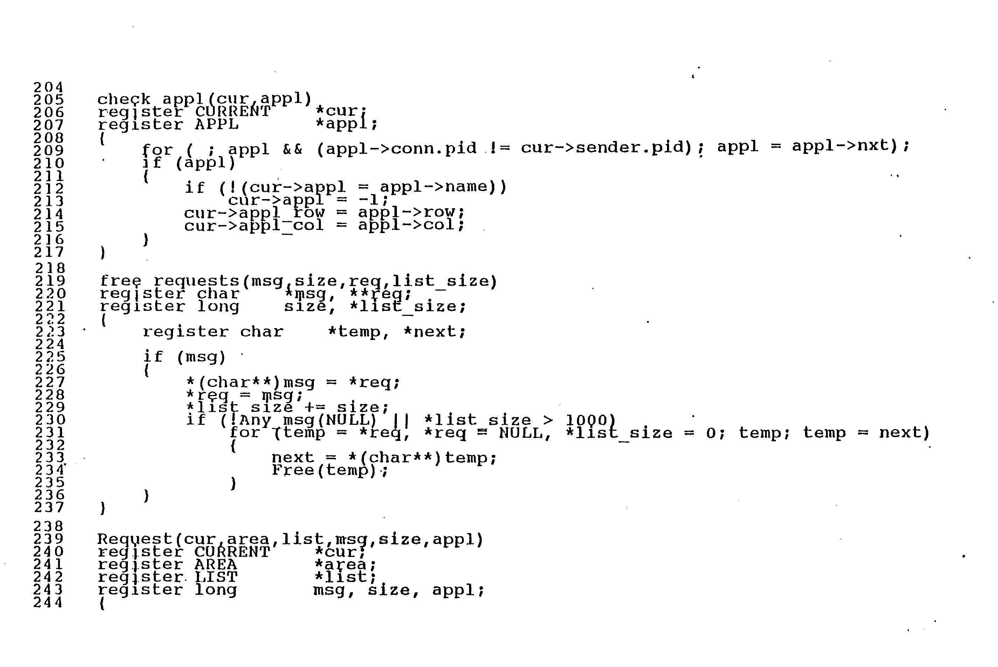

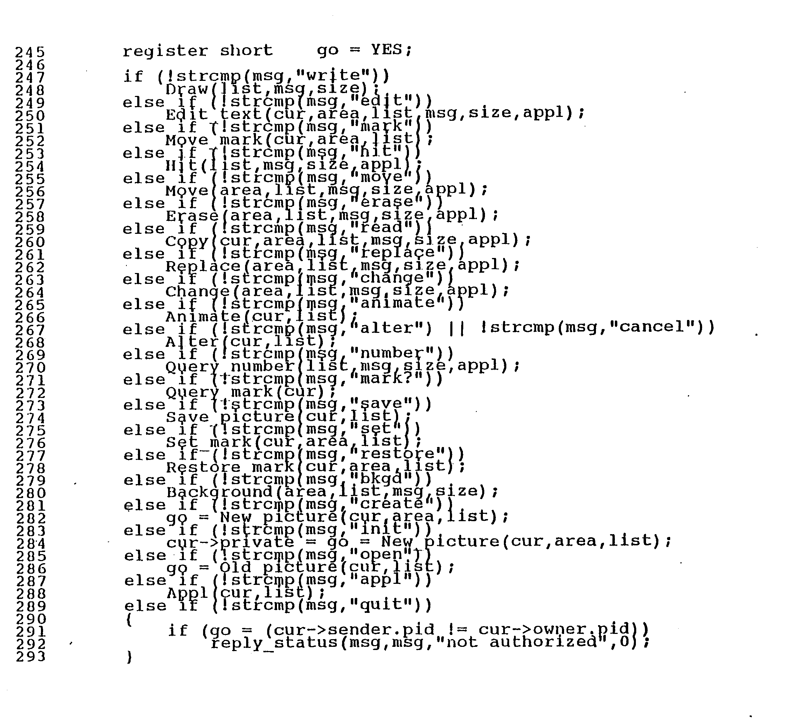

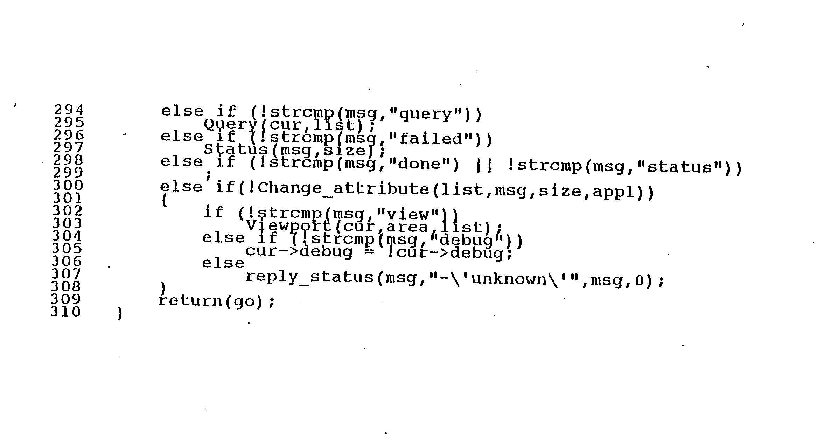

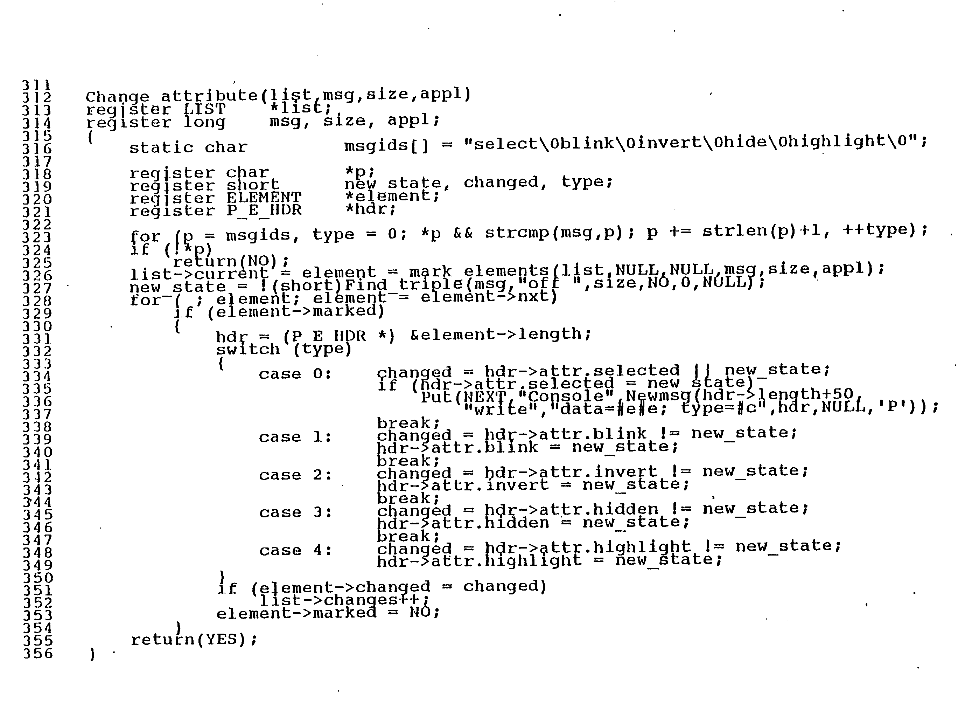

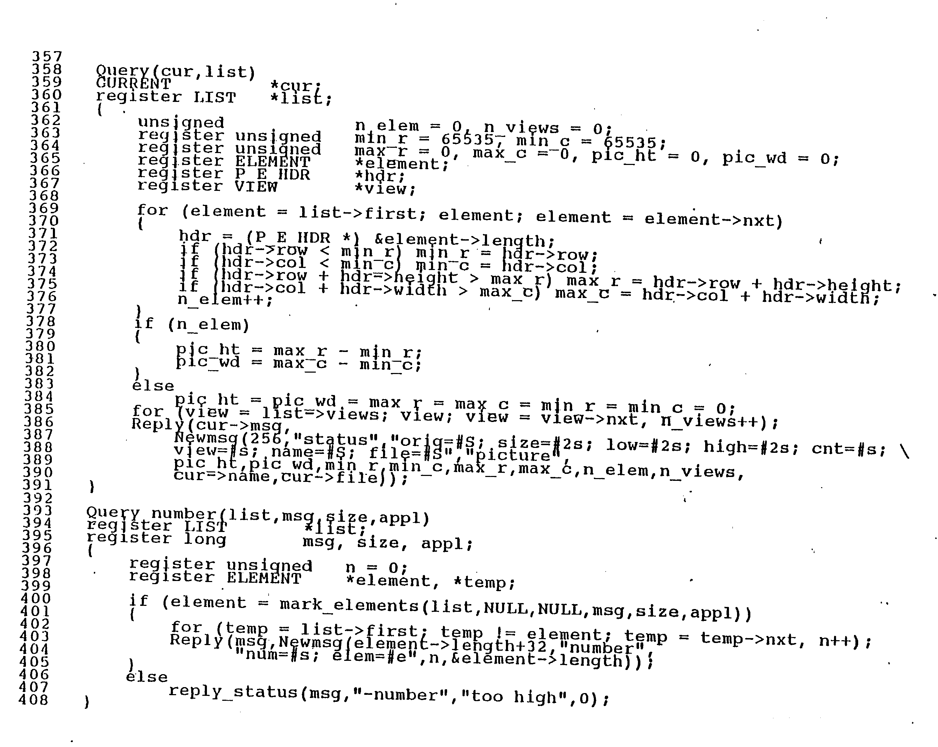

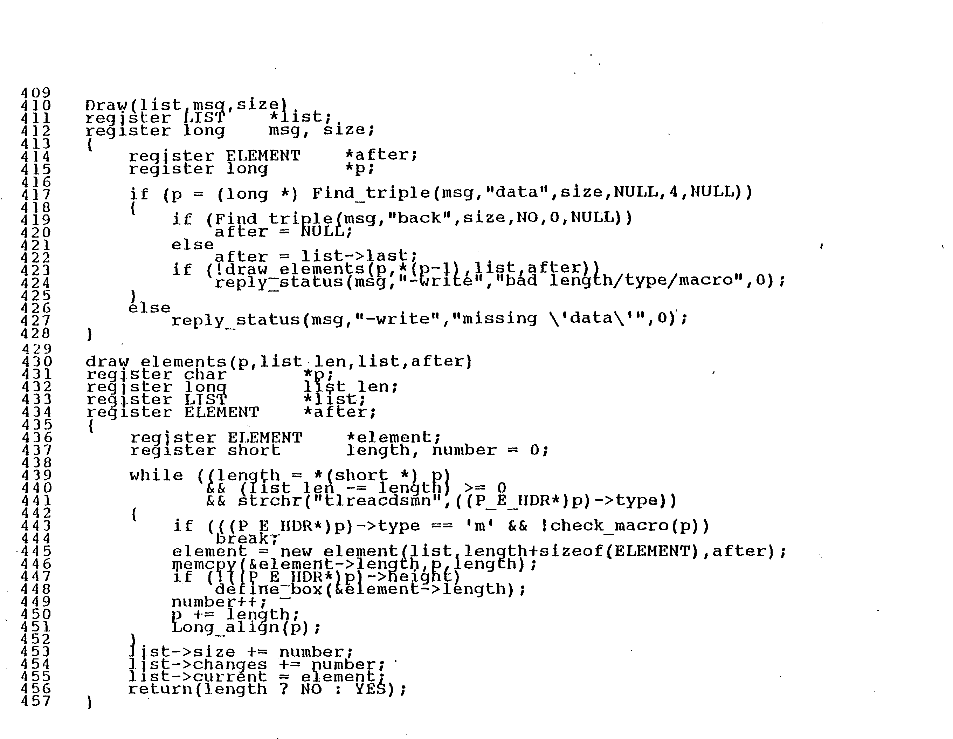

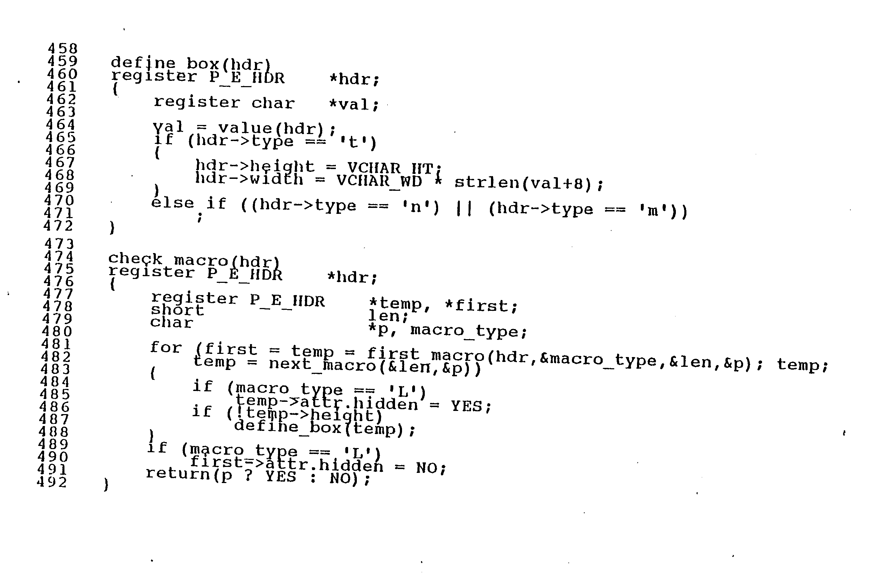

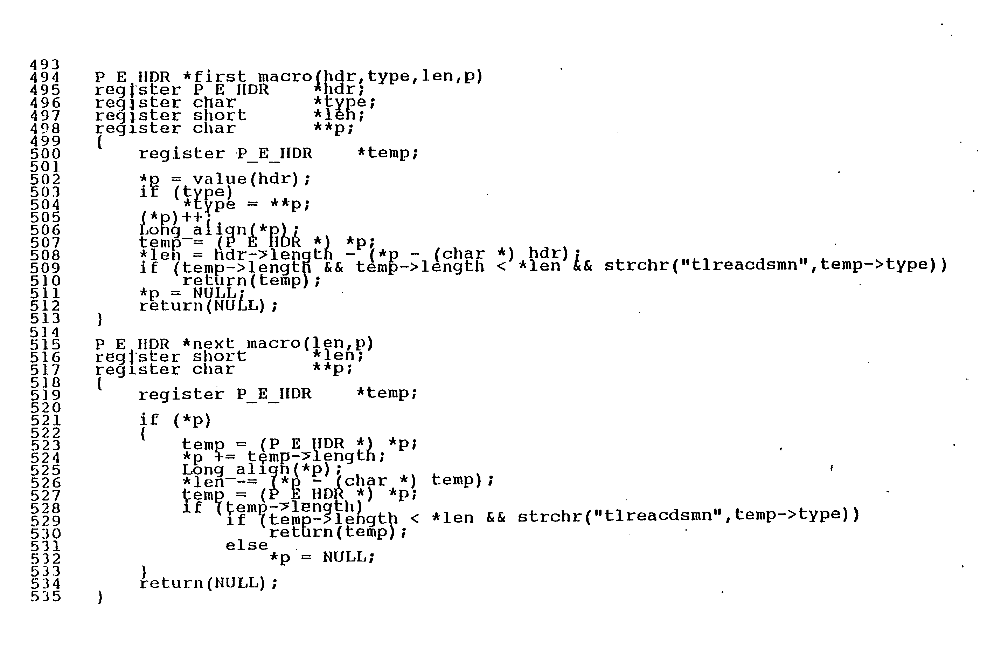

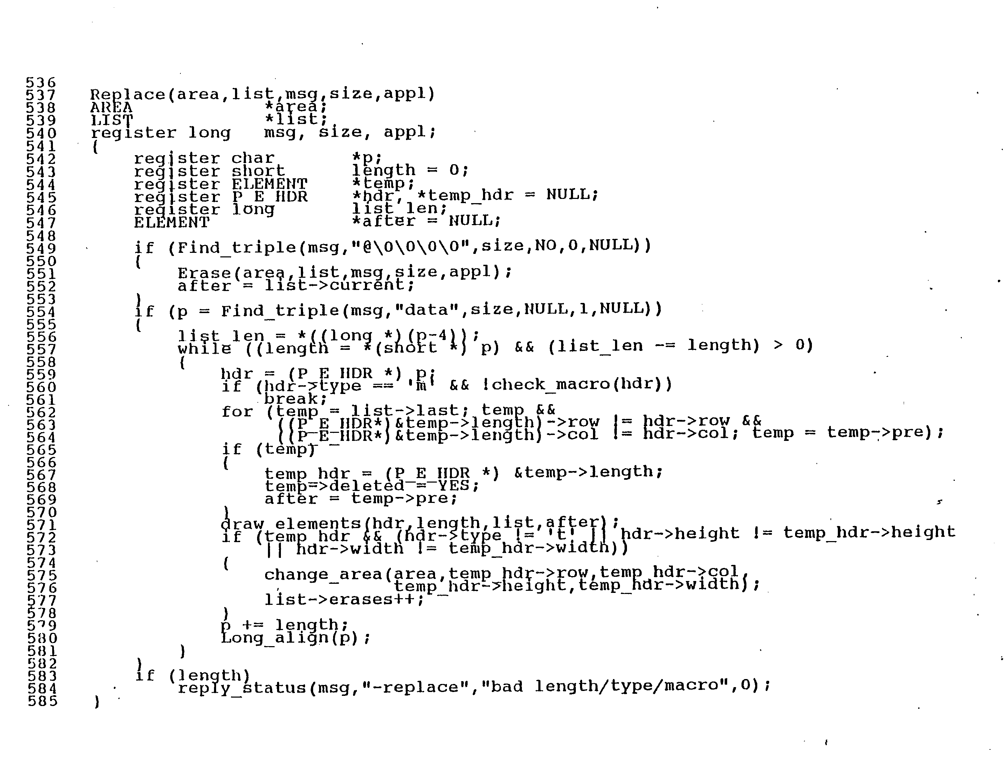

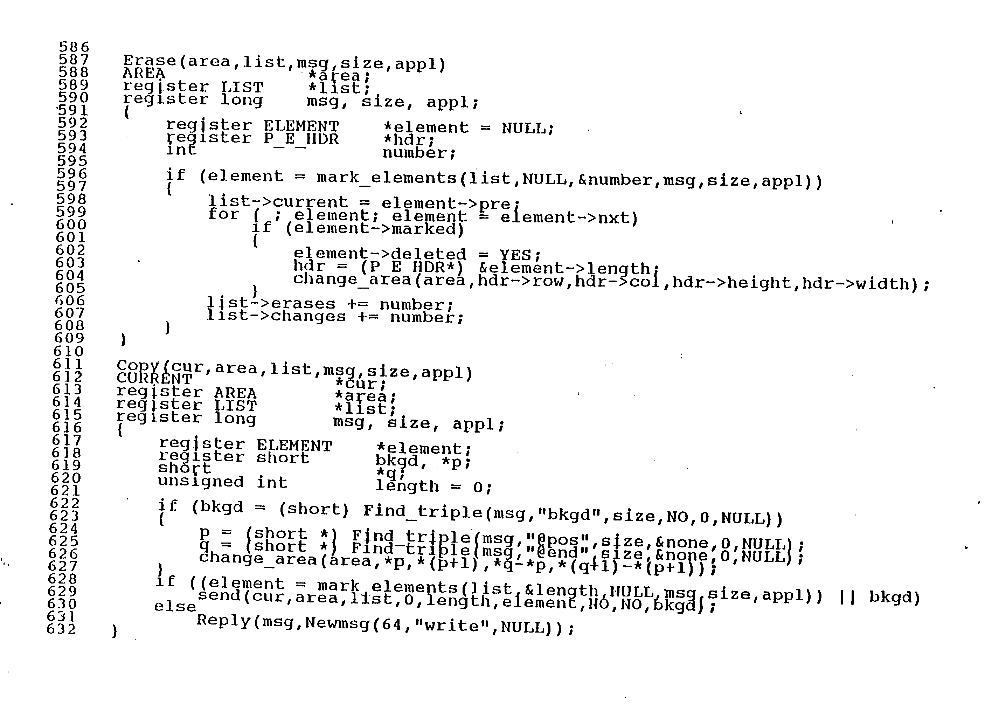

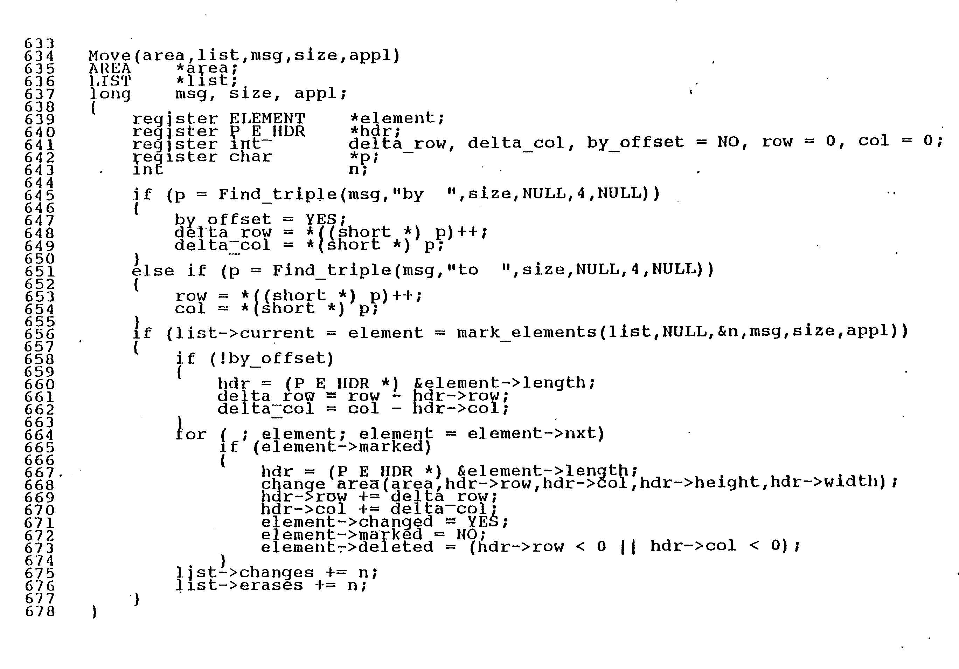

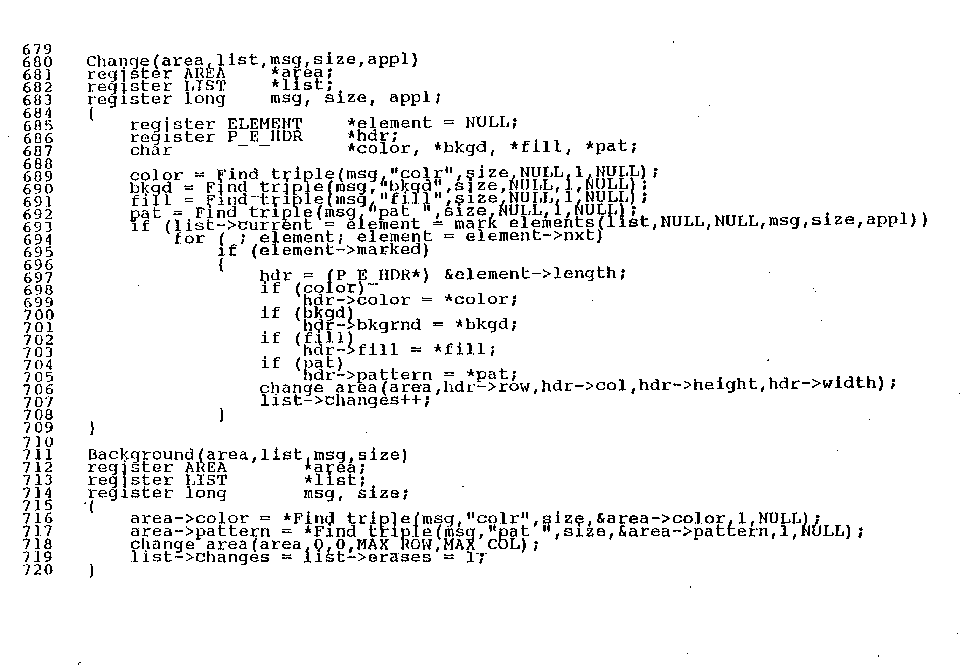

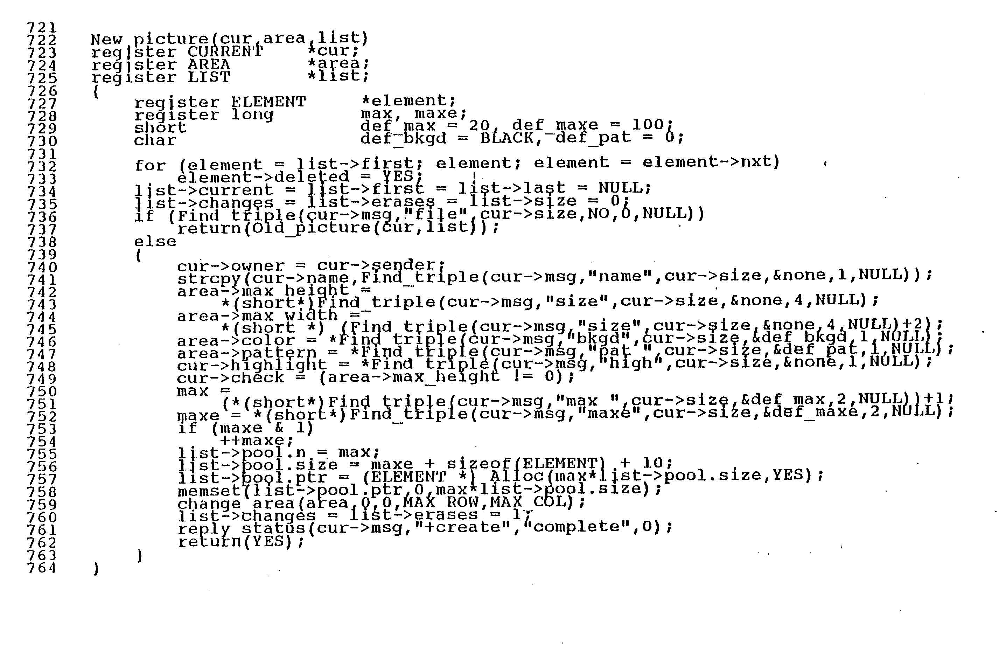

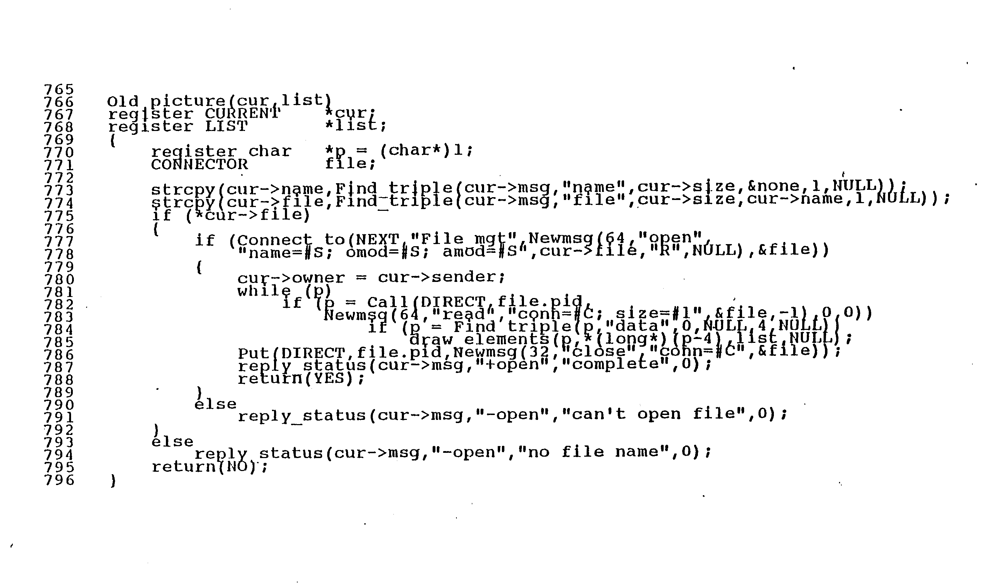

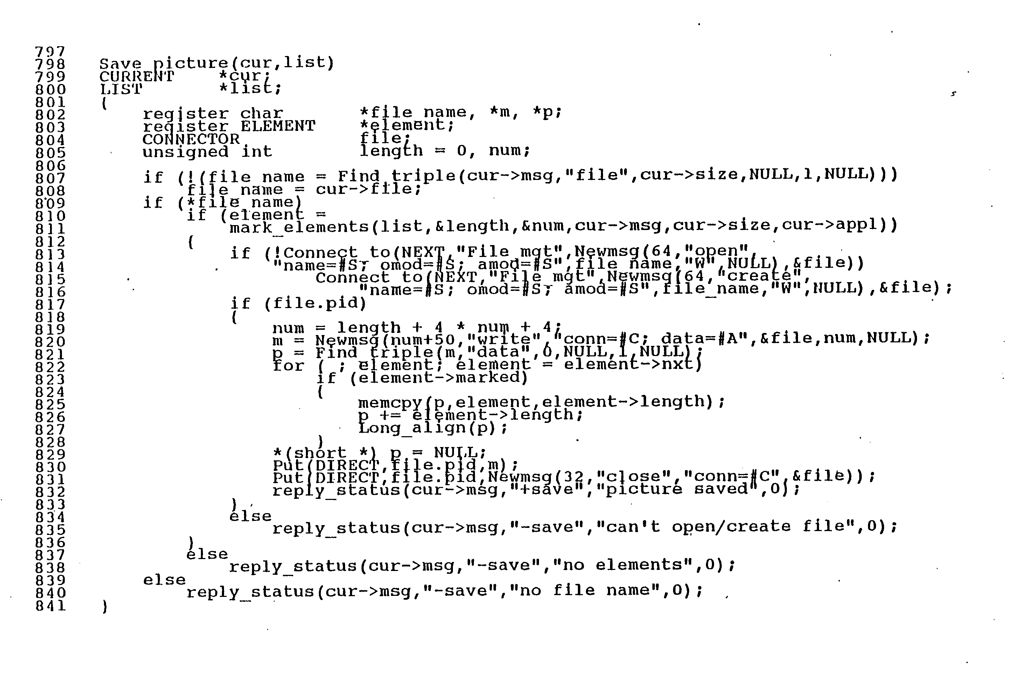

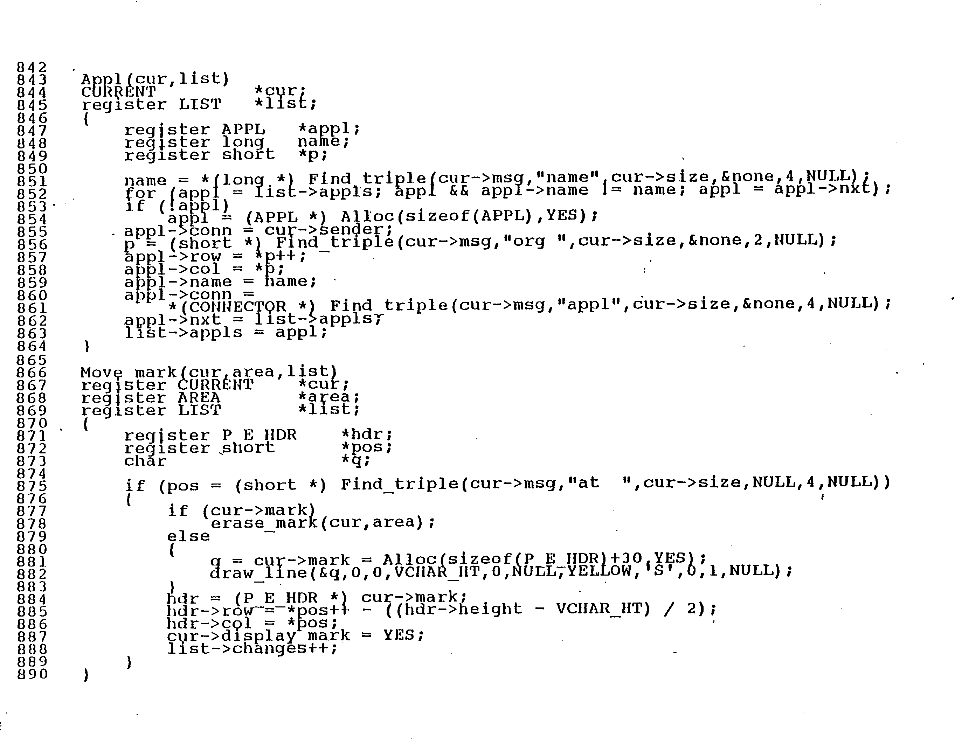

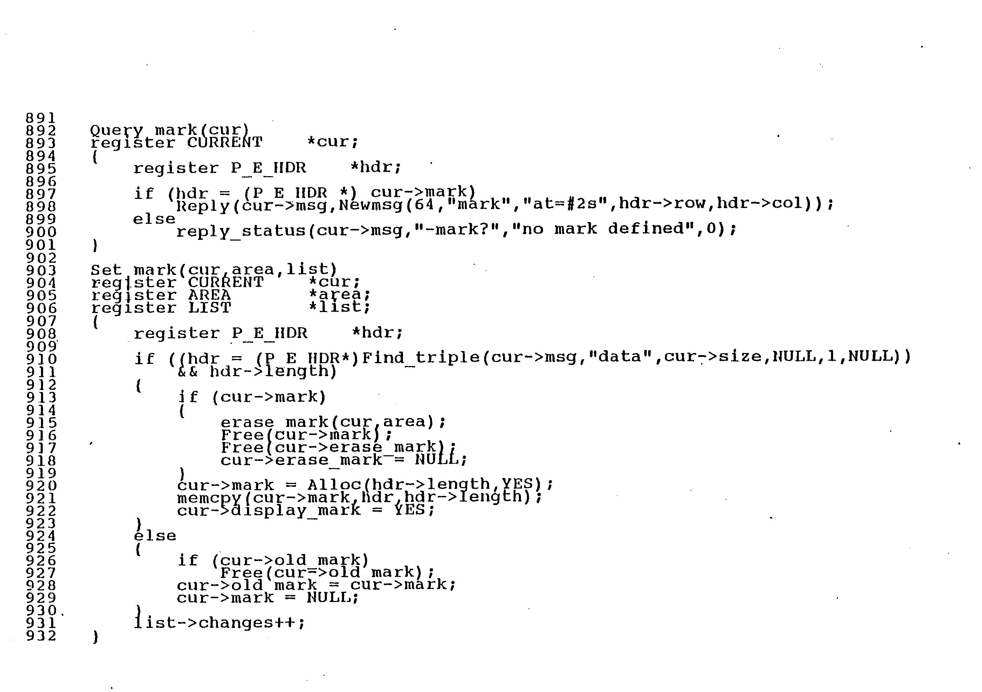

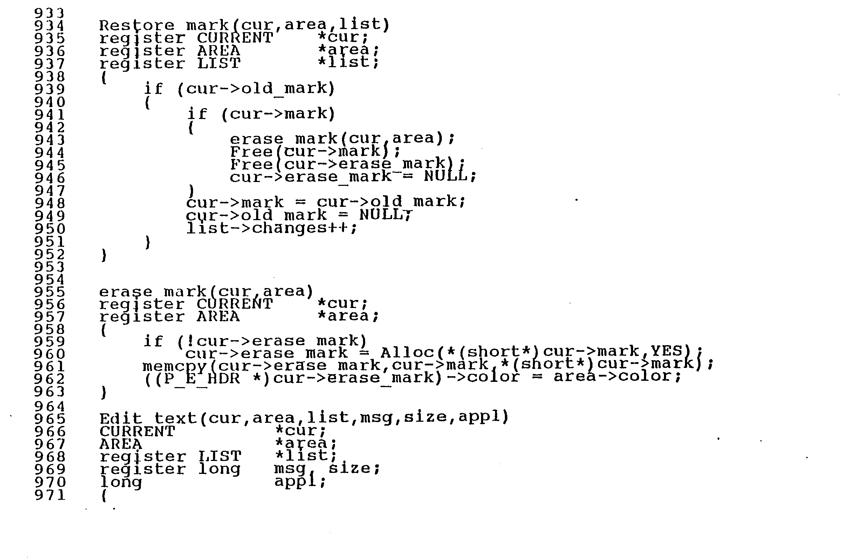

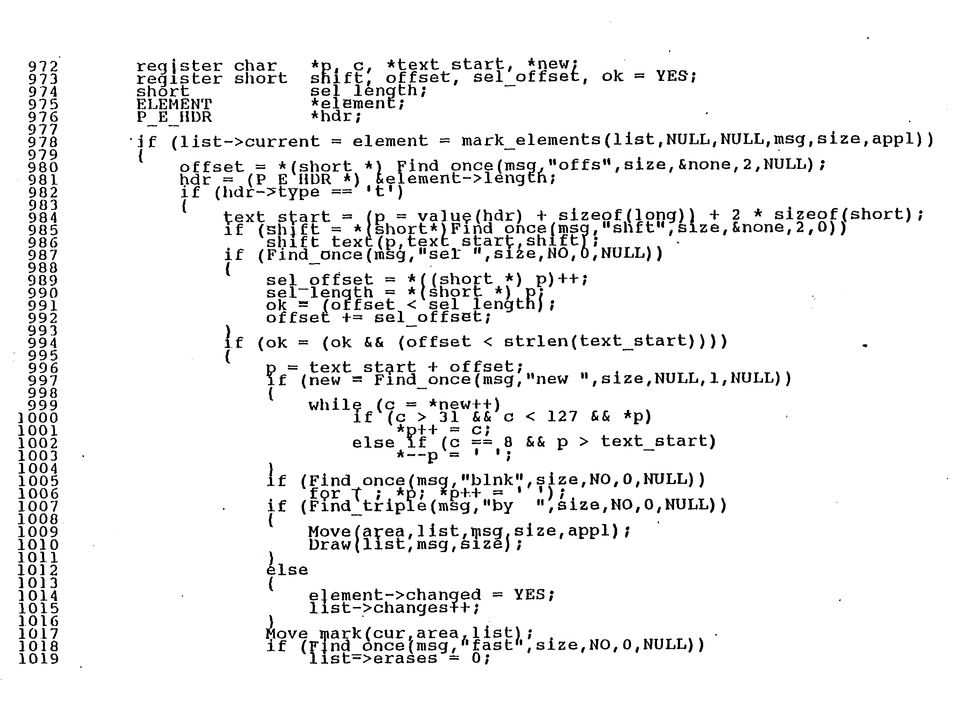

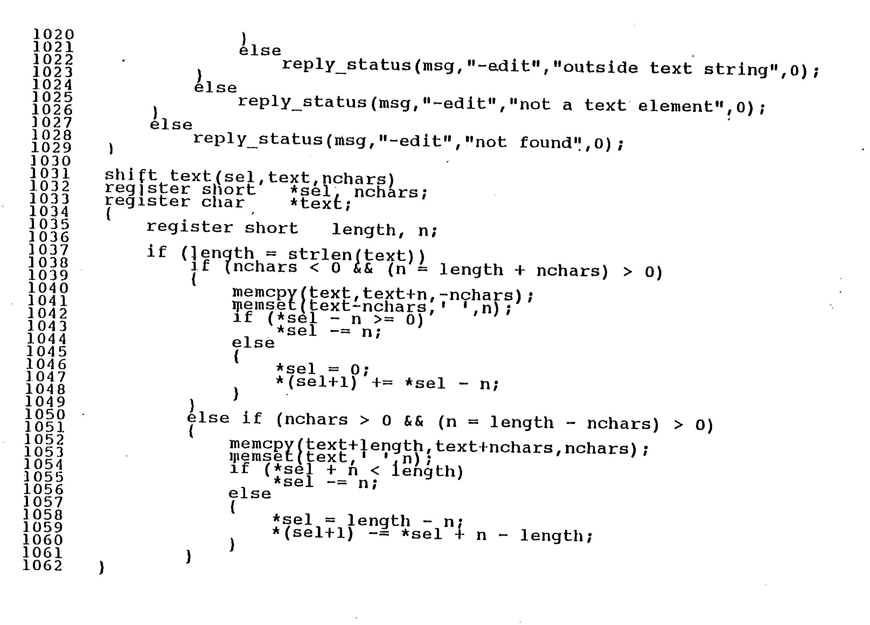

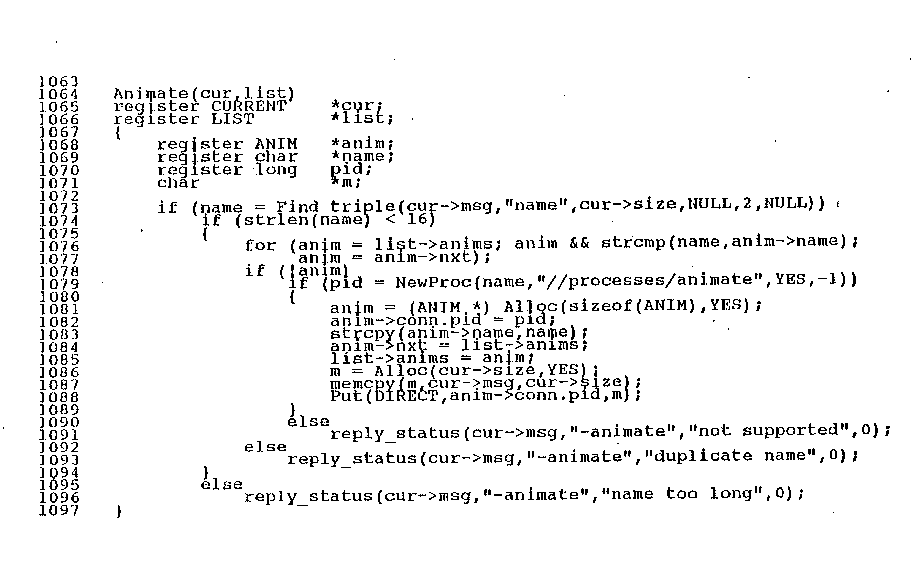

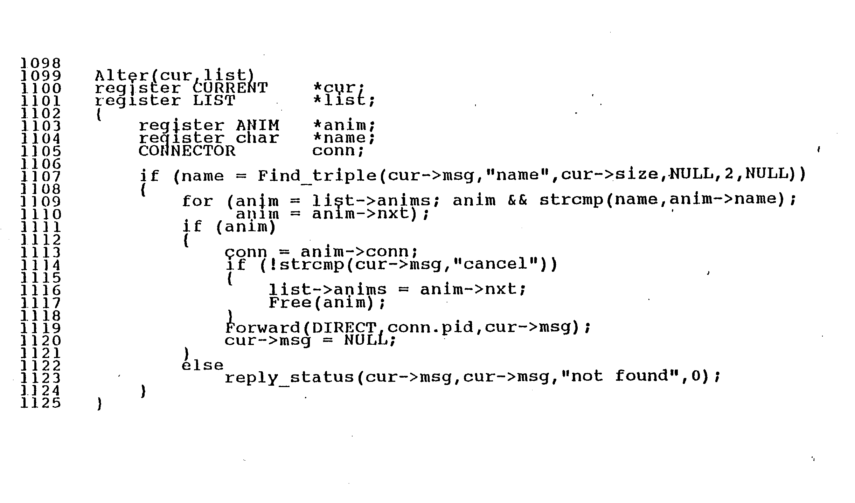

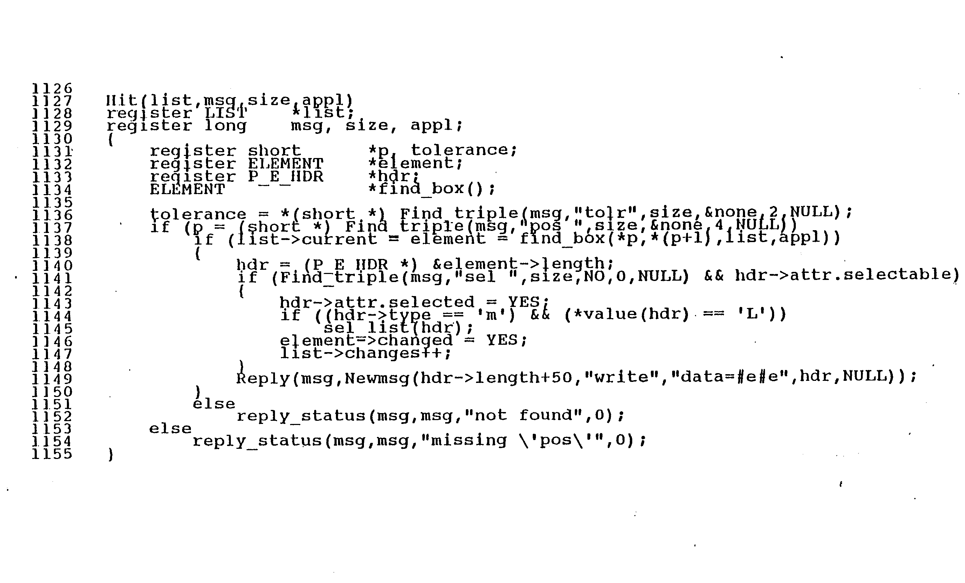

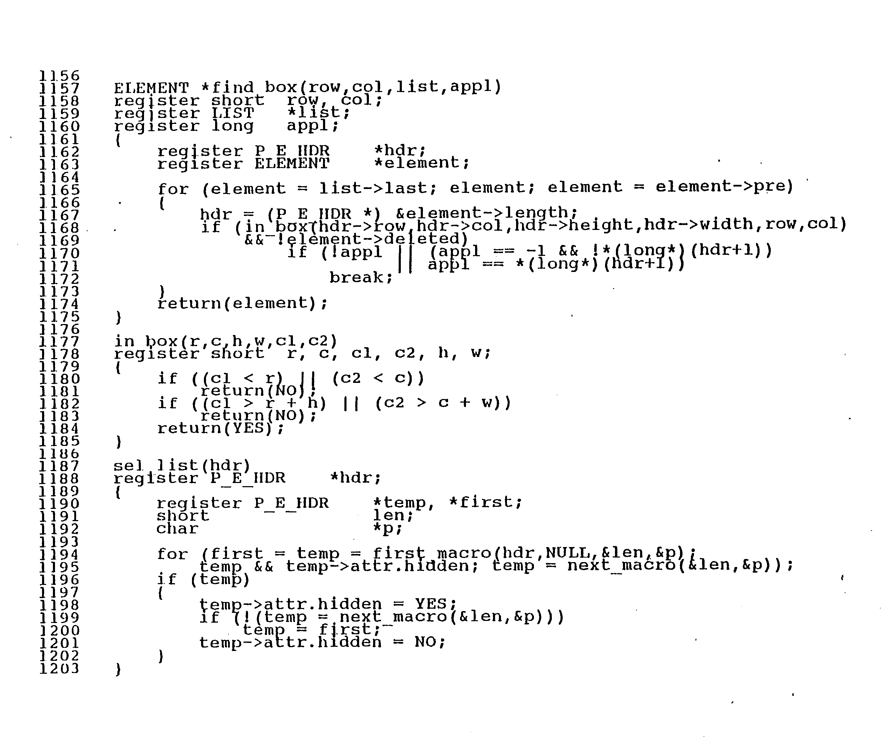

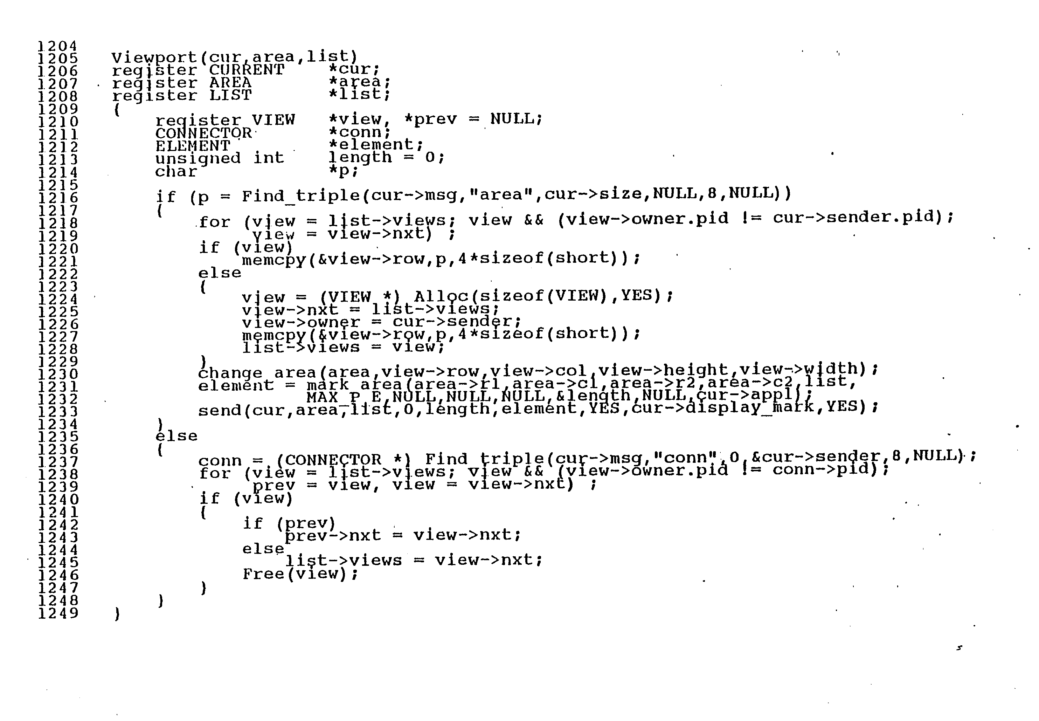

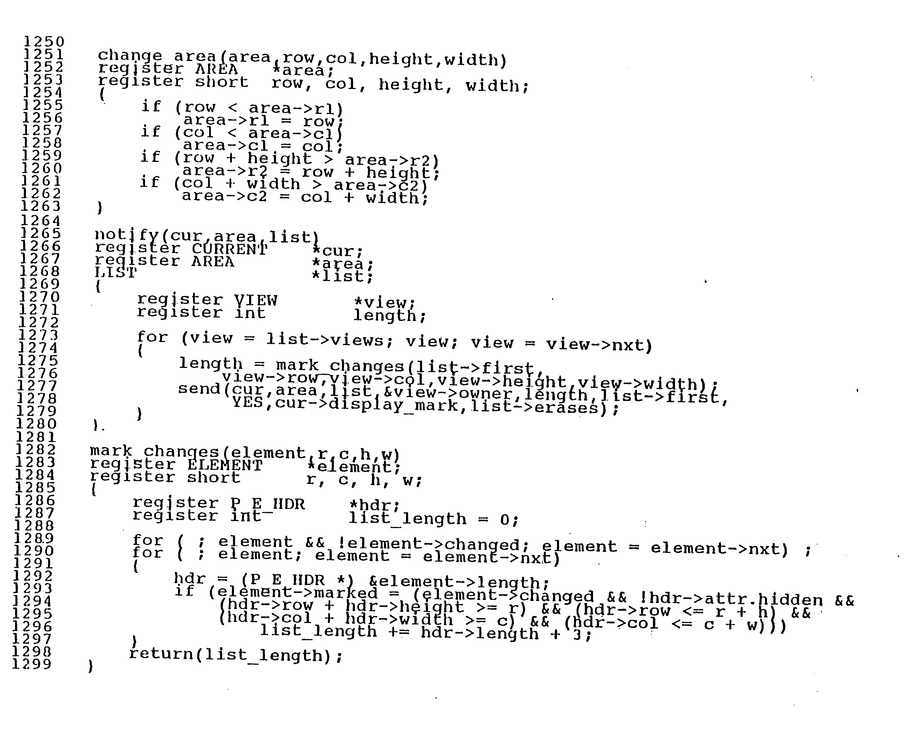

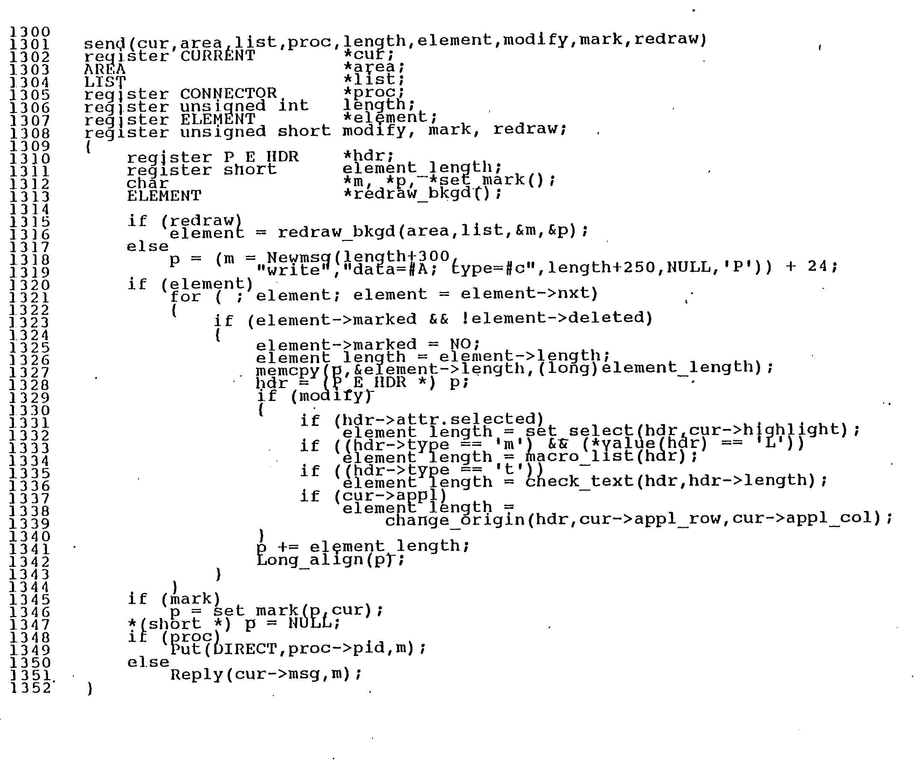

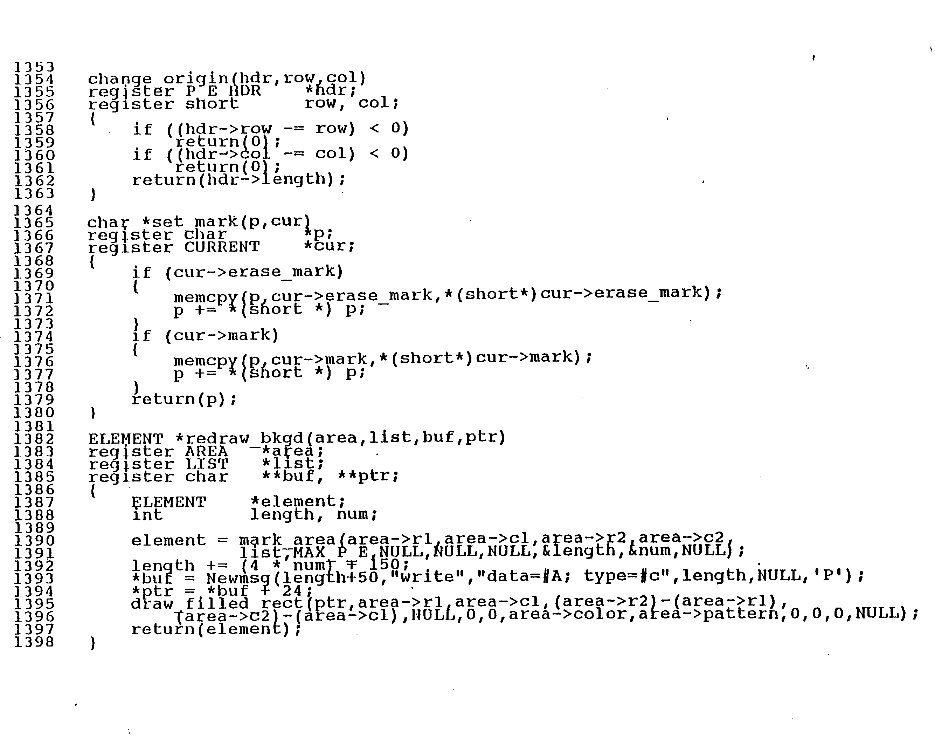

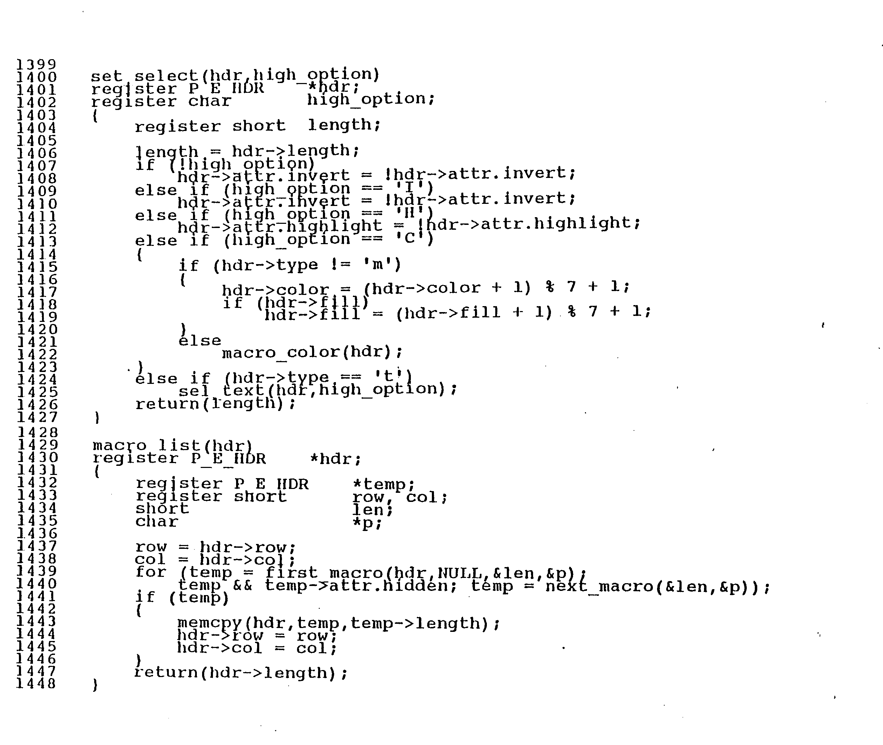

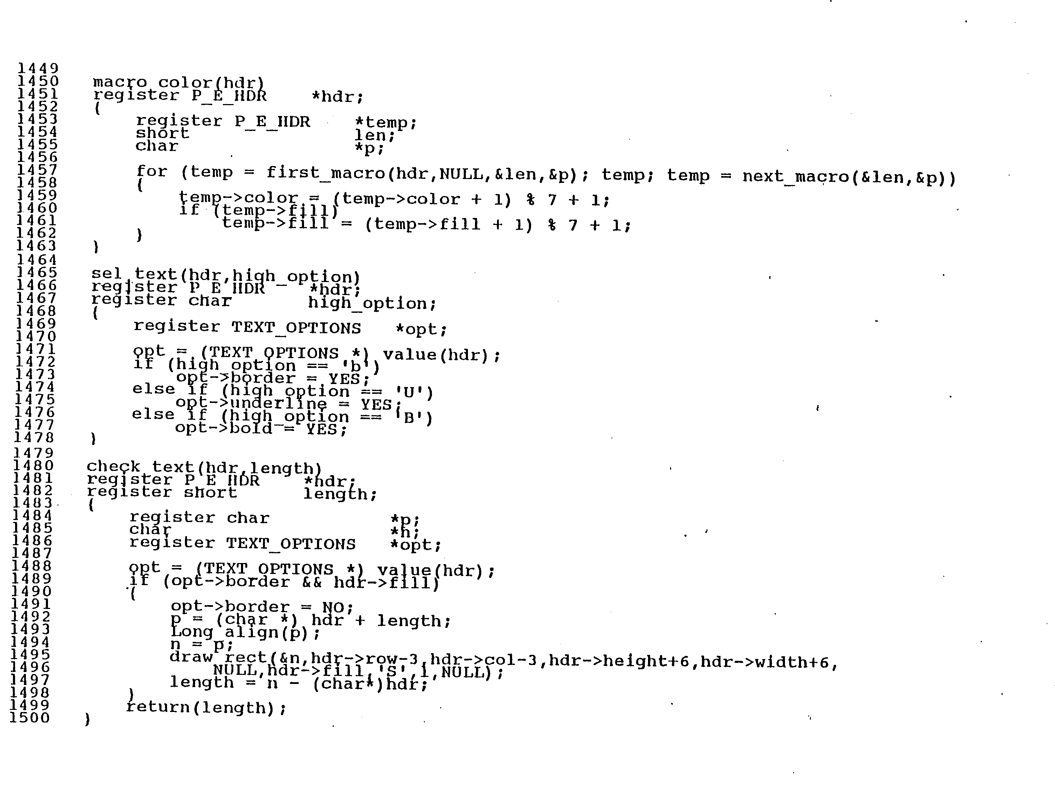

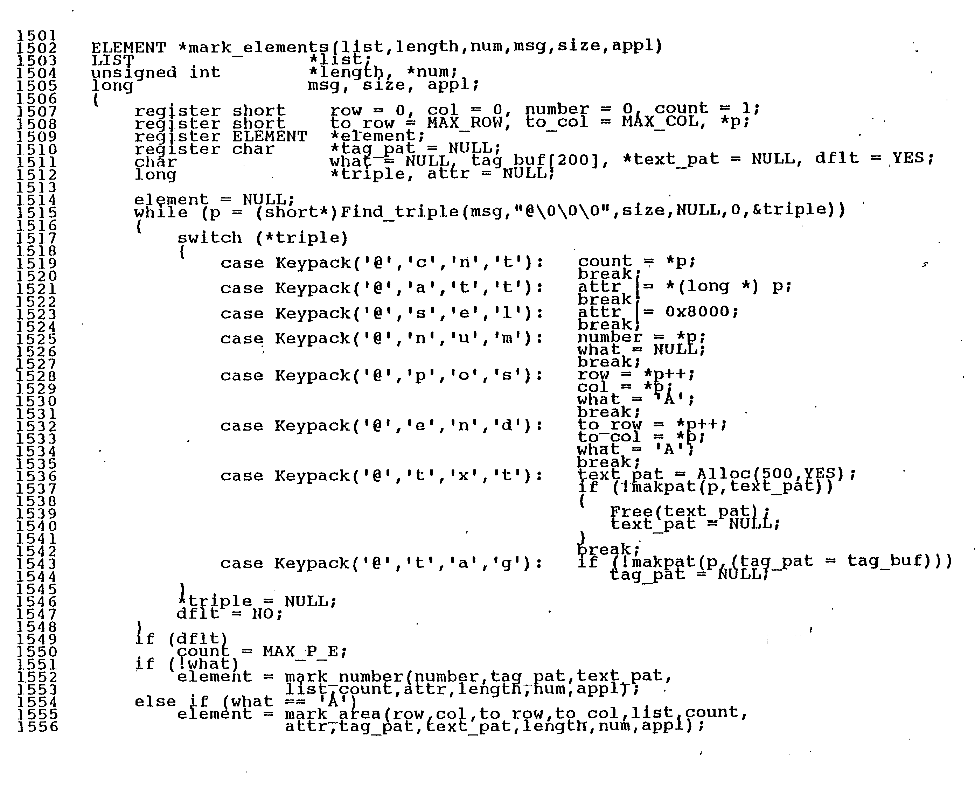

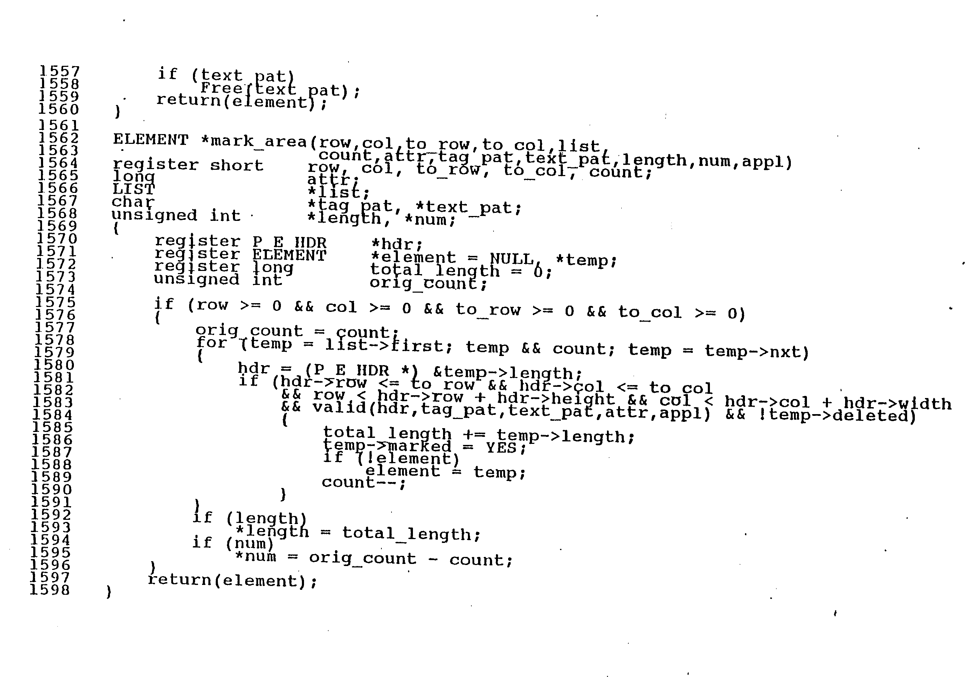

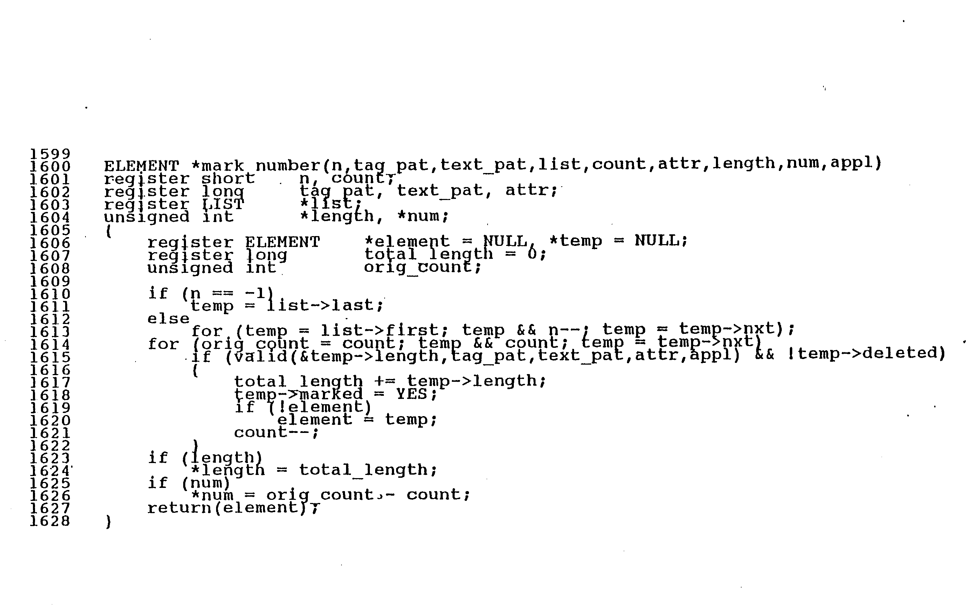

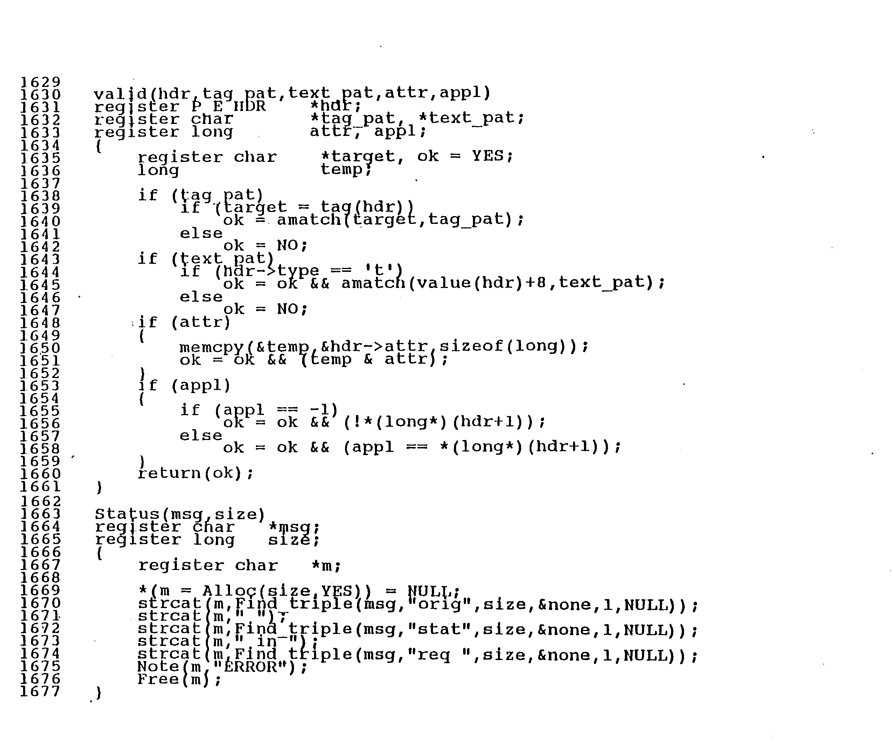

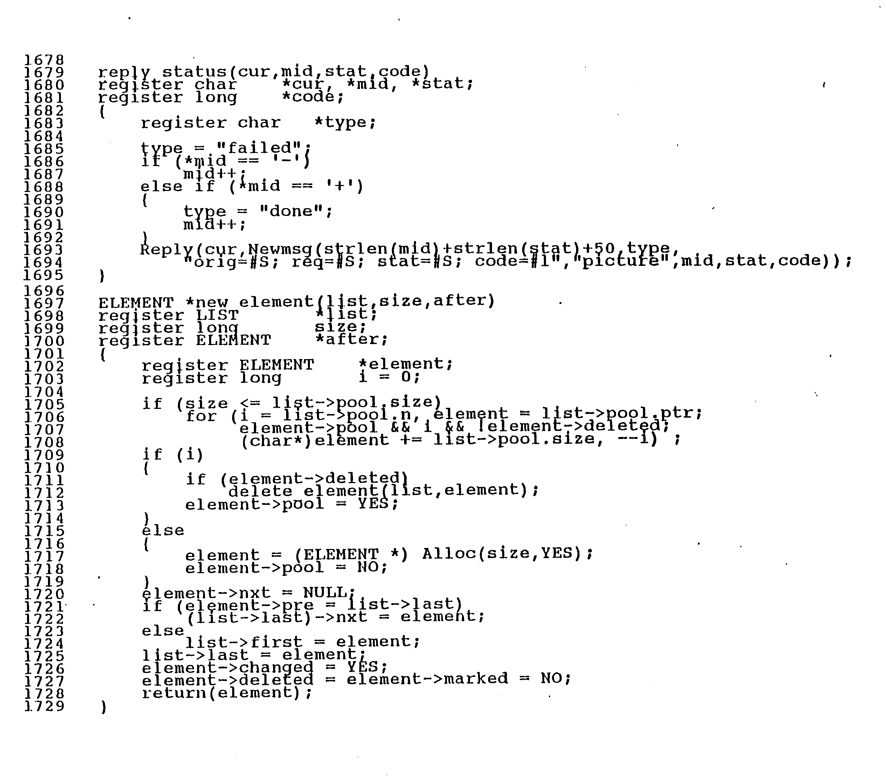

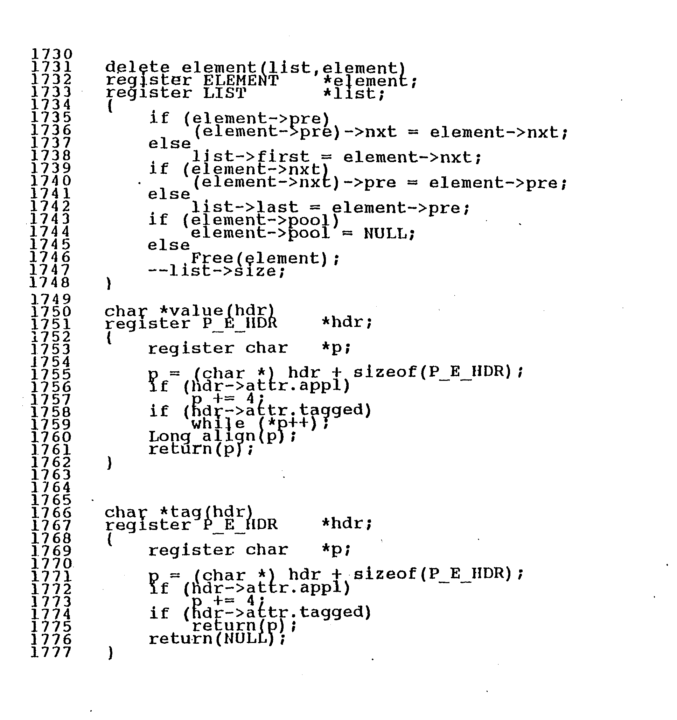

FIG. 19 illustrates how several windows may be displayed simultaneously on a typical screen. The Human Interface allows portions of multiple applications to be displayed via separate windows. For example, FIG. 19 shows the simultaneous display of a live text portion 371 from a word-processing application, a live numerical portion 370 from a spread-sheet and a live graphic portion 372 from a graphics program. The information in each window 370-372 is "live", in that it may change according to the results of on-going processing.

The user may add or modify information in windows 370-372 at any time, and any changes in the information displayed will take effect in the appropriate window(s) as it is processed. For example, a change to one application display in one window could result in changes to information displayed in several windows.

*Description of Source Code Listings*

*User-Adjustable Window*

Program Listings A and B contain a "C" language implementation of the concepts relating to adjusting the size of a display window as described hereinabove. The following chart indicates where the relevant portions of the listings may be found.

| Function | Line Numbers in Program Listing A |
|---|---|
| Main-line: initialization; accept requests | 190–222 |
| Determine type of request | 329–369 |
| Create: | 418–454 |
| Create a window | 1298–1600 |
| Create a picture | 440–447 |
| Destroy (delete) | 456–484 |

| Function | Line Numbers in Program Listing B |
|---|---|
| Main-line: initialization; start processing | 125–141 |
| Accept requests; check for changes | 161–203 |
| Determine type of request | 239–310 |
| View: | 1205–1249 |
| Draw: | 410–457 |
| Replace: | 537–585 |
| Erase: | 587–609 |

*Picture - Live Data From Multiple Applications*

Program Listing B contains a "C" language implementation of the concepts relating to accepting requests to modify elements of applications simultaneously resident in a single picture as described hereinabove. The following chart indicates where the relevant portions of the listing may be found.

| Function | Line Numbers in Program Listing B |
|---|---|
| Main-line: initialization; start processing | 124–141 |
| Accept requests; check for changes | 161–213 |
| Determine type of request | 239–310 |
| Register application | 843–864 |
| Draw, copy, etc. | 312–841 |
| Check if application registered | 179, 180, 205–217 |
| Check if element belongs to application | 1653–1659 |

*Input/Output Device Independence*

Program Listings A and B contain a "C" language implementation of the above-described concepts relating to input/output device independence. The following chart indicates where the relevant portions of the listing may be found.

| *Function* | *Lines Numbers in Program Listing A* |
|---|---|
| Main-line; initialization; accept input | 190-222 |
| Determine type of input | 486-521 |
| Virtual key | 523-631 |
| Virtual position | 633-661 |
| Virtual action | 663-702, 763-1200 |
| Virtual function | 704-723 |
| Virtual menu | 725-761 |

| *Function* | *Lines Numbers in Program Listing B* |
|---|---|
| Main-line; initialization; start processing | 125-141 |
| Accept requests (virtual output); check for changes | 161-203 |
| Determine type of request | 239-310 |
| Draw | 410-457 |
| Copy | 611-632 |
| Replace | 537-585 |
| Erase | 587-609 |
| Move | 634-678 |
| Send changes | 1265-1352 |

*Screen - Live Data in Multiple Windows*

Program Listing contains a "C" language implementation of the concepts relating to the simultaneous display of "live" windows from multiple applications on a single screen as described hereinabove. The following chart indicates where the relevant portions of the listing may be found.

| Function | Line Numbers in Program Listing B |
|---|---|
| Main-line: initialization; start processing | 124-141 |
| Accept requests; check for changes | 161-213 |
| Determine type of request | 239-310 |
| Register application | 843-864 |
| Draw, copy, etc. | 312-841 |
| Check if application registered | 179, 180, 205-217 |
| Check if element belongs to application | 1653-1659 |

It will be apparent to those skilled in the art that the herein disclosed invention may be modified in numerous ways and may assume many embodiments other than the preferred form specifically set out and described above. For example, its utility is not limited to a data processing system or any other specific type of data processing system.

Accordingly, it is intended by the appended claims to cover all modifications of the invention which fall within the true spirit and scope of the invention.

## Claims

1. A human interface in a data processing system, said interface comprising:
means for representing information in at least one abstract, device-independent picture (343, FIG. 18);
means (330-334) for generating a first message, said first message comprising size information; and
a console manager process (340) responsive to said first message for creating a window (363) onto said one picture, the size of said window being determined by said size information contained in said first message.

2. The human interface is recited in claim 1 and further comprising:
means (330-334) for generating a second message, said second message comprising size information; and
said console manager process being responsive to said second message for creating a second window (367) onto said picture, the size of said second window being determined by said size information contained in said second message, the sizes of said window and said second window being independent of one another.

3. The human interface as recited in claim 1 and further comprising:
means (330-334) for generating a second message, said console manager process being responsive to said second message for creating an additional picture (342).

4. The human interface as recited in claim 3 and further comprising:
means (330-334) for generating a third message, said third message comprising information for modifying said one picture and said additional picture; and
a picture manager process (276, FIG. 13) responsive to said third message for modifying both said one picture and said additional picture simultaneously in accordance with said information.

5. A human interface in a data processing system, said interface comprising:
means for representing information in at least one abstract, device-independent picture (221, FIG. 9); and
means permitting said picture to be shared by a plurality of independent applications (301, 303, FIG. 6).

6. The human interface as recited in claim 5, and further comprising a plurality of abstract, device-independent pictures (341-343, FIG. 18); and
means permitting each of said pictures to be shared by a plurality of independent applications.

7. The human interface as recited in claim 5, wherein said picture comprises user interface information, said human interface further comprising:

means for simultaneously displaying images from at least one of said applications and from said user interface information (FIGS. 14, 19).

8. The human interface as recited in claim 7, wherein said user interface information includes information from the group comprising menu information, icon information, help information, and prompt information, and wherein said at least one application is from the group comprising a text-editing application, a spread-sheet application, a graphics application, a database application, and a process control application.

9. A virtual input interface in a data processing system, said interface comprising:

means (301, FIG. 15) for accepting input from at least one physical device;

means for converting said physical device input into virtual input; and

means (300) responsive to said virtual input for performing processing operations upon said virtual input.

10. The virtual input interface as recited in claim 9, wherein said at least one physical device can be removed from said system without affecting the operation of the remainder of said system.

11. The virtual input interface as recited in claim 9, wherein at least one additional physical device can be added to said system without affecting the operation of the remainder of said system.

12. A virtual output interface in a data processing system, said interface comprising:

means (306, FIG. 15) for accepting virtual output generated by system processing operations; and means for converting said virtual output into at least one physical output suitable for use by at least one physical device.

13. The virtual output interface as recited in claim 12, wherein said at least one physical device can be removed from said system without affecting the operation of the remainder of said system.

14. The virtual output interface as recited in claim 12, wherein at least one additional physical device can be added to said system without affecting the operation of the remainder of said system.

15. A human interface in a data processing system, said interface comprising:

means (343, FIG. 18) for representing information in at least one abstract, device-independent picture:

means (301, 303, FIG. 6) permitting said picture to be shared by a plurality of independent applications; and

means permitting live information from said picture to be displayed in more than one window simultaneously.

16. The human interface as recited in claim 15, and further comprising a plurality of abstract, device-independent pictures (341-343, FIG. 18); and

means permitting each of said pictures to be shared by a plurality of independent applications.

17. The human interface as recited in claim 15, wherein said picture comprises user interface information, said human interface further comprising:

means (370-372, FIG. 19) for simultaneously displaying images from at least one of said applications and from said user interface information.

18. The human interface as recited in claim 17, wherein said user interface information includes information from the group comprising menu information, icon information, help information, and prompt information, and wherein said at least one application is from the group comprising a text-editing application, a spread-sheet application, a graphics application, a database application, and a process control application.

29

*FIG. 1*

*FIG. 2*

PICTURE 'B'

PICTURE 'A'

171

175

174

170

177

176

178

SCREEN

## FIG. 4

APPLICATIONS

202    203

201                                         180

DISPLAY    FORM    182                  213

204        181        205        184

PICTURE

206

185                          212

WINDOW

210

211        186        207

VIRTUAL INPUT DEVICE | VIRTUAL OUTPUT DEVICE

208                    209                    187

PHYSICAL DEVICES

188

## FIG. 5

FIG. 6

0 274 087

| HEADER | APPL | TAG | VALUE |
|---|---|---|---|

| LENGTH | TYPE | RSV. | ATTRIBUTES | POSITION | BOX | COLOR | BKGD | FILL | PAT. |
|---|---|---|---|---|---|---|---|---|---|

# FIG. 7

# FIG. 8

'CLOSE' BOX — TITLE BAR — 'BLOW-UP' BOX

ANNUAL RAINFALL

PALETTE BAR

PRINT

CLEAR

QUIT

?

PANE OUTLINE — SCROLL BARS

CORNER BOX — WINDOW OUTLINE — 'RESIZE' BOX

# FIG. 3

150

151   153   155

"RESOURCE" | P C R T | | P N T F | | | EOM

156  157   158  159   160

FIG. 9

0 274 087

FIG. 10

# FIG. 11

APPLICATION REQUESTS — 249

PICTURE — 250

VIEW — 251    DRAW — 252    253 — REPLACE    ERASE — 254    ETC. — 255

**VIEW:**
NO → FIND OLD VIEW

NEW VIEW? → ALLOCATE A DESCRIPTOR → FILL IN LOCATION AND SIZE OF "VIEW" → DONE

**DRAW:**
SAVE "VIRTUAL OUTPUT" TO INTERNAL LIST

**REPLACE:**
FIND OLD OUTPUT IN LIST AND REPLACE WITH GIVEN OUTPUT

**ERASE:**
FIND OLD OUTPUT AND REMOVE FROM LIST

HAS LIST BEEN MODIFIED?   NO → DONE

REPEAT FOR EACH "VIEW":
NO ⌐ ARE CHANGES WITHIN THE "VIEW"? → SEND OUTPUT TO WINDOW → DONE

0 274 087

0 274 087

271      272      273      274      275

| APPLICATION 1 | APPLICATION 2 | APPLICATION 3 | APPLICATION 4 | ETC. |

PICTURE MANAGER

276

280      281      282      283      284      285

| REGISTER APPLICATION | DRAW | COPY | REPLACE | ERASE | ETC. |

ASSOCIATE NAME OF
APPLICATION WITH A
PARTICULAR PROCESS

DONE

FOR EACH AFFECTED ELEMENT:

— NO — DOES ELEMENT BELONG TO APPLICATION?

↓YES

USE THE ELEMENT

290

DONE

**FIG. 13**

262

| GRAPH PACKAGE |

| SPREADSHEET | | WORD-PROCESSOR |

260    266           264

268

| PROCESS CONTROL | | PICTURE | | DATA BASE |

265

**FIG. 12**

☐ ANNUAL RAINFALL  ☐

| → | WHEREAS RAINFALL IN 1982 WAS<br>LESS THAN THE PRECEDING YEAR. } 291 |
| ← | |

| | YEAR | 1981 | 1982 | 1983 | |
| PRINT | | | | | |
| CLEAR | ANNUAL<br>RAINFALL | 19.2 | 16.5 | 20.3 | } 292 |
| QUIT | | | | | |
| ? | MONTHLY<br>RAINFALL | 1.6 | 1.4 | 1.7 | |

*FIG. 14*

REAL INPUT DEVICE(S)

301 VIRTUAL INPUT MANAGER

300 CONSOLE MANAGER

302 PICTURE MANAGER

304 WINDOW MANAGER

306 VIRTUAL OUTPUT MANAGER

REAL OUTPUT DEVICE(S)

*FIG. 15*

VIRTUAL INPUT → CONSOLE  310

311 VIRTUAL "KEY"
312 VIRTUAL "POSITION"
313 VIRTUAL "ACTION"
314 VIRTUAL "FUNCTION"
315 VIRTUAL "MENU"
316 ETC.

NO CURSOR INSIDE A WINDOW?
NO NOT A VIRTUAL TERMINAL?
NO CURRENTLY EDITING?
UPDATE A PICTURE
DONE

NO AUTO-HIGHLIGHT OPTION ENABLED?
NO CURSOR ON AN ELEMENT
HIGHLIGHT THE ELEMENT (UPDATE A PICTURE)
DONE

"SELECT" "OPEN" "CLOSE" "SCROLL" "HELP" "TEST" "DESELECT" "CANCEL"
UPDATE PICTURE OR UPDATE WINDOW OR INITIATE DIALOG
DONE

NOTIFY DIALOG MANAGER
DONE

CURSOR IN A WINDOW? NO USER METAPHOR
REQUEST MENU FROM WINDOW (OR METAPHOR)
MENU DEFINED? NO
NOTIFY OWNER OF WINDOW (OR METAPHOR)
POP-UP MENU
GET RESPONSE
SEND RESPONSE TO WHOEVER OWNS THE WINDOW → DONE

FIG. 16

0 274 087

VIRTUAL OUTPUT

PICTURE ⌐320

321 DRAW | 322 COPY | 323 REPLACE | ERASE ⌐324 | 325 "HIT" | 326 MOVE | 327 ETC.

SAVE GIVEN OUTPUT | COPY OLD OUTPUT | REPLACE OLD OUTPUT | ERASE OLD OUTPUT | FIND OLD OUTPUT | CHANGE LOCATION OF OUTPUT ON SCREEN

DONE | | | DONE

SEND CHANGES TO WINDOW

SEND TO WINDOW MANAGER

SEND TO OUTPUT MANAGER

SEND TO REAL DEVICE

DONE

*FIG. 17*

0 274 087

0 274 087

FIG. 18

FIG. 19

```
     Module          : %M% %I%
     Date submitted  : %E% %U%
     Author          : Frank Kolnick
     Origin          : cX
     Description      : Console Manager

*******************************************************************/

#ifndef lint
static char SrcId[] = "%Z% %M%:%I%";
#endif
/* Console manager:  global data */

#include     <cX.h>                                  /* cX definitions */
#include     <HI.h>                                  /* picture, etc. definitions */
#include     <memory.h>
#include     <string.h>
#include     <gen_codes.h>
static long none[2] = {0,0};

#define      MIN_HT (1*VCHAR_HT)                      /* minimum window height */
#define      MIN_WD (5*VCHAR_WD)                      /* minimum window width */
#define      POOL_SIZE 10                             /* #nodes in local pool */
#define      activate(node) if (!node->never) map->active = node

typedef struct names                                 /* name of console, etc.: */
{
    char                type_of_structure[16];       /*      (identifies struct.) */
    char                console[32];                 /*      console's name */
    char                class[32];                   /*      console's class */
    char                screen[32];                  /*      screen's name */
    char                user[64];                    /*      screen's user's name */
    char                metaphor[32];                /*      preferred metaphor */
} NAME;

typedef struct editstat                              /* editing status: */
{
```

```c
        char                    type_of_structure[16];  /*      (identifies struct.) */
        char                    type;                   /*      element type */
        char                    *text;                  /*      start of text */
        char                    *text_end;              /*      end of text */
        char                    *pos;                   /*      position in text */
        char                    *draw_msg;              /*      original msg. */
        unsigned long           msg_size;               /*      msg. size */
        P_E_HDR                 *hdr;                   /*      ->element header */
        short                   row, col;               /*      element position */
        short                   height, width;          /*      box dimensions */
        CONNECTOR               picture;                /*      conn. to picture mgr. */
) EDIT;

typedef struct mapnode                                  /* maps pictures to windows:  */
{
        struct mapnode          *nxt, *pre;             /*      links */
        short                   row, col;               /*      window's position */
        short                   height, width;          /*      pane size */
        short                   out_ht, out_wd;         /*      outer dimensions */
        short                   outer;                  /*      outline + pane width */
        short                   top, bottom;            /*      window margins... */
        short                   left, right;            /*      ... */
        short                   fill_row, fill_col;     /*      position and area ... */
        short                   fill_ht, fill_wd;       /*      ... before 'fill' */
        char                    outline, pane;          /*      outline & pane widths */
        char                    style;                  /*      outline style */
        unsigned char           pool;                   /*      'from local pool' */
        CONNECTOR               owner;                  /*      conn. to creator */
        CONNECTOR               terminal;               /*      conn. to terminal */
        CONNECTOR               window, picture;        /*      to window, picture */
        char                    name[32];               /*      window's name */
        char                    device[32];             /*      input device's name */
        unsigned char           metaphor;               /*      metaphor window */
        unsigned char           tight;                  /*      close-fitting window */
        unsigned char           default_pos;            /*      default position */
        unsigned char           chars;                  /*      character-oriented */
        unsigned char           on_element;             /*      notify on select */
        unsigned char           on_select;              /*      ... select anywhere */
        unsigned char           on_cancel;              /*      ... select cancelled */
        unsigned char           on_open;                /*      ... 'open' key */
        unsigned char           on_modify;              /*      ... modification */
        unsigned char           on_close;               /*      ... before close */
        unsigned char           on_quit;                /*      ... after close */
        unsigned char           on_window_edge;         /*      ... edge of window */
        unsigned char           on_picture_edge;        /*      ... edge of picture */
        unsigned char           on_anychar;             /*      ... any input char. */
        unsigned char           on_delete;              /*      ... char. deleted */
```

```c
        unsigned char          on box;                  /*    ... end of box */
        unsigned char          on location;             /*    ... cursor location */
        unsigned char          on insert;               /*    ... new element */
        unsigned char          auto highlight;          /*    auto. highlighting */
        unsigned char          editable;                /*    can edit picture */
        unsigned char          multi select;            /*    multi-elem. selection */
        unsigned char          never;                   /*    don't make active */
        unsigned char          remap;                   /*    remap at window edge */
        unsigned char          nonmod;                  /*    non-modifiable */
        unsigned char          fixed;                   /*    immoveable */
        unsigned char          keep open;               /*    user can't close */
        short                  title, menu, palette;    /*    title (etc.) bar... */
        short                  Vscroll, Hscroll;        /*    heights/widths... */
        short                  general use;             /*    ... */
        short                  corner, resize_box;      /*    ... */
        unsigned char          move mark;               /*    move mark on 'select' */
        unsigned char          special[22];             /*    special chars. */
        unsigned char          term[12];                /*    end-of-input chars. */
        EDIT                   *edit;                   /*    ->editing descriptor */
} MAPNODE;

typedef struct screen_descr                             /* screen parameters: */
{
        char                   type_of_structure[16];   /*    (identifies struct.) */
        short                  row, col;                /*    cursor position */
        short                  height, width;           /*    screen dimensions */
        short                  meta row, meta col;      /*    metaphor limits... */
        short                  meta ht, meta wd;        /*    ... */
        short                  char ht, char wd;        /*    char. dimensions */
        short                  colors;                  /*    no. of colors */
        unsigned char          char gen;                /*    'h/w char. generator' */
        unsigned char          char align;              /*    'align to char.' */
        unsigned char          bit map;                 /*    'bit-mapped display' */
        unsigned char          fonts;                   /*    'variable fonts' */
} SCREEN;

typedef struct windowstat                               /* window status: */
{
        char                   type_of_structure[16];   /*    (identifies struct.) */
        char                   area;                    /*    current area */
        char                   bar;                     /*    current bar */
        short                  row, col;                /*    converted cursor pos. */
        P E HDR                *hdr;                     /*    ->element header */
        short                  elem row, elem col;      /*    current element pos'n */
        short                  prev row, prev col;      /*    prev. element pos'n */
        unsigned char          different;               /*    'current != prev.' */
        MAPNODE                *node;                    /*    ->corresponding node */
        MAPNODE                *previous;                /*    ->previous node */
} WINDOW;
```

0 274 087

```c
typedef struct selstat                                    /* selection status: */
{
    char                    type_of_structure[16];    /*      (identifies struct.) */
    unsigned char           pending;                  /*      select in progress */
    char                    area;                     /*      original window area */
    short                   row, col;                 /*      orig. pos'n in window */
    MAPNODE                 *map;                     /*      ->original map node */
} SELECTION;

typedef struct cur_message                                /* current message: */
{
    char                    type_of_structure[16];    /*      (identifies struct.) */
    char                    *buf;                     /*      ->msg. buffer */
    CONNECTOR               sender;                   /*      conn. to sender */
    long                    size;                     /*      size of msg. */
} MESSAGE;

typedef struct process_ids                                /* identifies key processes: */
{
    char                    type_of_structure[16];    /*      (identifies struct.) */
    CONNECTOR               output;                   /*      Output Manager */
    CONNECTOR               input;                    /*      Input Manager */
    CONNECTOR               dialogue;                 /*      Dialog Manager */
    CONNECTOR               self;                     /*      this process */
    CONNECTOR               owner;                    /*      initializing process */
} CONNS;

typedef struct lists                                      /* list pointers, etc.: */
{
    char                    type_of_structure[16];    /*      (identifies struct.) */
    MAPNODE                 *pool;                    /*      ->buffer pool */
    long                    count;                    /*      current #window nodes */
    MAPNODE                 *active;                  /*      ->active node, if any */
    MAPNODE                 *first;                   /*      ->start of list */
    MAPNODE                 *last;                    /*      ->end of list */
    MAPNODE                 *last_active;             /*      ->prev. active node */
    MAPNODE                 *metaphor;                /*      ->metaphor node */
} LIST;

/*  Local functions:  */

MAPNODE     *find_window(), *create_window(), *create_terminal();
long        NewProc();
```

```
/* Console manager:   main-line */

PROCESS(Console)
{
    NAME                    *name;
    SCREEN                  *screen;
    LIST                    *map_ptr;
    SELECTION               *sel;
    WINDOW                  *window;
    MESSAGE                 *msg_ptr;
    CONNS                   *conn_ptr;
    register LIST           *map;
    register MESSAGE        *msg;
    register CONNS          *conn;
    register short          go = YES;
    long                    list_size = 0, *req = NULL;

    Set_event_key("Console mgr.");
    init_CM(&name,&screen,&map_ptr,&sel,&window,&msg_ptr,&conn_ptr);
    map = map_ptr;
    msg = msg_ptr;
    conn = conn_ptr;
    start_up(name,screen,conn);
    while (go)
    {
        msg->buf = Get(0,&msg->sender,&msg->size);
        if (|*(msg->buf+1))
            input(screen,map,sel,window,msg,conn,*msg->buf);
        else
            request(name,screen,map,sel,msg,conn,msg->buf,msg->size);
        highlight(map->active,map);
        free_requests(msg->buf,msg->size,&req,&list_size);
    }
    Exit();
}
```

```
free_requests(msg,size,req,list_size)
register char    *msg, **req;
register long    size, *list_size;
{
    register char    *temp, *next;

    if (msg)
    {
        *(char**)msg = *req;
        *req = msg;
        *list_size += size;
        if (!Any_msg(NULL) || *list_size > 1000)
            for (temp = *req, *req = NULL, *list_size = 0; temp; temp = next)
            {
                next = *(char**)temp;
                Free(temp);
            }
    }
}
```

```
init CM(name,screen,map,sel,window,msg,conn)
register NAME          **name;
register SCREEN        **screen;
register LIST          **map;
register SELECTION     **sel;
WINDOW                 **window;
MESSAGE                **msg;
CONNS                  **conn;
{
    *name = (NAME *) Alloc(sizeof(NAME),YES);
    *screen = (SCREEN *) Alloc(sizeof(SCREEN),YES);
    *map = (LIST *) Alloc(sizeof(LIST),YES);
    *sel = (SELECTION *) Alloc(sizeof(SELECTION),YES);
    *window = (WINDOW *) Alloc(sizeof(WINDOW),YES);
    *msg = (MESSAGE *) Alloc(sizeof(MESSAGE),YES);
    *conn = (CONNS *) Alloc(sizeof(CONNS),YES);
    memset(*name,0,sizeof(NAME));
    strcpy(*name,"name:");
    memset(*screen,0,sizeof(SCREEN));
    strcpy(*screen,"screen:");
    memset(*map,0,sizeof(LIST));
    strcpy(*map,"list:");
    memset(*sel,0,sizeof(SELECTION));
    strcpy(*sel,"selection:");
    memset(*window,0,sizeof(WINDOW));
    strcpy(*window,"window:");
    memset(*msg,0,sizeof(MESSAGE));
    strcpy(*msg,"message:");
    memset(*conn,0,sizeof(CONNS));
    strcpy(*conn,"conns:");
    (*map)->pool = (MAPNODE *) Alloc(POOL_SIZE*sizeof(MAPNODE),YES);
    memset((*map)->pool,0,POOL_SIZE*sizeof(MAPNODE));
}
```

0 274 087

```
start_up(name,screen,conn)
register NAME    *name;
register SCREEN *screen;
register CONNS  *conn;
(
    register char    *msg;
    CONNECTOR        config;
    short            *p;
    long             size;

    while ((msg = Get(0,&conn->owner,&size)) && strcmp(msg,"init"))
    (
        reply_status(msg,msg,"not ready",0);
        Free(msg);
    )
    strcpy(name->console,Find_triple(msg,"name",size,none,2,NULL));
    conn->self = *(CONNECTOR *) Find_triple(msg,"self",size,none,4,NULL);
    Free(msg);
    if (config.pid = NewProc("CMconfig","//processes/CMconfig",YES,-1))
    (
        Put(DIRECT,config.pid,Newmsg(32,"I",NULL));
        while (!Any_msg(config.pid))
            if (Any_msg(conn->owner.pid))
                Forward(DIRECT,config.pid,Get(conn->owner.pid,0,0));
            else
                Free(Call(NEXT,"Clock"
                    Newmsg(64,"set","attr=#5s",0,0,0,5,0),0,0));
        msg = Get(config.pid,0,&size);
        conn->input = *(CONNECTOR*) Find_triple(msg,"inp ",size,none,4,NULL);
        conn->output = *(CONNECTOR*)Find_triple(msg,"outp",size,none,4,NULL);
        conn->dialogue = *(CONNECTOR*) Find_triple(msg,"dial",size,none,4,NULL);
        Free(msg);
        if (msg = Call(DIRECT,conn->output.pid,Newmsg(32,"query",NULL),0,&size))
        (
            p = (short *) Find_triple(msg,"scrn",size,none,4,NULL);
            screen->meta_ht = screen->height = *p++;
            screen->meta_wd = screen->width = *p;
            screen->char_gen = screen->char_align =
                (char) Find_triple(msg,"char",size,NO,0,NULL);
            screen->colors = *(short*) Find_triple(msg,"clrs",size,none,2,NULL);
            screen->bit_map = (char) Find_triple(msg,"bmap",size,NO,0,NULL);
            screen->fonts = (char) Find_triple(msg,"font",size,NO,0,NULL);
            Free(msg);
        )
        else
            Note("'query' to output mgr. failed",msg);
        Put(DIRECT,conn->owner.pid,
            Newmsg(128,"ready","serv=#S; name=#S","console",name->console));
    )
)
```

```
request(name,screen,map,sel,msg,conn,buf,size)
register NAME        *name;
SCREEN               *screen;
register LIST        *map;
SELECTION            *sel;
register MESSAGE     *msg;
register CONNS       *conn;
register long        buf, size;
{
    if (!strcmp(buf,"create"))
        Create_resource(screen,map,buf,size,&conn->output,&msg->sender);
    else if (!strcmp(buf,"write"))
        element_selected(map,sel,msg);
    else if (!strcmp(buf,"delete"))
        Delete_resource(map,msg,conn,sel);
    else if (!strcmp(buf,"Meta"))
        Metaphor(screen,map,buf,size,&conn->output,&conn->dialogue);
    else if (!strcmp(buf,"user"))
        Set_user(name,buf,size);
    else if (!strcmp(buf,"resource"))
        ;
    else if (!strcmp(buf,"query"))
        Query(name,screen,map,msg,conn);
    else if (!strcmp(buf,"change"))
        Change(screen,map,msg);
    else if (!strcmp(buf,"remapped"))
        remap(&msg->sender,NULL,Find_triple(buf,"conn",0,0,8,0),sel,map);
    else if (!strcmp(buf,"failed"))
        Status(buf,size);
    else if (!strcmp(buf,"done") || !strcmp(buf,"status"))
        ;
    else if (conn->dialogue.pid)
    {
        buf = (long) Realloc(buf,size+20,YES);
        Append_triple(buf,"Cpos",4,&screen->row);
        Forward(DIRECT,conn->dialogue.pid,buf);
        msg->buf = NULL;
    }
    else
        reply_status(buf,buf,"unknown msg id",0);
}
```

```c
Query(name,screen,map,msg,conn)
NAME        *name;
SCREEN      *screen;
LIST        *map;
MESSAGE     *msg;
CONNS       *conn;
{
    static char         def_res[] = "console";
    register char       *window_name, *resource, *p;
    register MAPNODE    *node = NULL;
    CONNECTOR           *res;

    resource = Find_triple(msg->buf,"res ",msg->size,def_res,2,NULL);
    if (!strcmp(resource,"console"))
        Reply(msg->buf,Newmsg(500,"console",
            "name=#S; user=#S; clrs=#s; conn=#C; orig=#S",
            name->console,name->user,screen->colors,&conn->self,"console"));
    else
    {
        if (window_name = Find_triple(msg->buf,"name",msg->size,NULL,2,NULL))
        {
            if (!(p = strrchr(window_name,'/')))
                p = window_name;
            for (node = map->first;
                node && strcmp(p,node->name); node = node->nxt) ;
        }
        else if (res = (CONNECTOR*) Find_triple(msg->buf,"conn",0,NULL,1,NULL))
            for (node = map->first; node && node->window.pid != res->pid
                && node->picture.pid != res->pid
                && node->terminal.pid != res->pid; node = node->nxt) ;
        else
            reply_status(msg->buf,"-query","missing name/connector",0);
        if (node)
        {
            if (!strcmp(resource,"window"))
                Forward(DIRECT,node->window.pid,msg->buf);
            else if (!strcmp(resource,"terminal") && node->terminal.pid)
                Forward(DIRECT,node->terminal.pid,msg->buf);
            else if (!strcmp(resource,"picture") && node->picture.pid)
                Forward(DIRECT,node->picture.pid,msg->buf);
            else
                Free(msg->buf);
            msg->buf = NULL;
        }
    }
}
```

```
Create_resource(screen,map,buf,size,output,sender)
SCREEN            *screen;
LIST              *map;
CONNECTOR         *output, *sender;
register long     buf, size;
{
     static char          def_res[] = "window";
     register char        *resource, *p;
     register MAPNODE     *node = NULL;
     register CONNECTOR   *conn = NULL;
     CONNECTOR            picture;

     resource = Find_triple(buf,"res ",size,def_res,2,NULL);
     if (!strcmp(resource,"window")
         && (node = create_window(screen,map,output,"Window",buf,size)))
         (
             conn = &node->window;
             node->owner = *sender;
         )
     else if (!strcmp(resource,"terminal") && (node =
             create_terminal(screen,map,output,buf,size,sender)))
                 conn = &node->terminal;
     else if (!strcmp(resource,"picture"))
         if (picture.pid = NewProc("Picture","//processes/picture",YES,-1))
             (
             p = Alloc(size,YES);
             memcpy(p,buf,size);
             Free(Call(DIRECT,picture.pid,p,0,0));
             conn = &picture;
             )
     if (conn)
         Reply(buf,Newmsg(200,"connect","conn=#C; orig=#S; req=#S; res=#S",
             conn,"console","create",resource));
     else
         reply_status(buf,"-create","unknown resource type",0);
     activate(node);
}

Delete_resource(map,msg,conn,sel)
LIST              *map;
register MESSAGE  *msg;
register CONNS    *conn;
SELECTION         *sel;
{
     register MAPNODE     *node, *temp;
     CONNECTOR            *resource;
```

```
        if (resource=(CONNECTOR*)Find_triple(msg->buf,"conn",msg->size,NULL,8,NULL))
            if (!strcmp(Find_triple(msg->buf,"res ",0,NULL,2,NULL),"picture"))
            {
                Put(DIRECT,resource->pid,Newmsg(32,"quit",NULL));
                remap(&msg->sender,NULL,NULL,sel,map);
            }
            else
            {
                temp = map->active;
                for (node = map->first;
                        node && node->window.pid != resource->pid
                        && node->picture.pid != resource->pid
                        && node->terminal.pid != resource->pid; node = node->nxt) ;
                if (node)
                    close_window(node,map,sel,conn);
                if (Find_triple(msg->buf,"rply",msg->size,NO,0,NULL))
                    reply_status(msg->buf,"+delete","resource deleted",cX_DELETED);
                map->active = temp;
            }
    }

input(screen,map,sel,window,msg,conn,msgid)
SCREEN              *screen;
LIST                *map;
SELECTION           *sel;
register WINDOW     *window;
register MESSAGE    *msg;
CONNS               *conn;
register char       msgid;
{
    register char       code;
    register short      *pos;
    register MAPNODE    *node;

    pos = (short *) Find_once(msg->buf,"pos ",msg->size,none,4,NULL);
    code = *Find_triple(msg->buf,"\0\0\0\0",msg->size,none,1,NULL);
    node = map->active;
    if (msgid == 'K' && node)
        key_input(node,window,msg,code);
    else if (msgid == 'F' && node)
        function_key(node,code,&conn->dialogue);
    else
    {
        node = find_window(map,window,*pos,*(pos+1));
        if (msgid == 'P')
        {
            if (node && window->area == 'I')
                position(node,window);
            screen->row = *pos;
            screen->col = *(pos+1);
```

```c
        }
        if (msgid == 'A')
            action(node,screen,map,sel,window,msg,conn,code,*pos,*(pos+1));
        else if (msgid == 'M')
            menu(node,&map->metaphor,code,pos,&conn->dialogue);
    }
}

key_input(node,window,msg,code)
register MAPNODE       *node;
WINDOW                 *window;
register MESSAGE       *msg;
register char          code;
{
    register char      *m;
    register EDIT       *edit;

    if (node->terminal.pid)
    {
        Forward(DIRECT,node->terminal.pid,msg->buf);
        msg->buf = NULL;
    }
    else if (edit = node->edit)
    {
        if (code == 127)
            code = 8;
        if (code < 32)
            edit_text(edit,code,node,window);
        else if (*node->term && node->on_modify && strchr(node->term,code))
            end_edit(node,'M',window->row,window->col,code);
        else if (code < 127)
            if (*edit->pos)
            {
                *edit->pos++ = code;
                if (m = Alloc(edit->msg_size,YES))
                {
                    memcpy(m,edit->draw_msg,edit->msg_size);
                    Put(DIRECT,edit->picture.pid,m);
                }
            }
            else if (node->on_box)
                notify_process(node,
                    edit->row,edit->col,'B','I',edit->hdr,code,NULL);
        move_mark(edit->row,
            edit->col+(edit->pos-edit->text)*VCHAR_WD,&node->picture);
        if (*node->special && strchr(node->special,code))
            notify_process(node,edit->row,edit->col,'I','I',NULL,code,node);
    }
    else if (node->on_anychar)
        if ((code > 31 && code < 127) || code == 13 || code == 8)
            notify_process(node,edit->row,edit->col,'A','I',NULL,code,node);
}
```

```
edit text(edit,code,node,window)
register EDIT          *edit;
register char          code;
register MAPNODE       *node;
register WINDOW        *window;
{
        register char    *m;

        if (node->picture.pid)
            switch (code)
            {
                case 8:     if (edit->pos > edit->text)
                            {
                                edit->pos--;
                                memcpy(edit->pos,edit->pos+1,strlen(edit->pos+1));
                                *edit->text end = ' ';
                                if (m = Alloc(edit->msg_size,YES))
                                {
                                    memcpy(m,edit->draw msg,edit->msg_size);
                                    Put(DIRECT,edit->picture.pid,m);
                                }
                            }
                            else if (node->on delete)
                                notify process(node,edit->row,edit->col,
                                    'D','I',edit->hdr,code,NULL);
                            break;
                case 9:
                            break;
                case 11:
                            break;
                case 12:
                            break;
                case 10:
                case 13:    if (node->on modify)
                                end_edit(node,'M',window->row,window->col,code);
            }
}
```

0 274 087

```
end edit(node,why,row,col,code)
register MAPNODE    *node;
register char       why, code;
register short      row, col;
{
    register char   *element = NULL, *reply = NULL;
    register EDIT   *edit;

    if (edit = node->edit)
    {
        if (why && (why != 'X' || node->on_cancel))
        {
            reply = Call(DIRECT,node->picture.pid,Newmsg(64,"hit",
                "pos=#2s",(edit->hdr)->row,(edit->hdr)->col,0,0);
                    element = Find triple(reply,"data",0,NULL,1,NULL);
            notify process(node,row,col,why,'I',element,code,NULL);
            Free(reply);
        }
        Put(DIRECT,node->picture.pid,Newmsg(64,"select"
            "@pos=#2s; off",(edit->hdr)->row,(edit->hdr)->col));
        Free(edit->draw msg);
        edit->draw msg = NULL;
        Free(node->edit);
        node->edit = NULL;
    }
}
```

```
position(node,window)
register MAPNODE        *node;
register WINDOW         *window;
{
    register short         *reply;
    register P_E_HDR       *hdr;

    if (node->auto_highlight)
    {
        if (window->different)
            Put(DIRECT,node->picture.pid,Newmsg(32,"select","off"));
        reply = (short *) Call(DIRECT,node->picture.pid,
                Newmsg(64,"hit","pos=%2s; sel",window->row,window->col),0,0);
        if (hdr = (P_E_HDR *) Find_triple(reply,"data",0,NULL,1,NULL))
        {
            window->different = (window->node != window->previous
                                || hdr->row != window->prev_row
                                || hdr->col != window->prev_col);
            window->prev_row = window->elem_row;
            window->prev_col = window->elem_col;
            window->elem_row = hdr->row;
            window->elem_col = hdr->col;
        }
        if (reply)
            Free(reply);
    }
    if (node->on_location)
        notify_process(node,window->row,window->col,'L','I',NULL,NULL,NULL);
}
```

```
action(node,screen,map,sel,window,msg,conn,act,row,col)
register MAPNODE      *node;
SCREEN                *screen;
register LIST         *map;
register SELECTION    *sel;
register WINDOW       *window;
MESSAGE               *msg;
CONNS                 *conn;
register char         act;
register short        row, col;
(
    switch (act)
    (
        case 's':   select(node,screen,map,sel,window,msg,conn);
                    break;
        case 'W':   Put(DIRECT,conn->dialogue.pid,
                        Newmsg(64,"Open","pos=%2s",row,col));
                    break;
        case 'X':   if (sel->pending)
                        deselect(screen,map,sel,row,col);
                    break;
        case 'u': case 'd': case 'l': case 'r':
        case 'U': case 'D': case 'L': case 'R':
                    scroll(act,map->active);
                    break;
        case 'N':   next_window(map);
                    break;
        case 'C':   cancel(sel);
                    break;
        case 'w':   close(node,map,sel,conn);
                    break;
        case 'H':   notify_process(node,row,col,'?',NULL,NULL,NULL,map->active);
                    break;
        case 'T':   NewProc("test","//processes/test",NO,-1);
                    break;
        case '-':   Put(DIRECT,conn->output.pid,Newmsg(32,"hide",NULL));
                    break;
        case '+':   Put(DIRECT,conn->output.pid,Newmsg(32,"restore",NULL));
    )
)
```

```
function key(node,key_no,dialogue)
register MAPNODE      *node;
char                  key_no;
register CONNECTOR    *dialogue;
{
    register char     *reply;

    if (key_no && node)
        if (reply = Call(DIRECT,node->window.pid,Newmsg(64,"keys?",NULL),0,0))
            if (!strcmp(reply,"keys"))
            {
                reply = Realloc(reply,256,YES);
                strcpy(reply,"Key");
                Append_triple(reply,"num ",1,&key_no);
                Append_triple(reply,"ownr",8,&node->owner);
                Put(DIRECT,dialogue->pid,reply);
            }
            else
                Free(reply);
}

menu(node,metaphor,key_no,pos,dialogue)
register MAPNODE      *node, *metaphor;
register char         key_no;
short                 *pos;
CONNECTOR             *dialogue;
{
    register char     *reply;
    register CONNECTOR *owner = NULL;

    if (node)
        owner = &node->owner;
    else
        node = metaphor;
    if (key_no && node && (reply = Call(DIRECT,node->window.pid,
        Newmsg(64,"menu?","key=#b",key_no),0,0)))
        if (!strcmp(reply,"failed"))
        {
            Free(reply);
            reply = NULL;
            if (reply = Call(DIRECT,metaphor->window.pid,
                Newmsg(64,"menu?","key=#b",key_no),0,0))
                if (!strcmp(reply,"failed"))
                {
                    Free(reply);
                    reply = NULL;
                }
        }
    if (reply)
    {
```

0 274 087

```
        reply = Realloc(reply,256,YES);
        strcpy(reply,"Menu");
        Append_triple(reply,"pos ",4,pos);
        if (owner)
            Append_triple(reply,"ownr",4,owner);
        Put(DIRECT,dialogue->pid,reply);
    }
}

close(node,map,sel,conn)
register MAPNODE     *node;
register LIST        *map;
register SELECTION   *sel;
register CONNS       *conn;
{
    if (node && !node->keep_open)
        if (node->on_close)
            notify_process(node,0,0,'C',NULL,NULL,NULL,map->active);
        else
            close_window(node,map,sel,conn);
}

close_window(node,map,sel,conn)
register MAPNODE     *node;
register LIST        *map;
register SELECTION   *sel;
CONNS                *conn;
{
    end_edit(node,'X',0,0,NULL);
    Put(DIRECT,node->window.pid,Newmsg(32,"Q",NULL));
    if (node->terminal.pid)
    {
        Put(DIRECT,node->terminal.pid,Newmsg(32,"quit",NULL));
        Put(DIRECT,node->picture.pid,Newmsg(32,"quit",NULL));
    }
    node->window.pid = node->picture.pid = node->terminal.pid = NULL;
    if (node == map->active)
    {
        Put(DIRECT,conn->dialogue.pid,Newmsg(32,"keys",NULL));
        next_window(map);
    }
    if (node == map->active)
        map->active = NULL;
    if (node == sel->map)
    {
        sel->map = NULL;
        sel->pending = NO;
```

```
            }
        if (node->on quit)
            notify_process(node,0,0,'Q',NULL,NULL,NULL,map->active);
        unmap(node,map);
        free_node(node);
        clip_window(map->last);
    }


    next_window(map)
    register LIST     *map;
    {
        register MAPNODE       *node;

        if ((node = map->active) && node->nxt)
            node = node->nxt;
        while (node && node->never && node != map->active)
        {
            node = node->nxt;
            if (!node)
                node = map->first;
        }
        if (node)
        {
            unmap(node,map);
            map_after(node,NULL,map);
            activate(node);
            clip_window(map->last);
        }
    }

    select(node,screen,map,sel,window,msg,conn)
    register MAPNODE       *node;
    LIST                   *map;
    register SELECTION     *sel;
    register WINDOW        *window;
    register MESSAGE       *msg;
    CONNS                  *conn;
    {
        if (sel->pending)
            cancel(sel);
        if (node)
        {
            Put(DIRECT,node->picture.pid,Newmsg(32,"select","off"));
            sel->row = window->row;
            sel->col = window->col;
            sel->area = window->area;
            sel->map = node;
            if (sel->area != 'I')
            {
```

```c
                    if (!node->metaphor)
                            sel_window(node,screen,map,sel,window,conn);
                }
                else if (!node->terminal.pid)
                        sel_element(node,map,sel,msg);
                activate(node);
        }
}

sel_element(node,map,sel,msg)
register MAPNODE                *node;
LIST                            *map;
register SELECTION              *sel;
register MESSAGE                *msg;
{
        register char   *reply;
        long            size;

        if (node->move_mark)
                move_mark(sel->row,sel->col,&node->picture);
        if (reply = Call(DIRECT,node->picture.pid,
            Newmsg(64,"hit","pos=#2s; sel",sel->row,sel->col),0,&size))
                if (!strcmp(reply,"write")){
                {
                        Free(msg->buf);
                        sel->pending = YES;
                        msg->buf = reply;
                        msg->size = size;
                        msg->sender = node->picture;
                        element_selected(map,sel,msg);
                }
                else if (node->on_select)
                {
                        notify_process(node,
                                sel->row,sel->col,'s','I',NULL,NULL,map->active);
                        Free(reply);
                }
}
```

```
element_selected(map,sel,msg)
LIST            *map;
register SELECTION  *sel;
register MESSAGE    *msg;
{
    register MAPNODE    *node;
    register P_E_HDR    *hdr;
    register short      row, col;

    node = sel->map;
    if (!sel->pending)
        for (node = map->first;
            node && (node->picture.pid != msg->sender.pid); node = node->nxt);
    if (node && node->picture.pid == msg->sender.pid)
    {
        activate(node);
        end_edit(node,'X',0,0,NULL);
        if (hdr = (P_E_HDR*) find_triple(msg->buf,"data",msg->size,NULL,1,NULL))
        {
            row = hdr->row;
            col = hdr->col;
            if (sel->pending)
            {
                row = sel->row;
                col = sel->col;
                if (node->on_element)
                    notify_process(node,row,col,'S','I',hdr,NULL,map->active);
            }
            if (hdr->attr.editable && hdr->type == 't')
                start_edit(msg,node,hdr,row,col);
            else
                Put(DIRECT,node->picture.pid,Newmsg(32,"select","off"));
        }
    }
    sel->pending = NO;
}
```

```
start edit(msg,node,hdr,row,col)
MESSAGE              *msg;
register MAPNODE     *node;
register P_E_HDR     *hdr;
register short       row, col;
{
    register EDIT    *edit;
    register short   offset;
    register char    *pos;

    node->edit = edit = (EDIT *) Alloc(sizeof(EDIT),YES);
    strcpy(edit,"edit:");
    edit->draw_msg = msg->buf;
    strcpy(edit->draw_msg,"replace");
    edit->msg_size = msg->size;
    msg->buf = NULL;
    offset = (((row - hdr->row) * hdr->width) + (col - hdr->col)) / VCHAR_WD;
    edit->hdr = hdr;
    edit->picture.pid = node->picture.pid;
    edit->type = edit->hdr->type;
    pos = (char *) hdr + sizeof(P_E_HDR);
    if (hdr->attr.appl)
        pos += 4;
    if (hdr->attr.tagged)
        pos += strlen(pos) + 1;
    Long_align(pos);
    pos += sizeof(long) + 2 * sizeof(short);
    edit->text = edit->text_end = edit->pos = pos;
    edit->text_end += strlen(pos) - 1;
    edit->pos += offset;
    edit->row = hdr->row;
    edit->col = hdr->col;
    edit->height = hdr->height;
    edit->width = hdr->width;
    move_mark(row,col,&node->picture);
}
```

```c
sel_window(node,screen,map,sel,window,conn)
register MAPNODE    *node;
LIST                *map;
SCREEN              *screen;
register SELECTION  *sel;
register WINDOW     *window;
CONNS               *conn;
{
    register char   *tag = NULL;

    sel->pending = NO;
    if (window->hdr && window->hdr->attr.tagged && window->hdr->attr.selectable)
    {
        tag = (char *) window->hdr + sizeof(P_E_HDR);
        if (window->hdr->attr.appl)
            tag += 4;
    }
    if (tag && strcmp(tag,"RESIZE!"))
    {
        if (!strcmp(tag,"CLOSE!"))
            close(node,map,sel,conn);
        else if (!strcmp(tag,"FILL!"))
            fill_screen(node,screen,map);
        else if (!strcmp(tag,"UP!") || !strcmp(tag,"DOWN!")
            || !strcmp(tag,"LEFT!") || !strcmp(tag,"RIGHT!"))
            scroll(*tag-'A'+'a',node);
        else
            notify_process(node,window->row,window->col,
                'S',window->bar,window->hdr,NULL,node);
    }
    else if (sel->pending = !node->nonmod && (window->area == 'r'
            || window->area == 'c' || !strcmp(tag,"RESIZE!")))
    {
        Put(DIRECT,node->window.pid,Newmsg(64,"c","colr=#b; bar=#b",CYAN,'O'));
        Put(DIRECT,node->window.pid,
            Newmsg(64,"c","colr=#b; bar=#b; tag=#S",RED,'r',"RESIZE!"));
    }
    else if (sel->pending = !node->fixed)
        Put(DIRECT,node->window.pid,Newmsg(64,"c","colr=#b; bar=#b",RED,'O'));
}
```

```
fill_screen(node,screen,map)
register MAPNODE    *node;
register SCREEN     *screen;
register LIST       *map;
{
    register short  map_row, map_col, term_adjust, *p;
    char            *reply;

    if (!node->fill_ht)
    {
        Put(DIRECT,node->window.pid,
            Newmsg(64,"c","colr=#b; bar=#b; tag=#S",RED,'T',"FILL!"));
        term_adjust = screen->meta_ht - node->out_ht;
        memcpy(&node->fill_row,&node->row,4*sizeof(short));
        node->row = node->col = 0;
        node->height = screen->meta_ht - node->top - node->bottom;
        node->width = screen->meta_wd - node->left - node->right;
    }
    else
    {
        Put(DIRECT,node->window.pid,
            Newmsg(64,"c","colr=#b; bar=#b; tag=#S",0,'T',"FILL!"));
        memcpy(&node->row,&node->fill_row,4*sizeof(short));
        term_adjust = node->out_ht - screen->meta_ht;
        node=>fill_ht = 0;
    }
    align_window(screen,node);
    if (reply = Call(DIRECT,node->window.pid,Newmsg(32,"query",NULL),0,0))
    {
        p = (short *) Find_triple(reply,"view",0,none,4,NULL);
        map_row = *p++;
        map_col = *p;
        Free(reply);
        if (node->terminal.pid)
            if ((map_row -= term_adjust) < 0)
                map_row = 0;
        Put(DIRECT,node->window.pid,
            Newmsg(128,"set","pos=#2s; size=#2s; map=#2s",
            node->row,node->col,node->height,node->width,map_row,map_col));
        activate(node);
        clip_window(map->last);
    }
}
```

```
cancel(sel)
register SELECTION   *sel;
{
    register MAPNODE      *node;

    if ((node = sel->map) && sel->pending)
    {
        end edit(node,'X',0,0,NULL);
        if (node->picture.pid)
            Put(DIRECT,node->picture.pid,Newmsg(32,"select","off"));
        if (node->window.pid)
        {
            Put(DIRECT,node->window.pid,Newmsg(64,"c","colr=#b; bar=#b",0,'O'));
            Put(DIRECT,node->window.pid,
                Newmsg(64,"c","colr=#b; bar=#b; tag=#S",0,'r',"RESIZE!"));
        }
    }
    sel->pending = NO;
}

deselect(screen,map,sel,row,col)
register SCREEN      *screen;
register LIST        *map;
register SELECTION   *sel;
register short       row, col;
{
    register MAPNODE      *node;

    sel->pending = NO;
    node = sel->map;
    if (sel->area == 'r' || sel->area == 'c')
    {
        resize(screen,node,
            row - node->row - node->top - node->bottom,
            col - node->col - node->left - node->right);
        Put(DIRECT,node->window.pid,
            Newmsg(64,"c","colr=#b; bar=#b; tag=#S",0,'r',"RESIZE!"));
    }
    else
    {
        node->row = row;
        node->col = col;
        align window(screen,node);
        Put(DIRECT,node->window.pid,
            Newmsg(64,"set","pos=#2s",node->row,node->col));
    }
    clip window(map->last);
    Put(DIRECT,node->window.pid,Newmsg(64,"c","colr=#b; bar=#b",0,'O'));
}
```

```
resize(screen,node,new_ht,new_wd)
register SCREEN        *screen;
register MAPNODE       *node;
register short         new_ht, new_wd;
{
    register short      map_row, map_col, *p;
    register char       *reply;

    if (new_ht < MIN_HT)
        new_ht = MIN_HT;
    if (new_wd < MIN_WD)
        new_wd = MIN_WD;
    node->height = new_ht;
    node->width = new_wd;
    reply = Call(DIRECT,node->window.pid,Newmsg(32,"query",NULL),0,0);
    p = (short *) Find_triple(reply,"view",0,none,4,NULL);
    map_row = *p++;
    map_col = *p;
    Free(reply);
    if (node->terminal.pid)
    {
        map_row = map_row - (new_ht - node->out_ht);
        map_row = (map_row / VCHAR_HT) * VCHAR_HT;
    }
    align_window(screen,node);
    Put(DIRECT,node->window.pid,Newmsg(128,"set","size=#2s; map=#2s",
        node->height,node->width,map_row,map_col));
    Put(DIRECT,node->window.pid,Newmsg(64,"c","colr=#b; bar=#b",0,'O'));
}
```

```
scroll(direction,node)
register char       direction;
register MAPNODE    *node;
{
    register char   *reply;
    register short  low_row, low_col, pict_ht, pict_wd, *p;
    short           map_row, map_col;

    if (node && node->picture.pid && node->window.pid && !node->metaphor)
        if (reply = Call(DIRECT,node->window.pid,Newmsg(64,"query",NULL),0,0))
        {
            if (p = (short *) Find_triple(reply,"view",0,NULL,4,NULL))
            {
                map_row = *p++;
                map_col = *p;
                Free(reply);
                reply =
                    Call(DIRECT,node->picture.pid,Newmsg(32,"query",NULL),0,0);
                p = (short *) Find_triple(reply,"size",0,NULL,4,NULL);
                pict_ht = *p++;
                pict_wd = *p;
                p = (short *) Find_triple(reply,"low ",0,NULL,4,NULL);
                low_row = *p++;
                low_col = *p;
                scroll_pos(node,direction,
                    &map_row,&map_col,low_row,low_col,pict_ht,pict_wd);
                Put(DIRECT,node->window.pid,Newmsg(64,"map",
                    "to=#C; at=#2s",&node->picture,map_row,map_col));
            }
            Free(reply);
        }
}
```

```
scroll_pos(node,direction,map_row,map_col,low_row,low_col,pict_ht,pict_wd)
register MAPNODE     *node;
register char        direction;
register short       low_row, low_col, pict_ht, pict_wd, *map_row, *map_col;
{
    switch (direction)
    {
        case 'u':   if (*map_row - low_row >= VCHAR_HT)
                        *map_row -= VCHAR_HT;
                    break;
        case 'd':   if (pict_ht - (*map_row-low_row) - node->height >= VCHAR_HT)
                        *map_row += VCHAR_HT;
                    break;
        case 'l':   if (*map_col - low_col >= VCHAR_WD)
                        *map_col -= VCHAR_WD;
                    break;
        case 'r':   if (pict_wd - (*map_col-low_col) - node->width >= VCHAR_WD)
                        *map_col += VCHAR_WD;
                    break;
        case 'U':   if (*map_row - low_row >= node->height)
                        *map_row -= node->height;
                    else
                        *map_row = low_row;
                    break;
        case 'D':   if (pict_ht - (*map_row - low_row) >= 2 * node->height)
                        *map_row += node->height;
                    else
                        *map_row = pict_ht - low_row - node->height;
                    break;
        case 'L':   if (*map_col - low_col >= node->width)
                        *map_col -= node->width;
                    else
                        *map_col = low_col;
                    break;
        case 'R':   if (pict_wd - (*map_col - low_col) >= 2 * node->width)
                        *map_col += node->width;
                    else
                        *map_col = pict_wd - low_col - node->width;
    }
}
```

0 274 087

```
notify_process(node,row,col,act,area,hdr,indic,active)
register MAPNODE       *node;
register P_E_HDR       *hdr;
register char          act, area;
char                   indic;
short                  row, col;
MAPNODE                *active;
{
    register char      *p, *m;
    register int       len = 0;

    if (hdr)
        len = *(short *) hdr;
    m = Newmsg(len+200,"click",
        "from=#C; map=#C; name=#S; actn=#b; what=#b; pos=#2s",
        &node->window,&node->picture,node->name,act,area,row,col);
    if (hdr)
    {
        p = Append_triple(m,"data",len+6,hdr);
        ((P_E_HDR*)p)->attr.selected = NO;
        p += *(short *) p;
        Long_align(p);
        *(short *) p = NULL;
    }
    if (indic)
        Append_triple(m,"char",1,&indic);
    if (active)
        Append_triple(m,"acty",4,&active->owner);
    Put(DIRECT,node->owner.pid,m);
}
```

```
Metaphor(screen,map,buf,size,output,dialogue)
register SCREEN       *screen;
register LIST         *map;
register long         buf, size, output;
CONNECTOR             *dialogue;
{
    register short       *p;
    register MAPNODE     *node;

    screen->meta_row = screen->meta_col = 0;
    screen->meta_ht = screen->height;
    screen->meta_wd = screen->width;
    if (node = create_window(screen,map,output,"Metaphor",buf,size))
    {
        map->metaphor = node;
        node->owner = *dialogue;
        p = (short *) Find_triple(buf,"area",size,none,8,NULL);
        screen->meta_row = *p++;
        screen->meta_col = *p++;
        screen->meta_ht = *p++;
        screen->meta_wd = *p;
        node->metaphor = node->never = node->keep_open = YES;
        node->fixed = node->nonmod = YES;
        Reply(buf,Newmsg(32,"connect","conn=#C",&node->window));
    }
    else
        reply_status(buf,"-Metaphor","can\'t create \'window\'",0);
}
```

```
MAPNODE *create_terminal(screen,map,output,buf,size,sender)
SCREEN                  *screen;
register LIST           *map;
CONNECTOR               *output;
register long           buf, size, sender;
{
    static char         def_type[] = "//processes/terminal";
    register MAPNODE     *node;
    register char        *p;
    CONNECTOR            terminal;

    if (Find_triple(buf,"name",size,NULL,1,NULL))
    {
        if (terminal.pid = NewProc("Terminal",
            Find_triple(buf,"emul",size,def_type,1,NULL),YES,-1))
        {
            p = Alloc(size,YES);
            memcpy(p,buf,size);
            memcpy(p,sender,sizeof(CONNECTOR));
            memcpy(p+sizeof(CONNECTOR),&terminal,sizeof(CONNECTOR));
            p = Call(DIRECT,terminal.pid,p,0,0);
            if (!strcmp(p,"create")
                && (node = create_window(screen,map,output,"Window",p,size)))
            {
                node->terminal = node->owner = terminal;
                Free(p);
                return(node);
            }
        }
        reply_status(buf,"-create","can\'t create \'terminal\'",0);
    }
    else
        reply_status(buf,"-create","(terminal) no name given",0);
    return(NULL);
}
```

```
MAPNODE  *create_window(screen,map,output,proc,buf,size)
SCREEN                  *screen;
LIST                    *map;
CONNECTOR               *output;
char                    *proc;
register long           buf, size;
(
        static char             def_outl[4] = (GREEN,3,BLACK,'S');
        register char           *window_name, *title, *p;
        register short          pict_row = 0, pict_col = 0;
        register MAPNODE        *node;
        char                    out_clr, out_fill, pane_clr;
        MAPNODE                 *new_node();

        if ((window_name = Find_triple(buf,"name",size,NULL,1,NULL))
            && (node = new_node(map,window_name))
            && (node->window.pid = NewProc(proc,"//processes/window",YES,-1)))
        (
            map_after(node,NULL,map);
            title = Find_triple(buf,"titl",size,window_name,1,NULL);
            init_node(node,buf,size);
            strcpy(node->device,Find_triple(buf,"from",size,none,2,NULL));
            strncpy(node->term,
                Find_triple(buf,"mod ",size,none,1,NULL),sizeof(node->term)-1;
            strncpy(node->special,
                Find_triple(buf,"spec",size,none,1,NULL),sizeof(node->special)-1;
            p = Find_triple(buf,"outl",size,def_outl,4,NULL);
            out_clr = *p++;
            node->outline = *p++;
            if (!(out_fill = *p++))
                out_fill = BLACK;
            if (!(node->style = *p))
                node->style = 'S';
            node->pane = 0;
            pane_clr = out_clr;
            if (p = Find_triple(buf,"pane",size,NULL,2,NULL))
            (
                pane_clr = *p++;
                node=>pane = *p;
            )
            else if (node->Hscroll || node->Vscroll)
                node->pane = 1;
            if (p = Find_triple(buf,"map ",size,NULL,8,NULL))
            (
                node->picture = *(CONNECTOR *) p;
                if (*(long*)(p-4) > sizeof(CONNECTOR))
                (
```

```c
                    pict_row = *(short *) (p + sizeof(CONNECTOR));
                    pict_col = *(short *) (p + sizeof(CONNECTOR) + sizeof(short));
                }
            }
            if (init_window(screen,node,output,title,pict_row,pict_col,
                            out_clr,out_fill,0,pane_clr))
            {
                activate(node);
                clip_window(map->last);
                return(node);
            }
        }
    reply_status(buf,"-create","(window)",0);
    return(NULL);
}

init_node(node,buf,size)
register MAPNODE     *node;
register long        buf, size;
{
    static short     def_pos[2] = (0,0), def_size[2] = (5,10);
    register char    *p;

    p = Find_triple(buf,"pos ",size,def_pos,4,NULL);
    node->row = *((short *) p)++;
    node->col = *(short *) p;
    p = Find_triple(buf,"size",size,def_size,4,NULL);
    node->out_ht = node->height = *((short *) p)++;
    node->out_wd = node->width = *(short *) p;
    node->title = check_bar(buf,"tbar",VCHAR_HT);
    node->menu = check_bar(buf,"mbar",VCHAR_HT);
    node->Vscroll = check_bar(buf,"vbar",YES);
    node->Hscroll = check_bar(buf,"hbar",YES);
    node->general_use = check_bar(buf,"gbar",YES);
    node->corner = check_bar(buf,"corn",YES);
    node->resize_box = check_bar(buf,"rsiz",YES);
    if (node->palette = check_bar(buf,"pbar",5*VCHAR_WD))
        node->palette += 2 *VCHAR_WD;
    window_options(node,buf,size);
}
```

```
check_bar(ptr,keyw,deflt)
register char   *ptr, *keyw;
register short  deflt;
{
    register short  *p;

    if (!(p = (short *) Find_triple(ptr,keyw,0,NO,0,NULL)))
        return(NO);
    else if (p == (short *) 1)
        return(deflt);
    else
        return(*p);
}
```

```
window options(node,buf,size)
register MAPNODE      *node;
register long         buf, size;
{
        register char    *options, opt;

        options = Find triple(buf,"when",size,none,1,NULL);
        while (opt = *options++)
            switch (opt)
            {
                case 'S':     node->on element = opt;  break;
                case 'X':     node->on cancel = opt;  break;
                case 's':     node->on select = opt;  break;
                case 'O':     node->on open = opt;  break;
                case 'M':     node->on modify = opt;  break;
                case 'C':     node->on close = opt;  break;
                case 'Q':     node->on quit = opt;  break;
                case 'W':     node->on window edge = opt;  break;
                case 'P':     node->on picture edge = opt;  break;
                case 'A':     node->on anychar = opt;  break;
                case 'D':     node->on delete = opt;  break;
                case 'B':     node->on box = opt;  break;
                case 'L':     node->on location = opt;  break;
                case 'N':     node->on insert = opt;  break;
            )
        options = Find triple(buf,"opt ",size,none,1,NULL);
        while (opt = *options++)
            switch (opt)
            {
                case 'H':     node->auto highlight = opt;  break;
                case 'E':     node->editable = opt;  break;
                case 'S':     node->multi select = opt;  break;
                case 'X':     node->never = opt;  break;
                case 'B':     node->remap = opt;  break;
                case 'N':     node->nonmod = opt;  break;
                case 'F':     node->fixed = opt;  break;
                case 'O':     node->keep open = opt;  break;
                case 'M':     node->move mark = opt;  break;
                case '+':     node->tight = opt;  break;
                case '-':     node->picture.pid = NULL;
            )
}
```

```
init_window(screen,node,output,title,row,col,out_clr,out_fill,out_pat,pane_clr)
register SCREEN        *screen;
register MAPNODE       *node;
CONNECTOR              *output;
register short         row, col;
register char          *title;
register char          out_clr, out_fill, out_pat, pane_clr;
{
    register char   *msg;
    int             result = NO;

    if (node->style == 's' && (screen->colors < 7 || !screen->bit_map))
        node->style = 'S';
    if (node->outline)
        out_line(node);
    if (node->palette)
        node->left = node->palette;
    if (node->resize_box || node->Vscroll)
        node->right += VCHAR_WD;
    if (node->corner && !node->palette)
        node->left += VCHAR_WD;
    if (node->menu || node->general_use)
        node->bottom = VCHAR_HT * 2;
    else if (node->Hscroll)
        node->bottom = VCHAR_HT;
    align_window(screen,node);
    msg = Newmsg(3000,"init",
        "pos=#2s; size=#2s; outl=#5b; pane=#2b; marg=#4s; scrn=#4s; outp=#C; \
        self=#C; map=#C#2s; name=#S; rply",
        node->row,node->col,node->height,node->width,
        out_clr,node->outline,out_fill,out_pat,node->style,pane_clr,node->pane,
        node->top,node->bottom,node->left,node->right,0,0,screen->height,
        screen->width,output,&node->window,&node->picture,row,col,node->name);
    init_frame(msg,node,title,out_clr);
    msg = Call(DIRECT,node->window.pid,msg,0,0);
    result = strcmp(msg,"failed");
    Free(msg);
    return(result);
}
```

```
out line(node)
register MAPNODE      *node;
{
    node->outer = node->outline + node->pane + (node->outline && node->pane) *
            (node->height/100 + node->width/100 + 2);
    if (node->tight)
    {
        node->top = node->bottom = node->outer;
        node->left = node->right = node->outer+ node->width/200;
    }
    else
    {
        node->top = VCHAR_HT;
        node->bottom = node->outer;
        node->left = node->right = VCHAR_WD;
    }
    if (node->style == 's')
    {
        node->bottom += 5;
        node->right += 5;
    }
}
```

```c
init_frame(msg,node,title,out_clr)
register MAPNODE      *node;
register char         *msg, *title, out_clr;
{
    char                    *n, *frame_bar();
    register char           scroll_clr = (4*16)+YELLOW, title_clr = WHITE;
    register P_E_HDR        *hdr;
    static short            up_arrow[] = {7,0,0,6,7,12,7,9,10,9,10,3,7,3,7,0};
    static short            down_arrow[] = {3,0,3,3,0,3,6,9,3,9,3,12,10,6,3,0};
    static short            left_arrow[] = {6,0,0,7,3,7,3,10,9,10,9,7,12,7,6,0};
    static short            right_arrow[] = {3,0,3,3,6,3,6,10,12,3,9,3,9,0,3,0};
    static long             resize_symbol[] = {0x00007f80,0x7f807f80,0x7f807f80,
                                0x7f807fc4,0x00ec007c,0x003c007c,0x00fc0000,0x00000000};

    if (node->title)
    {
        n = frame_bar(msg,"top",400,'T',0,0,node->title,1000,0,out_clr,0,NO);
        draw_filled_rect(&n,0,0,node->title,1000,NULL,0,0,out_clr,0,0,0,0,"a");
        draw_rect(&n,5,10,10,10,"CLOSE!",title_clr,'S',1,"S");
        draw_text(&n,0,3*VCHAR_WD,title,"NAME",title_clr,0,NULL,NULL);
        if (!node->nonmod)
        {
            hdr = (P_E_HDR *) start_macro(&n,0,1000,
                    VCHAR_HT-2,2*VCHAR_WD,'N',"FILL!",0,0,"Sa");
            draw_rect(&n,3,0,VCHAR_HT-7,2*VCHAR_WD-4,NULL,title_clr,'S',1,NULL);
            draw_filled_rect(&n,6,3,VCHAR_HT-14,2*VCHAR_WD-10,
                    NULL,0,0,title_clr,0,0,0,0,NULL);
            end_macro(&n,hdr);
        }
        draw_end(&n);
    }
    if (node->Vscroll)
    {
        n = frame_bar(msg,"rght",400,'V',node->pane-1,node->pane-1,790,
                node->right-node->pane-node->outline+2,out_clr,BLACK,1,NO);
        draw_rect(&n,node->pane,node->pane,VCHAR_HT-4,
                node->right-(node->pane)-(node->outline),
                "SCROLL!",scroll_clr,'S',1,"Sb");
        draw_poly(&n,875,node->pane+1,
                8,up_arrow,"UP!",scroll_clr,0,0,'S',0,1,"Sa");
        draw_poly(&n,980,node->pane+1,
                8,down_arrow,"DOWN!",scroll_clr,0,0,'S',0,1,"Sa");
        draw_end(&n);
    }
```

0 274 087

```
if (node->Hscroll)
{
    n = frame_bar(msg,"bot ",400,'H',node->pane-1,0,
            node->bottom-(node->pane)-(node->outline)+2,
            910,out_clr,BLACK,1,NO);
    draw_rect(&n,node->pane,node->pane,
        node->bottom-node->pane-node->outline,
        2*VCHAR_WD-2,"SCROLL!",scroll_clr,'S',1,"Sb");
    draw_poly(&n,node->pane,955,
        8,left_arrow,"LEFT!",scroll_clr,0,0,'S',0,1,"Sa");
    draw_poly(&n,node->pane,990,
        8,right_arrow,"RIGHT!",scroll_clr,0,0,'S',0,1,"Sa");
    draw_end(&n);
}
if (node->menu)
    frame_bar(msg,"bot ",200,'M',node->pane-1,0,
            node->bottom-(node->pane)-(node->outline)+2,
            1000,out_clr,BLACK,1,YES);
if (node->general_use)
    frame_bar(msg,"bot ",200,'G',node->pane-1,0,
            node->bottom-(node->pane)-(node->outline)+2,
            1000,out_clr,BLACK,1,YES);
if (node->palette)
    frame_bar(msg,"left",200,'P',0,node->pane,10000,
            node->left-(node->pane)-(node->outline)-1,out_clr,BLACK,1,YES);
if (node->resize_box)
{
    n = frame_bar(msg,"rbox",200,NULL,0,0,0,0,scroll_clr,BLACK,1,NO);
    draw_symbol(&n,0,0,16,16,resize_symbol,"RESIZE!",scroll_clr,0,"S");
    draw_end(&n);
}
if (node->corner)
    frame_bar(msg,"lbox",200,NULL,0,0,0,0,out_clr,BLACK,1,YES);
}
```

```c
char *frame_bar(msg,keyw,size,type,row,col,height,width,color,fill,thick,end)
register char    *msg, *keyw;
char             type, color, fill, end;
register short   row, col, height, width, size, thick;
{
    char    *n;

    n = Append_triple(msg,keyw,size,NULL);
    *n++ = type;
    draw_filled_rect(&n,row,col,height,width,
        NULL,color,0,fill,0,'S',0,thick,"a");
    if (end)
        draw_end(&n);
    return(n);
}

Set_user(name,buf,size)
register NAME    *name;
register long    buf, size;
{
    register char    *p;

    if (p = Find_triple(buf,"name",size,NULL,2,NULL))
    {
        strcpy(name->user,p);
        Note("signed on",p);
        Put(ALL,"III",Newmsg(128,"U","name=#S",p));
    }
}
```

```
Change(screen,map,msg)
SCREEN     *screen;
LIST       *map;
MESSAGE    *msg;
{
     register CONNECTOR  *window, *owner = NULL;
     register short      *p;
     register MAPNODE    *node;

     if (window = (CONNECTOR*)Find_triple(msg->buf,"conn",msg->size,NULL,8,NULL))
     {
          for (node = map->first; node && node->window.pid != window->pid
               && node->terminal.pid != window->pid; node = node->nxt) ;
          if (node)
          {
               if (p = (short*) Find_triple(msg->buf,"size",msg->size,none,4,NULL))
                    resize(screen,node,*p,*(p+1));
               if (Find_triple(msg->buf,"actv",msg->size,NULL,0,NULL)
                    && !node->never)
                         map->active = node;
               if (owner =
                    (CONNECTOR*) Find_triple(msg->buf,"ownr",msg->size,NULL,0,NULL))
                         if ((long)owner == 1)
                              owner = &msg->sender;
               if (owner)
               {
                    node->owner = *owner;
                    if (node->terminal.pid)
                    {
                         Forward(DIRECT,node->terminal.pid,msg->buf);
                         msg->buf = NULL;
                    }
               }
               clip_window(map->last);
          }
     }
}
```

```
highlight(node,map)
register MAPNODE     *node;
register LIST        *map;
{
    if (node && node != map->last_active)
    {
        if (!node->metaphor)
        {
            Put(LOCAL,"Window",
                Newmsg(64,"highlight","bar=#b; tag=#S",'T',"CLOSE!"));
            if (node->window.pid && node->title)
                Put(DIRECT,node->window.pid,
                    Newmsg(128,"highlight","off; bar=#b; tag=#S",'T',"CLOSE!"));
        }
        if (node->window.pid)
            Put(DIRECT,node->window.pid,Newmsg(32,"keys?",NULL));
        map->last_active = node;
    }
}

move_mark(row,col,picture)
register short       row, col;
register CONNECTOR   *picture;
{
    Put(DIRECT,picture->pid,Newmsg(32,"mark","at=#2s",row,col));
}
```

```
clip window(node)
register MAPNODE     *node;
{
    register MAPNODE     *temp;
    register short       prio = 127, count, *count_addr, *n;
    char                 *m;

    for ( ; node; node = node->pre)
    {
        m = Newmsg(1000,"cut","inUI=#s#s#A",prio--,0,950,NULL);
        count_addr = (short *) (Find_triple(m,"inUI",0,NULL,0,NULL) + 2);
        n = count_addr + 1;
        count = 0;
        for (temp = node->pre; temp; temp = temp->pre)
        {
            *n++ = temp->row;
            *n++ = temp->col;
            *n++ = temp->out_ht;
            *n++ = temp->out_wd;
            count++;
        }
        *count_addr = count;
        Put(DIRECT,node->window.pid,m);
    }
}

MAPNODE *find_window(map,window,row,col)
register LIST    *map;
register WINDOW *window;
register short   row, col;
{
    register MAPNODE     *node;

    for (node = map->first; node; node = node->nxt)
    {
        query_window(window,node->window,row,col);
        if (window->area !='N')
            break;
    }
    window->previous = window->node;
    return(window->node = node);
}
```

```
query window(window,conn,row,col)
register WINDOW *window;
CONNECTOR        conn;
register short  row, col;
{
    register char    *p, *reply;

    if (window->hdr)
        Free(window->hdr);
    window->hdr = NULL;
    window->elem_row = window->elem_col = -1;
    reply = Call(DIRECT,conn.pid,Newmsg(64,"w","inHI=#2s",row,col),0,0);
    p = Find_triple(reply,"inHI",0,none,1,NULL);
    p += 2 * sizeof(short);
    window->area = *p++;
    window->bar = *p++;
    window->row = *((short *) p)++;
    window->col = *((short *) p)++;
    Long_align(p);
    if (*(short*)p)
    {
        window->hdr = (P_E_HDR *) Alloc(*(short*)p,YES);
        memcpy(window->hdr,p,*(short*)p);
    }
    Free(reply);
}

MAPNODE *new_node(map,name)
register LIST    *map;
register char    *name;
{
    register MAPNODE     *node = NULL;
    register short       i;

    for (i = POOL_SIZE, node = map->pool; node->pool && i; ++node, --i) ;
    if (!i)
        node = (MAPNODE *) Alloc(sizeof(MAPNODE),YES);
    memset(node,0,sizeof(MAPNODE));
    node->pool = i;
    strcpy(node->name,name);
    return(node);
}
```

```
free node(node)
register MAPNODE      *node;
{
    if (node->pool)
        node->pool = NULL;
    else
        Free(node);
}

map after(node,pred,map)
register MAPNODE      *node, *pred;
register LIST         *map;
{
    if (pred)
    {
        node->nxt = pred->nxt;
        node->pre = pred;
        if (pred->nxt)
            (pred->nxt)->pre = node;
        pred->nxt = node;
    }
    else
    {
        if (node->nxt = map->first)
            (map->first)->pre = node;
        node->pre = NULL;
    }
    if (!node->pre)
        map->first = node;
    if (!node->nxt)
        map->last = node;
    ++map->count;
}

unmap(node,map)
register MAPNODE      *node;
register LIST         *map;
{
    if (node->pre)
        (node->pre)->nxt = node->nxt;
    else
        map->first = node->nxt;
    if (node->nxt)
        (node->nxt)->pre = node->pre;
    else
        map->last = node->pre;
    --map->count;
}
```

```c
remap(window,node,new_picture,map,sel)
register CONNECTOR     *window, *new_picture;
register MAPNODE       *node;
register SELECTION     *sel;
LIST                   *map;
{
    if (window)
        for (node = map->first;
            node && window->pid != node->window.pid; node = node->nxt) ;
    if (node)
    {
        end_edit(node,'X',0,0,NULL);
        if (new_picture && new_picture->pid != node->picture.pid)
            if (node == sel->map)
            {
                sel->map = NULL;
                sel->pending = NO;
            }
        node->picture = *new_picture;
    }
}
```

```c
align_window(screen,node)
register SCREEN      *screen;
register MAPNODE     *node;
{
    register short  temp;

    if (screen->char_align)
    {
        if (node->tight)
        {
            temp = ((node->row % VCHAR_HT) || node->outer ? VCHAR_HT : 0);
            node->row = (node->row / VCHAR_HT) * VCHAR_HT - node->outer + temp;
            temp = ((node->col % VCHAR_WD) || node->outer ? VCHAR_WD : 0);
            node->col = (node->col / VCHAR_WD) * VCHAR_WD -
                        (node->outer + node->width/200) + temp;
        }
        else
        {
            node->row = ((node->row + VCHAR_HT-1) / VCHAR_HT) * VCHAR_HT;
            node->col = ((node->col + VCHAR_WD-1) / VCHAR_WD) * VCHAR_WD;
        }
        if (node->row < screen->meta_row)
            node->row += (screen->meta_row + VCHAR_HT-1) / VCHAR_HT * VCHAR_HT;
        if (node->col < screen->meta_col)
            node->col += (screen->meta_col + VCHAR_WD-1) / VCHAR_WD * VCHAR_WD;
        if (node->out_ht > screen->meta_ht)
            node->height = screen->meta_ht - (node->top + node->bottom);
        if (node->out_wd > screen->meta_wd)
            node->width = screen->meta_wd - (node->left + node->right);
        if (!node->tight)
        {
            temp = (node->height % VCHAR_HT ? VCHAR_HT : 0);
            node->height = (node->height/VCHAR_HT) * VCHAR_HT + temp;
            temp = (node->width % VCHAR_WD ? VCHAR_WD : 0);
            node->width = (node->width/VCHAR_WD) * VCHAR_WD + temp;
        }
    }
    node->out_ht = node->height + node->top + node->bottom;
    node->out_wd = node->width + node->left + node->right;
}
```

```c
Status(msg,size)
register char    *msg;
register long    size;
{
    register char    *m;

    *(m = Alloc(size,YES)) = NULL;
    strcat(m,Find_triple(msg,"orig",size,none,1,NULL));
    strcat(m," ");
    strcat(m,Find_triple(msg,"stat",size,none,1,NULL));
    strcat(m," in-");
    strcat(m,Find_triple(msg,"req ",size,none,1,NULL));
    Note(m,"ERROR");
    Free(m);
}

reply_status(req,mid,stat,code)
register char    *req, *mid, *stat;
register long    *code;
{
    register char    *type, *msg;

    type = "failed";
    if (!mid)
        type = "status";
    else if (*mid == '-')
        mid++;
    else if (*mid == '+')
    {
        type = "done";
        mid++;
    }
    msg = Newmsg(strlen(stat)+100,type,
        "orig=#S; stat=#S; code=#1","console",stat,code);
    if (mid)
    {
        Append_triple(msg,"req ",strlen(mid)+1,mid);
        Reply(req,msg);
    }
    else
        Put(DIRECT,(long)req,msg);
}

info(dialogue,string,window)
CONNECTOR        dialogue, window;
register char    *string;
{
    Put(DIRECT,dialogue,pid,Newmsg(strlen(string)+100,"info",
        "text=#S; near=#C; wait=#S",string,&window,5));
}
```

```
        Module         : %M% %I%
        Date submitted : %E% %U%
        Author         : Frank Kolnick
        Origin         : cX
        Description    : Picture Manager

 ***********************************************************************/

#ifndef lint
static char SrcId[] = "%Z% %M%:%I%";
#endif
/* Picture manager:  global data */

#include    <cX.h>                              /* cX definitions */
#include    <HI.h>                              /* picture, etc. definitions */
#include    <memory.h>
#include    <string.h>
static long none = 0;

typedef struct element_node                     /* links picture elements: */
{
    struct element_node *nxt;                   /*        ->next node */
    struct element_node *pre;                   /*        ->preceding node */
    unsigned char       changed;                /*        'element has changed' */
    unsigned char       marked;                 /*        'element is marked' */
    unsigned char       deleted;                /*        'no longer in use' */
    unsigned char       pool;                   /*        'local buffer pool' */
    short               length;                 /*        (start of element) */
    /***** NOTE: 'length' must start on a long-word boundary *****/
} ELEMENT;

typedef struct current_state                    /* current data: */
{
    char                *msg;                   /*        ->current msg. */
    CONNECTOR           sender;                  /*        conn. to msg. sender */
    long                size;                   /*        size of msg. */
    long                appl;                   /*        relevant application */
    short               appl_row, appl_col;     /*        application 'origin' */
    CONNECTOR           owner;                  /*        conn. to owning proc. */
    char                *mark;                  /*        current mark element */
    char                *old_mark;              /*        copy of previous mark */
    char                *erase_mark;            /*        element to erase mark */
    unsigned char       display_mark;           /*        'display mark' */
    unsigned char       private;                /*        'private picture' */
    unsigned char       check;                  /*        'check size' */
    unsigned char       debug;                  /*        'print diagnostics' */
    char                highlight;              /*        type of highlighting */
    char                name[32];               /*        picture's name */
    char                file[64];               /*        picture file's name */
    long                status_code;            /*        current status ... */
    char                *status_string;         /*        ... */
} CURRENT;
```

```c
typedef struct view_node                           /* links viewports: */
(
    struct view_node       *nxt;                    /*      ->next node */
    CONNECTOR              owner;                    /*      owner of viewport */
    short                 row, col;                 /*      start of viewport */
    short                 height, width;            /*      extent */
) VIEW;

typedef struct appl_node                            /* links applications: */
(
    struct appl_node       *nxt;                    /*      ->next node */
    long                  name;                     /*      name of application */
    CONNECTOR              conn;                     /*      conn. to application */
    short                 row, col;                 /*      origin */
) APPL;

typedef struct anim_node                            /* links animation processes: */
(
    struct anim_node       *nxt;                    /*      ->next node */
    long                  name;                     /*      name of element */
    CONNECTOR              conn;                     /*      conn. to process */
) ANIM;

typedef struct affected_area                        /* area changed by a request: */
(
    short                 r1, c1;                   /*      upper left front */
    short                 r2, c2;                   /*      lower right back */
    char                  color;                    /*      background color */
    char                  pattern;                  /*      background pattern */
    short                 max_height;               /*      max. height */
    short                 max_width;                /*      max. width */
    short                 height, width;            /*      current size */
) AREA;

typedef struct lists                                /* list pointers, etc.: */
(
    ELEMENT               *first;                   /*      ->pict. element list */
    ELEMENT               *last;                    /*      ->end of p.e. list */
    ELEMENT               *current;                 /*      ->last p.e. changed */
    VIEW                  *views;                   /*      ->viewport list */
    APPL                  *appls;                   /*      ->applications list */
    ANIM                  *anims;                   /*      ->animation list */
    int                   changes;                  /*      #changes in list */
    int                   erases;                   /*      #erasures in list */
    int                   size;                     /*      #picture elements */
    struct                                          /*      element pool descr.: */
        (
            long              n;                    /*          #elements */
            long              size;                 /*          size of elements */
            ELEMENT           *ptr;                 /*          ->element buffer */
        ) pool;
) LIST;
```

0 274 087

```c
/*   local functions   */

char          *value(), *tag();
ELEMENT       *mark_number(), *mark_area(), *mark_elements(), *new_element();
P_E_HDR       *first_macro(); *next_macro();

/* Picture manager:  main-line */

PROCESS(Picture)
{
    CURRENT           cur;
    AREA              area;
    LIST              list;
    register VIEW     *view;
    register ANIM     *anim;

    Set_event_key("Picture mgr.");
    init_PM(&cur,&area,&list);
    draw_picture(&cur,&area,&list);
    for (view = list.views; view; view = view->nxt)
        Put(DIRECT,view->owner.pid,Newmsg(32,"unmap",NULL));
    for (anim = list.anims; anim; anim = anim->nxt)
        Put(DIRECT,anim->conn.pid,Newmsg(32,"quit",NULL));
    Exit();
}

init_PM(cur,area,list)
register CURRENT    *cur;
register AREA       *area;
register LIST       *list;
{
    area->color = BLACK;
    area->pattern = 0;
    *cur->name = *cur->file = NULL;
    area->max_height = area->max_width = 0;
    list->current = list->first = list->last = NULL;
    list->views = NULL;
    list->appls = NULL;
    list->anims = NULL;
    list->size = list->pool.n = 0;
    cur->debug = cur->check = cur->private = cur->display_mark = NO;
    cur->mark = cur->old_mark = cur->erase_mark = NULL;
}
```

```
draw_picture(cur,area,list)
CURRENT            *cur;
register AREA      *area;
register LIST      *list;
{
    register char          *msg;
    register short         transaction = 0, result = 0, go = YES;
    register ELEMENT       *element;
    long                   status[11], list_size = 0, *req = NULL;

    while (go)
    {
        cur->msg = msg = Get(0,&cur->sender,&cur->size);
        if (!transaction)
        {
            list->changes = list->erases = area->r2 = area->c2 = 0;
            area->r1 = area->c1 = 32767;
            cur->appl = NULL;
            if (list->appls)
                check_appl(cur,list->appls);
        }
        if (*msg == '[' && transaction < 10)
            status[++transaction] = 0;
        else if (*msg == ']')
            --transaction;
        else
            go = Request(cur,area,list,msg,cur->size,cur->appl);
        if (!transaction)
        {
            if (list->changes)
                notify(cur,area,list);
            for (element = list->first; element; element = element->nxt)
            {
                element->changed = element->marked = NO;
                if (element->deleted && !Any_msg(NULL))
                    delete_element(list,element);
            }
            if (Find_triple(msg,"rply",cur->size,NO,0,NULL) && result >= 0)
                reply_status(msg,msg,"completed",result);
        }
        free_requests(msg,cur->size,&req,&list_size);
    }
}
```

```
check_appl(cur,appl)
register CURRENT     *cur;
register APPL        *appl;
{
    for ( ; appl && (appl->conn.pid != cur->sender.pid); appl = appl->nxt);
    if (appl)
    {
        if (!(cur->appl = appl->name))
            cur->appl = -1;
        cur->appl_row = appl->row;
        cur->appl_col = appl->col;
    }
}

free_requests(msg,size,req,list_size)
register char     *msg, **req;
register long     size, *list_size;
{
    register char     *temp, *next;

    if (msg)
    {
        *(char**)msg = *req;
        *req = msg;
        *list_size += size;
        if (!Any_msg(NULL) || *list_size > 1000)
            for (temp = *req, *req = NULL, *list_size = 0; temp; temp = next)
            {
                next = *(char**)temp;
                Free(temp);
            }
    }
}

Request(cur,area,list,msg,size,appl)
register CURRENT     *cur;
register AREA        *area;
register LIST        *list;
register long        msg, size, appl;
{
```

```c
    register short    go = YES;

    if (!strcmp(msg,"write"))
        Draw(list,msg,size);
    else if (!strcmp(msg,"edit"))
        Edit_text(cur,area,list,msg,size,appl);
    else if (!strcmp(msg,"mark"))
        Move_mark(cur,area,list);
    else if (!strcmp(msg,"hit"))
        Hit(list,msg,size,appl);
    else if (!strcmp(msg,"move"))
        Move(area,list,msg,size,appl);
    else if (!strcmp(msg,"erase"))
        Erase(area,list,msg,size,appl);
    else if (!strcmp(msg,"read"))
        Copy(cur,area,list,msg,size,appl);
    else if (!strcmp(msg,"replace"))
        Replace(area,list,msg,size,appl);
    else if (!strcmp(msg,"change"))
        Change(area,list,msg,size,appl);
    else if (!strcmp(msg,"animate"))
        Animate(cur,list);
    else if (!strcmp(msg,"alter") || !strcmp(msg,"cancel"))
        Alter(cur,list);
    else if (!strcmp(msg,"number"))
        Query_number(list,msg,size,appl);
    else if (!strcmp(msg,"mark?"))
        Query_mark(cur);
    else if (!strcmp(msg,"save"))
        Save_picture(cur,list);
    else if (!strcmp(msg,"set"))
        Set_mark(cur,area,list);
    else if (!strcmp(msg,"restore"))
        Restore_mark(cur,area,list);
    else if (!strcmp(msg,"bkgd"))
        Background(area,list,msg,size);
    else if (!strcmp(msg,"create"))
        go = New_picture(cur,area,list);
    else if (!strcmp(msg,"init"))
        cur->private = go = New_picture(cur,area,list);
    else if (!strcmp(msg,"open"))
        go = Old_picture(cur,list);
    else if (!strcmp(msg,"appl"))
        Appl(cur,list);
    else if (!strcmp(msg,"quit"))
    {
        if (go = (cur->sender.pid != cur->owner.pid))
            reply_status(msg,msg,"not authorized",0);
    }
```

```
else if (!strcmp(msg,"query"))
    Query(cur,list);
else if (!strcmp(msg,"failed"))
    Status(msg,size);
else if (!strcmp(msg,"done") || !strcmp(msg,"status"))
    ;
else if(!Change_attribute(list,msg,size,appl))
{
    if (!strcmp(msg,"view"))
        Viewport(cur,area,list);
    else if (!strcmp(msg,"debug"))
        cur->debug = !cur->debug;
    else
        reply_status(msg,"-\'unknown\'",msg,0);
}
return(go);
}
```

```
Change_attribute(list,msg,size,appl)
register LIST      *list;
register long      msg, size, appl;
{
    static char            msgids[] = "select\0blink\0invert\0hide\0highlight\0";

    register char          *p;
    register short         new_state, changed, type;
    register ELEMENT       *element;
    register P_E_HDR       *hdr;

    for (p = msgids, type = 0; *p && strcmp(msg,p); p += strlen(p)+1, ++type);
    if (!*p)
        return(NO);
    list->current = element = mark_elements(list,NULL,NULL,msg,size,appl);
    new_state = !(short)Find_triple(msg,"off ",size,NO,0,NULL);
    for ( ; element; element = element->nxt)
        if (element->marked)
        {
            hdr = (P_E_HDR *) &element->length;
            switch (type)
            {
            case 0:     changed = hdr->attr.selected || new_state;
                        if (hdr->attr.selected = new_state)
                            Put(NEXT,"Console",Newmsg(hdr->length+50,
                                "write","data=#e#e; type=#c",hdr,NULL,'P'));
                        break;
            case 1:     changed = hdr->attr.blink != new_state;
                        hdr->attr.blink = new_state;
                        break;
            case 2:     changed = hdr->attr.invert != new_state;
                        hdr->attr.invert = new_state;
                        break;
            case 3:     changed = hdr->attr.hidden != new_state;
                        hdr->attr.hidden = new_state;
                        break;
            case 4:     changed = hdr->attr.highlight != new_state;
                        hdr->attr.highlight = new_state;
            }
            if (element->changed = changed)
                list->changes++;
            element->marked = NO;
        }
    return(YES);
}
```

0 274 087

```c
Query(cur,list)
CURRENT         *cur;
register LIST    *list;
{
    unsigned                 n_elem = 0, n_views = 0;
    register unsigned        min_r = 65535, min_c = 65535;
    register unsigned        max_r = 0, max_c = 0, pic_ht = 0, pic_wd = 0;
    register ELEMENT         *element;
    register P_E_HDR         *hdr;
    register VIEW            *view;

    for (element = list->first; element; element = element->nxt)
    {
        hdr = (P_E_HDR *) &element->length;
        if (hdr->row < min_r) min_r = hdr->row;
        if (hdr->col < min_c) min_c = hdr->col;
        if (hdr->row + hdr->height > max_r) max_r = hdr->row + hdr->height;
        if (hdr->col + hdr->width > max_c) max_c = hdr->col + hdr->width;
        n_elem++;
    }
    if (n_elem)
    {
        pic_ht = max_r - min_r;
        pic_wd = max_c - min_c;
    }
    else
        pic_ht = pic_wd = max_r = max_c = min_r = min_c = 0;
    for (view = list->views; view; view = view->nxt, n_views++);
    Reply(cur->msg,
        Newmsg(256,"status","orig=#s; size=#2s; low=#2s; high=#2s; cnt=#s; \
        view=#s; name=#s; file=#s","picture",
        pic_ht,pic_wd,min_r,min_c,max_r,max_c,n_elem,n_views,
        cur->name,cur->file));
}

Query_number(list,msg,size,appl)
register LIST       *list;
register long       msg, size, appl;
{
    register unsigned    n = 0;
    register ELEMENT     *element, *temp;

    if (element = mark_elements(list,NULL,NULL,msg,size,appl))
    {
        for (temp = list->first; temp != element; temp = temp->nxt, n++);
        Reply(msg,Newmsg(element->length+32,"number"
            "num=#s; elem=#e",n,&element->length));
    }
    else
        reply_status(msg,"-number","too high",0);
}
```

```c
Draw(list,msg,size)
register LIST      *list;
register long      msg, size;
{
    register ELEMENT       *after;
    register long          *p;

    if (p = (long *) Find_triple(msg,"data",size,NULL,4,NULL))
    {
        if (Find_triple(msg,"back",size,NO,0,NULL))
            after = NULL;
        else
            after = list->last;
        if (!draw_elements(p,*(p-1),list,after))
            reply_status(msg,"-write","bad length/type/macro",0);
    }
    else
        reply_status(msg,"-write","missing \'data\'",0);
}

draw_elements(p,list_len,list,after)
register char          *p;
register long          list_len;
register LIST          *list;
register ELEMENT       *after;
{
    register ELEMENT       *element;
    register short         length, number = 0;

    while ((length = *(short *) p)
            && (list_len -= length) >= 0
            && strchr("tlreacdsmn",((P_E_HDR*)p)->type))
    {
        if (((P_E_HDR*)p)->type == 'm' && !check_macro(p))
            break;
        element = new_element(list_length+sizeof(ELEMENT),after);
        memcpy(&element->length,p,length);
        if (!((P_E_HDR*)p)->height)
            define_box(&element->length);
        number++;
        p += length;
        Long_align(p);
    }
    list->size += number;
    list->changes += number;
    list->current = element;
    return(length ? NO : YES);
}
```

```
define_box(hdr)
register P_E_HDR      *hdr;
{
    register char     *val;

    val = value(hdr);
    if (hdr->type == 't')
    {
        hdr->height = VCHAR_HT;
        hdr->width = VCHAR_WD * strlen(val+8);
    }
    else if ((hdr->type == 'n') || (hdr->type == 'm'))
        ;
}

check_macro(hdr)
register P_E_HDR      *hdr;
{
    register P_E_HDR      *temp, *first;
    short                len;
    char                 *p, macro_type;

    for (first = temp = first_macro(hdr,&macro_type,&len,&p); temp;
         temp = next_macro(&len,&p))
    {
        if (macro_type == 'L')
            temp->attr.hidden = YES;
        if (!temp->height)
            define_box(temp);
    }
    if (macro_type == 'L')
        first=>attr.hidden = NO;
    return(p ? YES : NO);
}
```

```c
P_E_HDR *first_macro(hdr,type,len,p)
register P_E_HDR        *hdr;
register char           *type;
register short          *len;
register char           **p;
{
        register P_E_HDR        *temp;

        *p = value(hdr);
        if (type)
                *type = **p;
        (*p)++;
        Long_align(*p);
        temp = (P_E_HDR *) *p;
        *len = hdr->length - (*p - (char *) hdr);
        if (temp->length && temp->length < *len && strchr("tlreacdsmn",temp->type))
                return(temp);
        *p = NULL;
        return(NULL);
}

P_E_HDR *next_macro(len,p)
register short          *len;
register char           **p;
{
        register P_E_HDR        *temp;

        if (*p)
        {
                temp = (P_E_HDR *) *p;
                *p += temp->length;
                Long_align(*p);
                *len -= (*p - (char *) temp);
                temp = (P_E_HDR *) *p;
                if (temp->length)
                        if (temp->length < *len && strchr("tlreacdsmn",temp->type))
                                return(temp);
                        else
                                *p = NULL;
        }
        return(NULL);
}
```

```c
Replace(area,list,msg,size,appl)
AREA            *area;
LIST            *list;
register long   msg, size, appl;
{
        register char          *p;
        register short         length = 0;
        register ELEMENT       *temp;
        register P_E_HDR       *hdr, *temp_hdr = NULL;
        register long          list_len;
        ELEMENT                *after = NULL;

        if (Find_triple(msg,"@\0\0\0\0",size,NO,0,NULL))
        {
                Erase(area,list,msg,size,appl);
                after = list->current;
        }
        if (p = Find_triple(msg,"data",size,NULL,1,NULL))
        {
                list_len = *((long *)(p-4));
                while ((length = *(short *) p) && (list_len -= length) > 0)
                {
                        hdr = (P_E_HDR *) p;
                        if (hdr->type == 'm' && !check_macro(hdr))
                                break;
                        for (temp = list->last; temp &&
                                ((P_E_HDR*)&temp->length)->row != hdr->row &&
                                ((P_E_HDR*)&temp->length)->col != hdr->col; temp = temp->pre);
                        if (temp)
                        {
                                temp_hdr = (P_E_HDR *) &temp->length;
                                temp->deleted = YES;
                                after = temp->pre;
                        }
                        draw_elements(hdr,length,list,after);
                        if (temp_hdr && (hdr->type != 't' || hdr->height != temp_hdr->height
                                || hdr->width != temp_hdr->width))
                        {
                                change_area(area,temp_hdr->row,temp_hdr->col,
                                        temp_hdr->height,temp_hdr->width);
                                list->erases++;
                        }
                        p += length;
                        Long_align(p);
                }
        }
        if (length)
                reply_status(msg,"-replace","bad length/type/macro",0);
}
```

```c
Erase(area,list,msg,size,appl)
AREA              *area;
register LIST     *list;
register long     msg, size, appl;
{
    register ELEMENT     *element = NULL;
    register P_E_HDR     *hdr;
    int                  number;

    if (element = mark_elements(list,NULL,&number,msg,size,appl))
    {
        list->current = element->pre;
        for ( ; element; element = element->nxt)
            if (element->marked)
            {
                element->deleted = YES;
                hdr = (P_E_HDR*) &element->length;
                change_area(area,hdr->row,hdr->col,hdr->height,hdr->width);
            }
        list->erases += number;
        list->changes += number;
    }
}

Copy(cur,area,list,msg,size,appl)
CURRENT           *cur;
register AREA     *area;
register LIST     *list;
register long     msg, size, appl;
{
    register ELEMENT     *element;
    register short       bkgd, *p;
    short                *q;
    unsigned int         length = 0;

    if (bkgd = (short) Find_triple(msg,"bkgd",size,NO,0,NULL))
    {
        p = (short *) Find_triple(msg,"@pos",size,&none,0,NULL);
        q = (short *) Find_triple(msg,"@end",size,&none,0,NULL);
        change_area(area,*p,*(p+1),*q-*p,*(q+1)-*(p+1));
    }
    if ((element = mark_elements(list,&length,NULL,msg,size,appl)) || bkgd)
        send(cur,area,list,0,length,element,NO,NO,bkgd);
    else
        Reply(msg,Newmsg(64,"write",NULL));
}
```

```c
Move(area,list,msg,size,appl)
AREA       *area;
LIST       *list;
long       msg, size, appl;
{
        register ELEMENT       *element;
        register P_E_HDR       *hdr;
        register int           delta_row, delta_col, by_offset = NO, row = 0, col = 0;
        register char          *p;
        int                    n;

        if (p = Find_triple(msg,"by  ",size,NULL,4,NULL))
        {
                by_offset = YES;
                delta_row = *((short *) p)++;
                delta_col = *(short *) p;
        }
        else if (p = Find_triple(msg,"to  ",size,NULL,4,NULL))
        {
                row = *((short *) p)++;
                col = *(short *) p;
        }
        if (list->current = element = mark_elements(list,NULL,&n,msg,size,appl))
        {
                if (!by_offset)
                {
                        hdr = (P_E_HDR *) &element->length;
                        delta_row = row - hdr->row;
                        delta_col = col - hdr->col;
                }
                for ( ; element; element = element->nxt)
                        if (element->marked)
                        {
                                hdr = (P_E_HDR *) &element->length;
                                change_area(area,hdr->row,hdr->col,hdr->height,hdr->width);
                                hdr->row += delta_row;
                                hdr->col += delta_col;
                                element->changed = YES;
                                element->marked = NO;
                                element->deleted = (hdr->row < 0 || hdr->col < 0);
                        }
                list->changes += n;
                list->erases += n;
        }
}
```

0 274 087

```
Change(area,list,msg,size,appl)
register AREA       *area;
register LIST       *list;
register long       msg, size, appl;
{
    register ELEMENT       *element = NULL;
    register P_E_HDR        *hdr;
    char                    *color, *bkgd, *fill, *pat;

    color = Find_triple(msg,"colr",size,NULL,1,NULL);
    bkgd = Find_triple(msg,"bkgd",size,NULL,1,NULL);
    fill = Find_triple(msg,"fill",size,NULL,1,NULL);
    pat = Find_triple(msg,"pat ",size,NULL,1,NULL);
    if (list->current = element = mark_elements(list,NULL,NULL,msg,size,appl))
        for ( ; element; element = element->nxt)
            if (element->marked)
            {
                hdr = (P_E_HDR*) &element->length;
                if (color)
                    hdr->color = *color;
                if (bkgd)
                    hdr->bkgrnd = *bkgd;
                if (fill)
                    hdr->fill = *fill;
                if (pat)
                    hdr->pattern = *pat;
                change_area(area,hdr->row,hdr->col,hdr->height,hdr->width);
                list->changes++;
            }
}

Background(area,list,msg,size)
register AREA           *area;
register LIST           *list;
register long           msg, size;
{
    area->color = *Find_triple(msg,"colr",size,&area->color,1,NULL);
    area->pattern = *Find_triple(msg,"pat ",size,&area->pattern,1,NULL);
    change_area(area,0,0,MAX_ROW,MAX_COL);
    list->changes = list->erases = 1;
}
```

```c
New_picture(cur,area,list)
register CURRENT        *cur;
register AREA           *area;
register LIST           *list;
{
        register ELEMENT        *element;
        register long           max, maxe;
        short                   def_max = 20, def_maxe = 100;
        char                    def_bkgd = BLACK, def_pat = 0;

        for (element = list->first; element; element = element->nxt)
                element->deleted = YES;
        list->current = list->first = list->last = NULL;
        list->changes = list->erases = list->size = 0;
        if (Find_triple(cur->msg,"file",cur->size,NO,0,NULL))
                return(Old_picture(cur,list));
        else
        {
                cur->owner = cur->sender;
                strcpy(cur->name,Find_triple(cur->msg,"name",cur->size,&none,1,NULL));
                area->max_height =
                        *(short*)Find_triple(cur->msg,"size",cur->size,&none,4,NULL);
                area->max_width =
                        *(short *) (Find_triple(cur->msg,"size",cur->size,&none,4,NULL)+2);
                area->color = *Find_triple(cur->msg,"bkgd",cur->size,&def_bkgd,1,NULL);
                area->pattern = *Find_triple(cur->msg,"pat ",cur->size,&def_pat,1,NULL);
                cur->highlight = *Find_triple(cur->msg,"high",cur->size,&none,1,NULL);
                cur->check = (area->max_height != 0);
                max =
                        (*(short*)Find_triple(cur->msg,"max ",cur->size,&def_max,2,NULL))+1;
                maxe = *(short*)Find_triple(cur->msg,"maxe",cur->size,&def_maxe,2,NULL);
                if (maxe & 1)
                        ++maxe;
                list->pool.n = max;
                list->pool.size = maxe + sizeof(ELEMENT) + 10;
                list->pool.ptr = (ELEMENT *) Alloc(max*list->pool.size,YES);
                memset(list->pool.ptr,0,max*list->pool.size);
                change_area(area,0,0,MAX_ROW,MAX_COL);
                list->changes = list->erases = 1;
                reply_status(cur->msg,"+create","complete",0);
                return(YES);
        }
}
```

```
Old picture(cur,list)
register CURRENT      *cur;
register LIST         *list;
{
    register char     *p = (char*)1;
    CONNECTOR         file;

    strcpy(cur->name,Find_triple(cur->msg,"name",cur->size,&none,1,NULL));
    strcpy(cur->file,Find_triple(cur->msg,"file",cur->size,cur->name,1,NULL));
    if (*cur->file)
    {
        if (Connect_to(NEXT,"File_mgt",Newmsg(64,"open"
            "name=#S; omod=#S; amod=#S",cur->file,"R",NULL),&file))
        {
            cur->owner = cur->sender;
            while (p)
                if (p = Call(DIRECT,file.pid,
                    Newmsg(64,"read","conn=#C; size=#1",&file,-1),0,0))
                    if (p = Find_triple(p,"data",0,NULL,4,NULL))
                        draw_elements(p,*(long*)(p-4),list,NULL);
            Put(DIRECT,file.pid,Newmsg(32,"close","conn=#C",&file));
            reply_status(cur->msg,"+open","complete",0);
            return(YES);
        }
        else
            reply_status(cur->msg,"-open","can't open file",0);
    }
    else
        reply_status(cur->msg,"-open","no file name",0);
    return(NO);
}
```

```
Save_picture(cur,list)
CURRENT     *cur;
LIST        *list;
{
    register char       *file_name, *m, *p;
    register ELEMENT    *element;
    CONNECTOR           file;
    unsigned int        length = 0, num;

    if (!(file_name = Find_triple(cur->msg,"file",cur->size,NULL,1,NULL)))
            file_name = cur->file;
    if (*file_name)
        if (element =
            mark_elements(list,&length,&num,cur->msg,cur->size,cur->appl))
        {
            if (!Connect_to(NEXT,"File_mgt",Newmsg(64,"open"
                "name=#S; omod=#S; amod=#S",file_name,"W",NULL),&file))
                    Connect_to(NEXT,"File_mgt",Newmsg(64,"create",
                        "name=#S; omod=#S; amod=#S",file_name,"W",NULL),&file);
            if (file.pid)
            {
                num = length + 4 * num + 4;
                m = Newmsg(num+50,"write","conn=#C; data=#A",&file,num,NULL);
                p = Find_triple(m,"data",0,NULL,1,NULL);
                for ( ; element; element = element->nxt)
                    if (element->marked)
                    {
                        memcpy(p,element,element->length);
                        p += element->length;
                        Long_align(p);
                    )
                *(short *) p = NULL;
                Put(DIRECT,file.pid,m);
                Put(DIRECT,file.pid,Newmsg(32,"close","conn=#C",&file));
                reply_status(cur->msg,"+save","picture saved",0);
            }
            else
                reply_status(cur->msg,"-save","can't open/create file",0);
        )
        else
            reply_status(cur->msg,"-save","no elements",0);
    else
        reply_status(cur->msg,"-save","no file name",0);
}
```

```
Appl(cur,list)
CURRENT         *cur;
register LIST   *list;
{
    register APPL    *appl;
    register long    name;
    register short   *p;

    name = *(long *) Find_triple(cur->msg,"name",cur->size,&none,4,NULL);
    for (appl = list->appls; appl && appl->name != name; appl = appl->nxt);
    if (!appl)
        appl = (APPL *) Alloc(sizeof(APPL),YES);
    appl->conn = cur->sender;
    p = (short *) Find_triple(cur->msg,"org ",cur->size,&none,2,NULL);
    appl->row = *p++;
    appl->col = *p;
    appl->name = name;
    appl->conn =
        *(CONNECTOR *) Find_triple(cur->msg,"appl",cur->size,&none,4,NULL);
    appl->nxt = list->appls;
    list->appls = appl;
}

Move_mark(cur,area,list)
register CURRENT    *cur;
register AREA       *area;
register LIST       *list;
{
    register P_E_HDR    *hdr;
    register short      *pos;
    char                *q;

    if (pos = (short *) Find_triple(cur->msg,"at  ",cur->size,NULL,4,NULL))
    {
        if (cur->mark)
            erase_mark(cur,area);
        else
        {
            q = cur->mark = Alloc(sizeof(P_E_HDR)+30,YES);
            draw_line(&q,0,0,VCHAR_HT,0,NULL,YELLOW,'S',0,1,NULL);
        }
        hdr = (P_E_HDR *) cur->mark;
        hdr->row = *pos++ - ((hdr->height - VCHAR_HT) / 2);
        hdr->col = *pos;
        cur->display_mark = YES;
        list->changes++;
    }
}
```

```c
Query_mark(cur)
register CURRENT        *cur;
{
    register P_E_HDR       *hdr;

    if (hdr = (P_E_HDR *) cur->mark)
        Reply(cur->msg,Newmsg(64,"mark","at=#2s",hdr->row,hdr->col));
    else
        reply_status(cur->msg,"-mark?","no mark defined",0);
}

Set_mark(cur,area,list)
register CURRENT        *cur;
register AREA           *area;
register LIST           *list;
{
    register P_E_HDR       *hdr;

    if ((hdr = (P_E_HDR*)Find_triple(cur->msg,"data",cur->size,NULL,1,NULL))
            && hdr->length)
    {
        if (cur->mark)
        {
            erase_mark(cur,area);
            Free(cur->mark);
            Free(cur->erase_mark);
            cur->erase_mark = NULL;
        }
        cur->mark = Alloc(hdr->length,YES);
        memcpy(cur->mark,hdr,hdr->length);
        cur->display_mark = YES;
    }
    else
    {
        if (cur->old_mark)
            Free(cur=>old_mark);
        cur->old_mark = cur->mark;
        cur->mark = NULL;
    }
    list->changes++;
}
```

```c
Restore_mark(cur,area,list)
register CURRENT       *cur;
register AREA          *area;
register LIST          *list;
{
    if (cur->old_mark)
    {
        if (cur->mark)
        {
            erase_mark(cur,area);
            Free(cur->mark);
            Free(cur->erase_mark);
            cur->erase_mark = NULL;
        }
        cur->mark = cur->old_mark;
        cur->old_mark = NULL;
        list->changes++;
    }
}


erase_mark(cur,area)
register CURRENT       *cur;
register AREA          *area;
{
    if (!cur->erase_mark)
        cur->erase_mark = Alloc(*(short*)cur->mark,YES);
    memcpy(cur->erase_mark,cur->mark,*(short*)cur->mark);
    ((P_E_HDR *)cur->erase_mark)->color = area->color;
}

Edit_text(cur,area,list,msg,size,appl)
CURRENT            *cur;
AREA               *area;
register LIST      *list;
register long      msg, size;
long               appl;
{
```
0 274 087

```
register char      *p, c, *text start, *new;
register short     shift, offset, sel_offset, ok = YES;
short              sel length;
ELEMENT            *element;
P_E_HDR            *hdr;

if (list->current = element = mark_elements(list,NULL,NULL,msg,size,appl))
{
    offset = *(short *) Find_once(msg,"offs",size,&none,2,NULL);
    hdr = (P_E_HDR *) &element->length;
    if (hdr->type == 't')
    {
        text_start = (p = value(hdr) + sizeof(long)) + 2 * sizeof(short);
        if (shift = *(short*)Find_once(msg,"shft",size,&none,2,0))
            shift_text(p,text_start,shift);
        if (Find_once(msg,"sel ",size,NO,0,NULL))
        {
            sel_offset = *((short *) p)++;
            sel_length = *(short *) p;
            ok = (offset < sel_length);
            offset += sel_offset;
        }
        if (ok = (ok && (offset < strlen(text_start))))
        {
            p = text_start + offset;
            if (new = Find_once(msg,"new ",size,NULL,1,NULL))
            {
                while (c = *new++)
                    if (c > 31 && c < 127 && *p)
                        *p++ = c;
                    else if (c == 8 && p > text_start)
                        *--p = ' ';
            }
            if (Find_once(msg,"blnk",size,NO,0,NULL))
                for (; *p; *p++ = ' ');
            if (Find_triple(msg,"by  ",size,NO,0,NULL))
            {
                Move(area,list,msg,size,appl);
                Draw(list,msg,size);
            }
            else
            {
                element->changed = YES;
                list->changes++;
            }
            Move_mark(cur,area,list);
            if (Find_once(msg,"fast",size,NO,0,NULL))
                list=>erases = 0;
```

```
            )
            else
                reply_status(msg,"-edit","outside text string",0);
        )
        else
            reply_status(msg,"-edit","not a text element",0);
    )
    else
        reply_status(msg,"-edit","not found",0);
)

shift_text(sel,text,nchars)
register short    *sel, nchars;
register char     *text;
(
    register short    length, n;

    if (length = strlen(text))
        if (nchars < 0 && (n = length + nchars) > 0)
        (
            memcpy(text,text+n,-nchars);
            memset(text-nchars,' ',n);
            if (*sel - n >= 0)
                *sel -= n;
            else
            (
                *sel = 0;
                *(sel+1) += *sel - n;
            )
        )
        else if (nchars > 0 && (n = length - nchars) > 0)
        (
            memcpy(text+length,text+nchars,nchars);
            memset(text,' ',n);
            if (*sel + n < length)
                *sel -= n;
            else
            (
                *sel = length - n;
                *(sel+1) -= *sel + n - length;
            )
        )
)
```

```
Animate(cur,list)
register CURRENT    *cur;
register LIST       *list;
{
     register ANIM    *anim;
     register char    *name;
     register long    pid;
     char             *m;

     if (name = Find_triple(cur->msg,"name",cur->size,NULL,2,NULL))
          if (strlen(name) < 16)
          {
               for (anim = list->anims; anim && strcmp(name,anim->name);
                    anim = anim->nxt);
               if (!anim)
                    if (pid = NewProc(name,"//processes/animate",YES,-1))
                    {
                         anim = (ANIM *) Alloc(sizeof(ANIM),YES);
                         anim->conn.pid = pid;
                         strcpy(anim->name,name);
                         anim->nxt = list->anims;
                         list->anims = anim;
                         m = Alloc(cur->size,YES);
                         memcpy(m,cur->msg,cur->size);
                         Put(DIRECT,anim->conn.pid,m);
                    }
                    else
                         reply_status(cur->msg,"-animate","not supported",0);
               else
                    reply_status(cur->msg,"-animate","duplicate name",0);
          }
          else
               reply_status(cur->msg,"-animate","name too long",0);
}
```

```
Alter(cur,list)
register CURRENT       *cur;
register LIST          *list;
{
    register ANIM      *anim;
    register char      *name;
    CONNECTOR          conn;

    if (name = Find_triple(cur->msg,"name",cur->size,NULL,2,NULL))
    {
        for (anim = list->anims; anim && strcmp(name,anim->name);
            anim = anim->nxt);
        if (anim)
        {
            conn = anim->conn;
            if (!strcmp(cur->msg,"cancel"))
            {
                list->anims = anim->nxt;
                Free(anim);
            }
            Forward(DIRECT,conn.pid,cur->msg);
            cur->msg = NULL;
        }
        else
            reply_status(cur->msg,cur->msg,"not found",0);
    }
}
```

```
Hit(list,msg,size,appl)
register LIST      *list;
register long      msg, size, appl;
{
     register short      *p, tolerance;
     register ELEMENT    *element;
     register P_E_HDR    *hdr;
     ELEMENT             *find_box();

     tolerance = *(short *) Find_triple(msg,"tolr",size,&none,2,NULL);
     if (p = (short *) Find_triple(msg,"pos ",size,&none,4,NULL))
          if (list->current = element = find_box(*p,*(p+1),list,appl))
          {
               hdr = (P_E_HDR *) &element->length;
               if (Find_triple(msg,"sel ",size,NO,0,NULL) && hdr->attr.selectable)
               {
                    hdr->attr.selected = YES;
                    if ((hdr->type == 'm') && (*value(hdr) == 'L'))
                         sel_list(hdr);
                    element=>changed = YES;
                    list->changes++;
               }
               Reply(msg,Newmsg(hdr->length+50,"write","data=#e#e",hdr,NULL));
          }
          else
               reply_status(msg,msg,"not found",0);
     else
          reply_status(msg,msg,"missing \'pos\'",0);
}
```

```
ELEMENT *find_box(row,col,list,appl)
register short   row,  col;
register LIST    *list;
register long    appl;
{
    register P_E_HDR    *hdr;
    register ELEMENT    *element;

    for (element = list->last; element; element = element->pre)
    {
        hdr = (P_E_HDR *) &element->length;
        if (in_box(hdr->row,hdr->col,hdr->height,hdr->width,row,col)
            && !element->deleted)
                if (!appl || (appl == -1 && !*(long*)(hdr+1))
                           || appl == *(long*)(hdr+1))
                    break;
    }
    return(element);
}

in_box(r,c,h,w,cl,c2)
register short  r, c, cl, c2, h, w;
{
    if ((cl < r) || (c2 < c))
        return(NO);
    if ((cl > r + h) || (c2 > c + w))
        return(NO);
    return(YES);
}

sel_list(hdr)
register P_E_HDR    *hdr;
{
    register P_E_HDR    *temp, *first;
    short               len;
    char                *p;

    for (first = temp = first_macro(hdr,NULL,&len,&p);
         temp && temp->attr.hidden; temp = next_macro(&len,&p));
    if (temp)
    {
        temp->attr.hidden = YES;
        if (!(temp = next_macro(&len,&p)))
            temp = first;
        temp->attr.hidden = NO;
    }
}
```

```
Viewport(cur,area,list)
register CURRENT      *cur;
register AREA         *area;
register LIST         *list;
{
    register VIEW     *view, *prev = NULL;
    CONNECTOR         *conn;
    ELEMENT           *element;
    unsigned int      length = 0;
    char              *p;

    if (p = Find_triple(cur->msg,"area",cur->size,NULL,8,NULL))
    {
        for (view = list->views; view && (view->owner.pid != cur->sender.pid);
                view = view->nxt) ;
        if (view)
            memcpy(&view->row,p,4*sizeof(short));
        else
        {
            view = (VIEW *) Alloc(sizeof(VIEW),YES);
            view->nxt = list->views;
            view->owner = cur->sender;
            memcpy(&view->row,p,4*sizeof(short));
            list->views = view;
        }
        change_area(area,view->row,view->col,view->height,view->width);
        element = mark_area(area->r1,area->c1,area->r2,area->c2,list,
                MAX_P_E,NULL,NULL,NULL,&length,NULL,cur->appl);
        send(cur,area,list,0,length,element,YES,cur->display_mark,YES);
    }
    else
    {
        conn = (CONNECTOR *) Find_triple(cur->msg,"conn",0,&cur->sender,8,NULL);
        for (view = list->views; view && (view->owner.pid != conn->pid);
                prev = view, view = view->nxt) ;
        if (view)
        {
            if (prev)
                prev->nxt = view->nxt;
            else
                list->views = view->nxt;
            Free(view);
        }
    }
}
```

```
change area(area,row,col,height,width)
register AREA      *area;
register short   row, col, height, width;
{
     if (row < area->rl)
          area->rl = row;
     if (col < area->cl)
          area->cl = col;
     if (row + height > area->r2)
          area->r2 = row + height;
     if (col + width > area->c2)
          area->c2 = col + width;
}

notify(cur,area,list)
register CURRENT       *cur;
register AREA          *area;
LIST                   *list;
{
     register VIEW        *view;
     register int         length;

     for (view = list->views; view; view = view->nxt)
     {
          length = mark_changes(list->first,
               view->row,view->col,view->height,view->width);
          send(cur,area,list,&view->owner,length,list->first,
               YES,cur->display_mark,list->erases);
     }
}.

mark_changes(element,r,c,h,w)
register ELEMENT      *element;
register short        r, c, h, w;
{
     register P_E_HDR      *hdr;
     register int          list_length = 0;

     for ( ; element && !element->changed; element = element->nxt) ;
     for ( ; element; element = element->nxt)
     {
          hdr = (P_E_HDR *) &element->length;
          if (element->marked = (element->changed && !hdr->attr.hidden &&
               (hdr->row + hdr->height >= r) && (hdr->row <= r + h) &&
               (hdr->col + hdr->width >= c) && (hdr->col <= c + w)))
               list_length += hdr->length + 3;
     }
     return(list_length);
}
```

```c
send(cur,area,list,proc,length,element,modify,mark,redraw)
register CURRENT        *cur;
AREA                    *area;
LIST                    *list;
register CONNECTOR      *proc;
register unsigned int   length;
register ELEMENT        *element;
register unsigned short modify, mark, redraw;
{
    register P_E_HDR     *hdr;
    register short       element_length;
    char                 *m, *p, *set_mark();
    ELEMENT              *redraw_bkgd();

    if (redraw)
        element = redraw_bkgd(area,list,&m,&p);
    else
        p = (m = Newmsg(length+300,
                "write","data=#A; type=#c",length+250,NULL,'P')) + 24;
    if (element)
        for ( ; element; element = element->nxt)
        {
            if (element->marked && !element->deleted)
            {
                element->marked = NO;
                element_length = element->length;
                memcpy(p,&element->length,(long)element_length);
                hdr = (P_E_HDR *) p;
                if (modify)
                {
                    if (hdr->attr.selected)
                        element_length = set_select(hdr,cur->highlight);
                    if ((hdr->type == 'm') && (*value(hdr) == 'L'))
                        element_length = macro_list(hdr);
                    if ((hdr->type == 't'))
                        element_length = check_text(hdr,hdr->length);
                    if (cur->appl)
                        element_length =
                            change_origin(hdr,cur->appl_row,cur->appl_col);
                }
                p += element_length;
                Long_align(p);
            }
        }
    if (mark)
        p = set_mark(p,cur);
    *(short *) p = NULL;
    if (proc)
        Put(DIRECT,proc->pid,m);
    else
        Reply(cur->msg,m);
}
```

0 274 087

```c
change_origin(hdr,row,col)
register P_E_HDR    *hdr;
register short      row, col;
{
    if ((hdr->row -= row) < 0)
        return(0);
    if ((hdr->col -= col) < 0)
        return(0);
    return(hdr->length);
}


char *set_mark(p,cur)
register char       *p;
register CURRENT    *cur;
{
    if (cur->erase_mark)
    {
        memcpy(p,cur->erase_mark,*(short*)cur->erase_mark);
        p += *(short *) p;
    }
    if (cur->mark)
    {
        memcpy(p,cur->mark,*(short*)cur->mark);
        p += *(short *) p;
    }
    return(p);
}


ELEMENT *redraw_bkgd(area,list,buf,ptr)
register AREA   *area;
register LIST   *list;
register char   **buf, **ptr;
{
    ELEMENT     *element;
    int         length, num;

    element = mark_area(area->rl,area->cl,area->r2,area->c2,
            list,MAX_P_E,NULL,NULL,NULL,&length,&num,NULL);
    length += (4 * num) + 150;
    *buf = Newmsg(length+50,"write","data=#A; type=#c",length,NULL,'P');
    *ptr = *buf + 24;
    draw_filled_rect(ptr,area->rl,area->cl,(area->r2)-(area->rl),
        (area->c2)-(area->cl),NULL,0,0,area->color,area->pattern,0,0,0,NULL);
    return(element);
}
```

```c
set_select(hdr,high_option)
register P_E_HDR    *hdr;
register char        high_option;
{
    register short  length;

    length = hdr->length;
    if (!high_option)
        hdr->attr.invert = !hdr->attr.invert;
    else if (high_option == 'I')
        hdr->attr.invert = !hdr->attr.invert;
    else if (high_option == 'H')
        hdr->attr.highlight = !hdr->attr.highlight;
    else if (high_option == 'C')
    {
        if (hdr->type != 'm')
        {
            hdr->color = (hdr->color + 1) % 7 + 1;
            if (hdr->fill)
                hdr->fill = (hdr->fill + 1) % 7 + 1;
        }
        else
            macro_color(hdr);
    }
    else if (hdr->type == 't')
        sel_text(hdr,high_option);
    return(length);
}

macro_list(hdr)
register P_E_HDR     *hdr;
{
    register P_E_HDR     *temp;
    register short       row, col;
    short                len;
    char                 *p;

    row = hdr->row;
    col = hdr->col;
    for (temp = first_macro(hdr,NULL,&len,&p);
         temp && temp->attr.hidden; temp = next_macro(&len,&p));
    if (temp)
    {
        memcpy(hdr,temp,temp->length);
        hdr->row = row;
        hdr->col = col;
    }
    return(hdr->length);
}
```

```
macro color(hdr)
register P_E_HDR        *hdr;
{
    register P_E_HDR      *temp;
    short                 len;
    char                  *p;

    for (temp = first_macro(hdr,NULL,&len,&p); temp; temp = next_macro(&len,&p))
    {
        temp->color = (temp->color + 1) % 7 + 1;
        if (temp->fill)
            temp->fill = (temp->fill + 1) % 7 + 1;
    }
}

sel_text(hdr,high_option)
register P_E_HDR       *hdr;
register char          high_option;
{
    register TEXT_OPTIONS    *opt;

    opt = (TEXT_OPTIONS *) value(hdr);
    if (high_option == 'b')
        opt->border = YES;
    else if (high_option == 'U')
        opt->underline = YES;
    else if (high_option == 'B')
        opt->bold = YES;
}

check_text(hdr,length)
register P_E_HDR       *hdr;
register short         length;
{
    register char             *p;
    char                      *h;
    register TEXT_OPTIONS     *opt;

    opt = (TEXT_OPTIONS *) value(hdr);
    if (opt->border && hdr->fill)
    {
        opt->border = NO;
        p = (char *) hdr + length;
        Long_align(p);
        n = p;
        draw_rect(&n,hdr->row-3,hdr->col-3,hdr->height+6,hdr->width+6,
            NULL,hdr->fill,'S',1,NULL);
        length = n - (char*)hdr;
    }
    return(length);
}
```

```c
ELEMENT *mark_elements(list,length,num,msg,size,appl)
LIST                    *list;
unsigned int            *length, *num;
long                    msg, size, appl;
{
    register short      row = 0, col = 0, number = 0, count = 1;
    register short      to_row = MAX_ROW, to_col = MAX_COL, *p;
    register ELEMENT    *element;
    register char       *tag_pat = NULL;
    char                what = NULL, tag_buf[200], *text_pat = NULL, dflt = YES;
    long                *triple, attr = NULL;

    element = NULL;
    while (p = (short*)Find_triple(msg,"@\0\0\0",size,NULL,0,&triple))
    {
        switch (*triple)
        {
            case Keypack('@','c','n','t'):  count = *p;
                                            break;
            case Keypack('@','a','t','t'):  attr |= *(long *) p;
                                            break;
            case Keypack('@','s','e','l'):  attr |= 0x8000;
                                            break;
            case Keypack('@','n','u','m'):  number = *p;
                                            what = NULL;
                                            break;
            case Keypack('@','p','o','s'):  row = *p++;
                                            col = *p;
                                            what = 'A';
                                            break;
            case Keypack('@','e','n','d'):  to_row = *p++;
                                            to_col = *p;
                                            what = 'A';
                                            break;
            case Keypack('@','t','x','t'):  text_pat = Alloc(500,YES);
                                            if (!makpat(p,text_pat))
                                            {
                                                Free(text_pat);
                                                text_pat = NULL;
                                            }
                                            break;
            case Keypack('@','t','a','g'):  if (!makpat(p,(tag_pat = tag_buf)))
                                                tag_pat = NULL;
        }
        *triple = NULL;
        dflt = NO;
    }
    if (dflt)
        count = MAX_P_E;
    if (!what)
        element = mark_number(number,tag_pat,text_pat,
                list,count,attr,length,num,appl);
    else if (what == 'A')
        element = mark_area(row,col,to_row,to_col,list,count,
                attr,tag_pat,text_pat,length,num,appl);
```

```c
        if (text_pat)
            Free(text_pat);
        return(element);
}

ELEMENT *mark_area(row,col,to_row,to_col,list,
                   count,attr,tag_pat,text_pat,length,num,appl)
register short      row, col, to_row, to_col, count;
long                attr;
LIST                *list;
char                *tag_pat, *text_pat;
unsigned int        *length, *num;
{
    register P_E_HDR    *hdr;
    register ELEMENT    *element = NULL, *temp;
    register long       total_length = 0;
    unsigned int        orig_count;

    if (row >= 0 && col >= 0 && to_row >= 0 && to_col >= 0)
    {
        orig_count = count;
        for (temp = list->first; temp && count; temp = temp->nxt)
        {
            hdr = (P_E_HDR *) &temp->length;
            if (hdr->row <= to_row && hdr->col <= to_col
                && row < hdr->row + hdr->height && col < hdr->col + hdr->width
                && valid(hdr,tag_pat,text_pat,attr,appl) && !temp->deleted)
            {
                total_length += temp->length;
                temp->marked = YES;
                if (!element)
                    element = temp;
                count--;
            }
        }
        if (length)
            *length = total_length;
        if (num)
            *num = orig_count - count;
    }
    return(element);
}
```

```
ELEMENT *mark_number(n,tag_pat,text_pat,list,count,attr,length,num,appl)
register short      n, count;
register long       tag_pat, text_pat, attr;
register LIST       *list;
unsigned int        *length, *num;
{
    register ELEMENT    *element = NULL, *temp = NULL;
    register long       total_length = 0;
    unsigned int        orig_count;

    if (n == -1)
        temp = list->last;
    else
        for (temp = list->first; temp && n--; temp = temp->nxt);
    for (orig_count = count; temp && count; temp = temp->nxt)
        if (valid(&temp->length,tag_pat,text_pat,attr,appl) && !temp->deleted)
        {
            total_length += temp->length;
            temp->marked = YES;
            if (!element)
                element = temp;
            count--;
        }
    if (length)
        *length = total_length;
    if (num)
        *num = orig_count - count;
    return(element);
}
```

```c
valid(hdr,tag_pat,text_pat,attr,appl)
register P_E_HDR        *hdr;
register char           *tag_pat, *text_pat;
register long           attr, appl;
{
        register char     *target, ok = YES;
        long              temp;

        if (tag_pat)
                if (target = tag(hdr))
                        ok = amatch(target,tag_pat);
                else
                        ok = NO;
        if (text_pat)
                if (hdr->type == 't')
                        ok = ok && amatch(value(hdr)+8,text_pat);
                else
                        ok = NO;
        if (attr)
        {
                memcpy(&temp,&hdr->attr,sizeof(long));
                ok = ok && (temp & attr);
        }
        if (appl)
        {
                if (appl == -1)
                        ok = ok && (!*(long*)(hdr+1));
                else
                        ok = ok && (appl == *(long*)(hdr+1));
        }
        return(ok);
}

Status(msg,size)
register char   *msg;
register long   size;
{
        register char   *m;

        *(m = Alloc(size,YES)) = NULL;
        strcat(m,Find_triple(msg,"orig",size,&none,1,NULL));
        strcat(m," ");
        strcat(m,Find_triple(msg,"stat",size,&none,1,NULL));
        strcat(m," in ");
        strcat(m,Find_triple(msg,"req ",size,&none,1,NULL));
        Note(m,"ERROR");
        Free(m);
}
```

```c
reply_status(cur,mid,stat,code)
register char        *cur, *mid, *stat;
register long        *code;
{
    register char    *type;

    type = "failed";
    if (*mid == '-')
        mid++;
    else if (*mid == '+')
    {
        type = "done";
        mid++;
    }
    Reply(cur,Newmsg(strlen(mid)+strlen(stat)+50,type,
        "orig=#S; req=#S; stat=#S; code=#l","picture",mid,stat,code));
}

ELEMENT *new_element(list,size,after)
register LIST        *list;
register long        size;
register ELEMENT     *after;
{
    register ELEMENT     *element;
    register long        i = 0;

    if (size <= list->pool.size)
        for (i = list->pool.n, element = list->pool.ptr;
                element->pool && i && !element->deleted;
                (char*)element += list->pool.size, --i) ;
    if (i)
    {
        if (element->deleted)
            delete_element(list,element);
        element->pool = YES;
    }
    else
    {
        element = (ELEMENT *) Alloc(size,YES);
        element->pool = NO;
    }
    element->nxt = NULL;
    if (element->pre = list->last)
        (list->last)->nxt = element;
    else
        list->first = element;
    list->last = element;
    element->changed = YES;
    element->deleted = element->marked = NO;
    return(element);
}
```

```c
delete_element(list,element)
register ELEMENT       *element;
register LIST          *list;
{
    if (element->pre)
        (element->pre)->nxt = element->nxt;
    else
        list->first = element->nxt;
    if (element->nxt)
        (element->nxt)->pre = element->pre;
    else
        list->last = element->pre;
    if (element->pool)
        element->pool = NULL;
    else
        Free(element);
    --list->size;
}

char *value(hdr)
register P_E_HDR       *hdr;
{
    register char      *p;

    p = (char *) hdr + sizeof(P_E_HDR);
    if (hdr->attr.appl)
        p += 4;
    if (hdr->attr.tagged)
        while (*p++);
    Long_align(p);
    return(p);
}



char *tag(hdr)
register P_E_HDR       *hdr;
{
    register char      *p;

    p = (char *) hdr + sizeof(P_E_HDR);
    if (hdr->attr.appl)
        p += 4;
    if (hdr->attr.tagged)
        return(p);
    return(NULL);
}
```

0 274 087